# EUROPÄISCHE PATENTSCHRIFT

(11) **EP 1 072 326 B1**
(45) Veröffentlichungstag und Bekanntmachung des Hinweises auf die Patenterteilung: **17.09.2008**
(21) Anmeldenummer: 00810649.4
(22) Anmeldetag: 20.07.2000
(51) Int. Cl.: B05D 3/06, C07F 7/08, C07F 7/21, C07C 49/76, C09D 4/00, C08F 2/50

(54) **Oberflächenaktive Photoinitiatoren**
Surface active photoinitiator
Photoinitiateur tensio-actif

(30) Priorität: 29.07.1999 CH 139899
(43) Veröffentlichungstag der Anmeldung: 31.01.2001
(73) Patentinhaber: Ciba Holding Inc., 4057 Basel (CH)
(72) Erfinder: Baudin, Gisèle, 4123 Allschwil (CH); Jung, Tunja, 79594 Inzlingen (DE)

(56) Entgegenhaltungen:
- EP-A- 0 281 941
- WO-A-93/00405
- WO-A-98/00456
- FR-A- 2 750 429
- US-A- 4 559 371
- US-A- 4 587 276
- US-A- 4 666 953
- US-A- 4 861 916
- US-A- 5 776 658

## Beschreibung

Die Erfindung betrifft ein Verfahren zur Herstellung von kratzfesten beständigen Beschichtungen worin siloxanhaltige Photoinitiatoren als oberflächenaktive Initiatoren verwendet werden, sowie neue oberflächenaktive Photoinitiatoren.

Zur Verbesserung der Mischbarkeit von Photoinitiatoren mit silikonhaltigen Substraten (Kompatibilität), welche photochemisch vernetzt werden sollen, werden z.B. in WO 97/49768, US 5776658, US 4391963 und EP 88842 mit Silylresten, insbesondere auch polymeren Silylresten, modifizierte Photoinitiatoren, z.B. vom Hydroxyketon-, Aminoketon-, Benzoinether-, Benzophenon- oder Thioxanthon-Typ, vorgeschlagen. Auch in den Patenten US 4536265, US 4534838 and EP 162572 sind die unterschiedlichsten mit Organopolysiloxanresten versehenen Photoinitiatorstrukturen beschrieben. Diese Verbindungen sind beispielsweise abgeleitet von Dialkoxyacetophenonen und weisen eine erhöhte Löslichkeit in Silikonsubstraten auf. US 4507187 offenbart Diketophotoinitlatoren mit Silylgruppen als in Silikonpolymeren gut lösliche Photoinitiatoren, sowie die mit diesen Initiatoren erhaltenen Polymere. In US 4477326 sind selbstpolymerisierende Siloxanpolymere beschrieben, welche als polymerisatlonsreaktionsauslösende Gruppen Photoinitiatoreinheiten enthalten. Polymere Photoinitiatoren mit Siloxanresten sind in US 4587276 dargestellt.
A. Kolar, H.F. Gruber und G. Greber berichten in J.M.S. Pure Appl. Chem. A31(3) (1994), 305-318 über reaktive silylderivierte α-Hydroxyketonphotoinitiatoren. Die genannten Literaturstellen beschäftigen sich insbesondere mit der Lösung des Problems die Mischbarkeit der Photoinitiatoren mit dem zu polymerisierenden Substrat zu verbessern, d.h. die Verteilung des Initiators im Substrat möglichst homogen zu gestalten. In der WO 98/00456 werden bestimmte Beschichtungszusammensetzungen, sowie ein Härtungsverfahren, durch welches verbesserte Eigenschaften der Lackoberfläche erzielt werden, vorgeschlagen.

Die europäische Patentveröffentlichung EP-A-0281941 beschreibt ein Verfahren zur Herstellung von Beschichtungen, worin eine photohärtbare Formulierung bereitet wird, wobei der Photoinitiator eine Keton Gruppe und einen Siloxanrest enthält. Zum Beispiel wird nachfolgender Photoinitiator beschrieben.

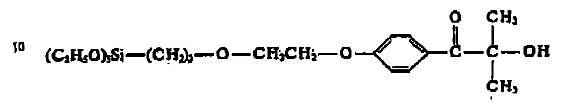

Diese Photoinitiatoren reichem sich nicht an der Oberfläche einer photohärtbaren Formulierung an.

US4559371 beschreibt Photoinitiatoren der Formel Ar-CO-C(R1)(R2)-X. Zum Beispiel wird nachfolgender Photoinitiator beschrieben.

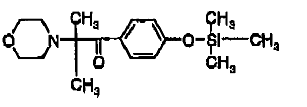

Diese Photoinitiatoren reichern sich nicht an der Oberfläche einer photohärtbaren Formulierung an.

Die japanische Patentveröffentllchung JP4110303 beschreibt ein Verfahren zur Herstellung von Beschichtungen worin eine ethylenisch ungesättigte Verbindung und ein Photoinitiator mit einer lichtspaltbaren Gruppe und eine Siloxankette durch Bestrahlung gehärtet werden, Die offenbarten Verbindungen sind Siloxane, welche als Photoinitiator wirksame Einheiten tragen. Der siloxanmodifizierte Photoinitiator wird zu 50 Gewichts% zugesetzt und fungiert als Bestandteil der Formulierung.

In der Beschichtungsindustrie wird nach neuen energiesparenden, möglichst wenig Emissionen verursachenden Härtungsmechanismen und Applikationen gesucht, um beständige, kratzfeste Beschichtungen herzustellen. Es besteht vor allem auch der Bedarf, die Oberfläche von Beschichtungen insbesondere in Bezug auf Härte, Beständigkeit und Glanzeigenschaften zu verbessern.
Es wurde nun gefunden, dass bei Verwendung von bestimmten Photoinitiatoren in den zu härtenden Beschichtungen die gewünschten Eigenschaften erzielt werden können.

Der Photoinitiator wird dazu nicht möglichst homogen in der zu härtenden Formulierung verteilt, sondern gezielt an der Oberfläche der zu härtenden Beschichtung angereichert, es findet also eine gezielte Orientierung des Initiators zur Oberfläche der Formulierung hin statt. Dazu ist es erforderlich, in bestimmter Art und Weise ausgerüstete Photoinitiatoren zu verwenden.

Gegenstand der Erfindung ist ein Verfahren zur Herstellung von Beschichtungen mit kratzfesten beständigen Oberflächen, worin
(I) eine photohärtbare Formulierung enthaltend
   (A) eine ethylenisch ungesättigte polymerisierbare Vebindung; und
   (B) 0.05-15 Gewichts%, vozugsweise 0.1-5 Gewichts% bezogen auf das Gewicht der Formulierung, eines Photoinitiators
   bereitet wird; wobei,
   die Formulierung als Photoinitiator (B) mindestens einen oberflächenaktiven Photoninitiator der Formel enthält, welcher sich an der Oberfläche der Formulierung anreichert, 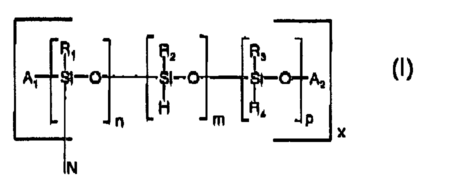 wobei die Einheiten der Formeln Ia, Ib und/oder Ic 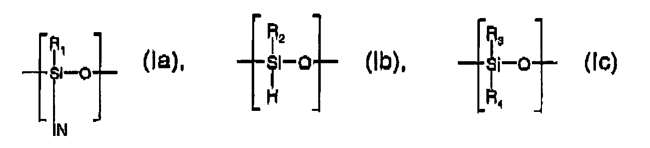 statistisch oder in Blöcken angeordnet sind, und worin
   - n: für eine Zahl von 1 bis 100 steht,
   - m: eine Zahl von 0 bis 100 darstellt;
   - p: eine Zahl von 0-1000 ist;
   - x: für die Zahl 1 oder 2 steht;
   - A₁: C₁-C₁₆-Alkyl oder einen Rest der Formel 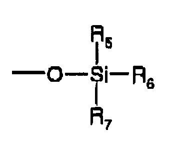 bedeutet:
   - A₂: C₁-C₁₈-Alkyl oder einen Rest der Formel 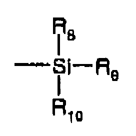 darstellt;
   oder A₁ und A₂ zusammen eine Einfachbindung bedeuten;
   R₁, R₂, R₃, R₅, R₆, R₇, R₈, R₉ und R₁₀ unabhängig voneinander C₁-C₁₈-Alkyl, Phenyl, C₂-C₆-Hydroxyalkyl, C₂-C₆-Aminoalkyl oder C₅-C₈-Cycloalkyl bedeuten;
   R₄ C₁-C₁₈-Alkyl; C₁-C₁₈-Alkyl substituiert mit Hydroxy, C₁-C₁₂-Alkoxy, Halogen, C₃-C₈-Cycloalkyl und/oder N(R₁₁)(R₁₂) ist; oder R₄ Phenyl; Phenyl substituiert mit C₁-C₁₂-Alkyl, C₁-C₁₂-Alkoxy, Halogen, Hydroxy und/oder N(R₁₁)(R₁₂) darstellt; oder R₄ C₅-C₈-Cycloalkyl ist;
   R₁₁ und R₁₂ unabhängig voneinander für Wasserstoff, C₁-C₁₂-Alkyl oder C₁-C₁₂-Hydroxyalkyl stehen, oder R₁₁ und R₁₂ zusammen C₂-C₈-Alkylen bedeuten, welches durch ein O-Atom unterbrochen sein kann;
   - IN: wenn x 1 bedeutet, für einen Rest der Formel 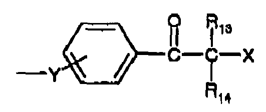 steht; oder
   - IN: wenn x 2 bedeutet, einen Rest der Formel 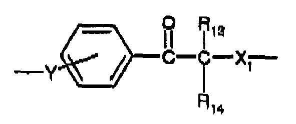 darstellt;
   R₁₃ und R₁₄ unabhängig voneinander C₁-C₁₂-Alkyl, C₂-C₈-Alkenyl, C₅-C₈-Cycloalkyl, Phenyl-C₁-C₃-alkyl bedeuten; oder R₁₃ und R₁₄ zusammen C₂-C₈-Alkylen, C₃-C₈-Oxaalkylen oder C₃-C₉-Azaalkylen bedeuten;
   Y -(CH₂)ₐ-, -(CH₂)ₐ-O-, -O-(CH2)ₐ-O-, -(CH₂)_{b}-O-(CH₂)ₐ-,
   -(CH2)_{b}-O-(CH2)ₐ-O-, -(CH₂)ₐ-N(R₁₂)- -(CH₂)_{b}-O-(CH₂)ₐ-N(R₁₂)-,
   -(C₂-C₁₀-Alkenylen)-O-, -(C₂-C₁₀-Alkenylen)-N(R₁₂)-, -(C₂-C₁₀-Alkenylen)-O-(CH₂)ₐ-O- oder
   -(C₂-C₁₀-Alkenylen)-O-(CH₂)ₐ-N(R₁₂)- bedeutet;
   a und b unabhängig voneinander für eine Zahl 0 bis 10 stehen;
   X für OR₁₅ oder N(R₁₆)(R₁₇) steht;
   R₁₅ Wasserstoff, C₁-C₄-Alkyl, C₂-C₈-Alkenyl oder C₁-C₄-Alkanoyl steht;
   R₁₆ und R₁₇ unabhängig voneinander Wasserstoff, C₁-C₁₂-Alkyl oder C₂-C₆-Alkenyl bedeuten; oder R₁₆ und R₁₇ zusammen für C₄-C₆-Alkylen stehen und zusammen mit dem Stickstoffatom, an welches sie gebunden sind, einen 5- oder 6-glledrigen Ring bilden, welcher
   durch O oder N(R₁₂) unterbrochen sein kann; und
   X₁ für einen Rest -O-, -O-(CH₂)ₐ- oder -N(R₁₂)-(CH₂)ₐ- steht.
   wobei die Formulierung neben dem oberflächenaktiven Photoinitiator der Formel I keine siloxanmodifizierten Harze enthält;
(II) diese Formulierung auf einen Träger aufgebracht wird; und
(III) die Härtung der Formulierung entweder
   nur durch Bestrahlung mit elektromagnetischer Strahlung der Wellenlänge 200-600 nm erfolgt, oder
   durch Bestrahlung mit elektromagnetischer Strahlung der Wellenlänge 200-600 nm und vorheriger, gleichzeitiger und/oder anschliessender thermischer Härtung durchgeführt wird.
   Einige Verbindungen der Formel I sind neu und Gegenstand der vorliegenden Anmeldung.

C₁-C₁₈-Alkyl ist linear oder verzweigt und ist beispielsweise C₁-C₁₂-, C₁-C₈-, C₁-C₆- oder C₁-C₄-Alkyl. Beispiele sind Methyl, Ethyl, Propyl, Isopropyl, n-Butyl, sec-Butyl, iso-Butyl, tert-Butyl, Pentyl, Hexyl, Heptyl, 2,4,4-Trimethyl-pentyl, 2-Ethylhexyl, Octyl, Nonyl, Decyl, Undecyl, Dodecyl, Hexadecyl, oder Octadecyl. Beispielsweise sind R₁, R₂, R₃, R₄, R₅, R₆, R₇, R₈, R₉ und R₁₀ C₁-C₈-Alkyl, insbesondere C₁-C₆-Alkyl, vorzugsweise C₁-C₄-Alkyl, wie z.B. Methyl oder Butyl, insbesondere Methyl.
C₁-C₁₂-Alkyl, C₁-C₁₀-Alkyl und C₁-C₈-Alkyl sind ebenfalls linear oder verzweigt und haben z.B. die oben angegebenen Bedeutungen bis zur entsprechenden Anzahl der C-Atome.
Substituiertes Alkyl ist beispielsweise 1-5-fach, 1-3-fach oder ein- oder zweifach substituiert.
Mit Halogen substituiertes Alkyl, ist z.B. mit Fluor, Chlor, Brom oder lod substituiert.
Mit OH substituiertes Alkyl ist ein-oder mehrfach, insbesondere einfach mit OH substituiert. Beispiele sind 2-Hydroxyeth-1-yl, 3-Hydroxyprop-1-yl und Hydroxymethyl.
C₂-C₆-Hydroxyalkyl bedeutet mit Hydroxy substituiertes C₂-C₆-Alkyl, wobei das Alkyl die oben angegeben Bedeutungen entsprechend der Anzahl der C-Atome hat.
C₂-C₆-Aminoalkyl bedeutet mit einem Aminorest, insbesondere -NH₂, substituiertes C₂-C₆-Alkyl, wobei das Alkyl die oben angegeben Bedeutungen entsprechend der Anzahl der C-Atome hat.

C₂-C₈-Alkylen ist linear oder verweigt wie z.B. Ethylen, Propylen, Isopropylen, n-Butylen, sec-Butylen, iso-Butylen, tert-Butylen, Pentylen, Hexylen, Heptylen oder Octylen. Insbesondere sind R₁₃ und R₁₄, wenn sie zusammen C₂-C₈-Alkylen bedeuten Pentylen, d.h. sie bilden zusammen mit dem C-Atom, an welches sie gebunden sind, einen Cyclohexylring, wobei folgende Struktur gemeint ist 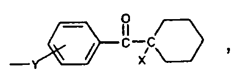 insbesondere 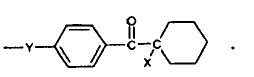 C₃-C₉-Oxaalkylen, bzw. C₃-C₉-Azaalkylen ist wie vorstehend beschriebenes Alkylen unterbrochen durch O- oder N(R₁₂).

Bei C₅-C₈-Cycloalkyl handelt es sich um lineares oder verzweigtes Alkyl, welches mindestens einen Ring enthält, z.B. Cyclopentyl, Methyl-Cyclopentyl, Cyclohexyl, Methyl- oder Dimethyl-Cyclohexyl, oder Cyclooctyl, insbesondere Cyclopentyl und Cyclohexyl.

C₁-C₁₂-Alkoxy steht für lineare oder verzweigte Reste und ist beispielsweise C₁-C₈-, C₁-C₆- oder C₁-C₄-Alkoxy. Beispiele sind Methoxy, Ethoxy, Propoxy, Isopropoxy, n-Butyloxy, sec-Butyloxy, iso-Butyloxy, tert-Butyloxy, Pentyloxy, Hexyloxy, Heptyloxy, 2,4,4-Trimethylpentyloxy, 2-Ethylhexyloxy, Octyloxy, Nonyloxy, Decyloxy oder Dodecyloxy, insbesondere Methoxy, Ethoxy, Propoxy, Isopropoxy, n-Butyl-oxy, sec-Butyloxy, iso-Butyloxy, tert-Butyloxy, vorzugsweise Methoxy.
C₁-C₈-Alkoxy ist ebenfalls linear oder verzweigt und hat z.B. die oben angegebenen Bedeutungen bis zur entsprechenden Anzahl der C-Atome.

C₂-C₈-Alkenyl ist ein- oder mehrfach ungesättigt, sowie linear oder verzweigt und ist beispielsweise C₂-C₆- oder C₂-C₄-Alkenyl. Beispiele sind Allyl, Methallyl, 1,1-Dimethylallyl, 1-Butenyl, 2-Butenyl, 1,3-Pentadienyl, 1-Hexenyl oder 1-Octenyl, insbesondere Allyl. R₁₃ und R₁₄ als C₂-C₈-Alkenyl sind z.B. C₂-C₆-, insbesondere C₂-C₄-Alkenyl.

C₂-C₁₀-Alkenylen, ist ein zweiwertiger Rest, welcher ein- oder mehrfach ungesättigt ist, sowie linear oder verzweigt ist und beispielsweise C₂-C₆- oder C₂-C₄-Alkenylen ist. Beispiele sind Allylen, Methallylen, 1,1-Dimethylallylen, Vinylen, 1-Butenylen, 2-Butenylen, 1,3-Pentadienylen, 1-Hexenylen oder 1-Octenylen, insbesondere Allylen.

C₁-C₄-Alkanoyl ist linear oder verzweigt und ist, z.B. Formyl, Acetyl, Propionyl, Butanoyl, oder Isobutanoyl.

Halogen steht für Fluor, Chlor, Brom und lod, z.B. für Fluor, Chlor und Brom, insbesondere für Chlor und Fluor.

Phenyl-C₁-C₃-alkyl bedeutet z.B. Benzyl, Phenylethyl, α-Methylbenzyl oder α,α-Dimethylbenzyl, insbesondere Benzyl.

Bilden R₁₆ und R₁₇ zusammen mit dem N-Atom an welches sie gebunden sind einen 6-gliedrigen aliphatischen Ring, welcher durch ein weiteres N- oder ein O-Atom unterbrochen sein kann, so handelt es sich beispielsweise um einen Morpholinyl-, Piperidinyl- oder Piperazinylring.

Sind R₁₁ und R₁₂ zusammen C₂-C₈-Alkylen, welches durch ein O-Atom unterbrochen sein kann, so bilden sie zusammen mit dem N-Atom, an welches sie gebunden sind, z.B. einen Piperidinyl- oder Morpholinylring.

Die Einheiten der Formeln la, Ib und/oder Ic sind statistisch oder in Blöcken angeordnet, d.h. die Reihenfolge dieser Einheiten in der Darstellung der Formel I ist beliebig. So können beispielsweise Blöcke von Einheiten der Formel Ia, Ib, Ic aufeinanderfolgen, es können aber auch die einzelnen Einheiten willkürlich verteilt verknüpft sein, je nach dem bei der Herstellung verwendeten Siloxan.

Der Begriff "und/oder" drückt aus, dass nicht nur eine der definierten Alternativen (z.B. Substituenten) vorhanden sein kann, sondern ebenfalls mehrere verschiedene der definierten Alternativen (z.B. Substituenten) gemeinsam, also Mischungen verschiedener Alternativen (z.B. Substituenten).

Der Begriff "mindestens" soll eins oder mehr als eins definieren, z.B. ein oder zwei oder drei, bevorzugt ein oder zwei.

R₁₃ und R₁₄ sind z.B. C₁-C₄-Alkyl, insbesondere Methyl. Bevorzugt sind R₁₃ und R₁₄ Methyl oder sind zusammen C₃-C₈-Alkylen, insbesondere bilden sie zusammen mit dem C-Atom, an welches sie gebunden sind, einen Cyclohexylring, oder R₁₃ ist C₁-C₄-Alkyl, insbesondere Ethyl, und R₁₄ ist Allyl oder Benzyl.

"a" ist bevorzugt eine Zahl von 0 bis 10, z.B. 0 bis 3, insbesondere 3; "n" ist bevorzugt 1 bis 100; "p" beispielsweise 1 bis 1000, 1 bis 100, 1 bis 50 oder 1 bis 25; und "m" ist 0 bis 100, z.B. 0 bis 50 oder 0 bis 25, insbesondere 0.
"n" kann, im Falle dass das Siloxanedukt ein Gemisch von oligomeren Siloxanen ist, auch kleiner als 1, aber grösser als 0 sein. Es ist dann beispielsweise eine Zahl zwischen 0,1 und 1000, 0,5 und 1000, 0,8 und 1000 usw.

X ist vorzugsweise OR₁₅ und R₁₅ ist insbesondere Wasserstoff.

Y ist bevorzugt -(CH₂)ₐ-O- , -(CH₂)ₐ-O-(CH₂)ₐ- oder -(CH₂)ₐ-O-(CH₂)ₐ-O-, mit a insbesondere = 3.
In der Gruppe IN ist Y insbesondere in para-Stellung zur Carbonylgruppe am Phenylring positioniert.

R₁₆ und R₁₇ sind insbesondere C₁-C₄-Alkyl, bevorzugt Methyl, oder bilden zusammen mit dem N-Atom, an welches sie gebunden sind, einen Morpholinylrest.
R₁, R₂ und R₃ sind bevorzugt C₁-C₄-Alkyl, insbesondere Methyl.
R₄ ist insbesondere C₁-C₄-Alkyl, z.B. Methyl

Bevorzugt ist ein wie vorstehend beschriebenes Verfahren, worin der oberflächenaktive Photoinitiator (B) eine Verbindung der Formel I ist, welcher sich an der Oberfläche der Formulierung anreichert, worin
- n: für eine Zahl von 1 bis 10 steht,
- m: eine Zahl von 0 bis 25 darstellt;
- p: eine Zahl von 0 bis 25 ist;
- A₁: C₁-C₄-Alkyl oder einen Rest der Formel 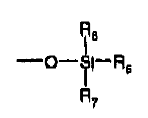 bedeutet:
- A₂: C₁-C₄-Alkyl oder einen Rest der Formel 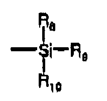 darstellt;
oder A₁ und A₂ zusammen eine Einfachbindung bedeuten;
R₁, R₂, R₃, R₅, R₆, R₇, R₈, R₉ und R₁₀ unabhängig voneinander C₁-C₄-Alkyl bedeuten;
R₄ C₁-C₄-Alkyl ist;
R₁₃ und R₁₄ unabhängig voneinander C₁-C₄-Alkyl bedeuten; oder R₁₃ und R₁₄ zusammen C₂-C₈-Alkylen bedeuten;
Y -(CH₂)ₐ-O-, -(CH₂)_{b}-O-(CH₂)ₐ-, -(CH₂)_{b}-O-(CH₂)ₐ-O- bedeutet;
a und b unabhängig voneinander für eine Zahl 2 oder 3 stehen;
R₁₅ Wasserstoff ist;
R₁₆ und R₁₇ zusammen für C₄-C₅-Alkylen stehen und zusammen mit dem Stickstoffatom, an welches sie gebunden sind, einen 6-gliedrigen Ring bilden, welcher durch O unterbrochen ist; und
X₁ für einen Rest -O-(CH₂)ₐ- steht.

Besonders interessant sind die Verbindungen

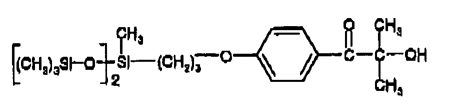

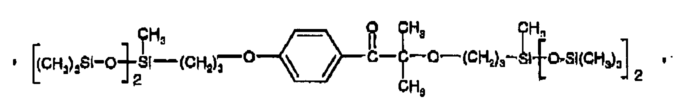

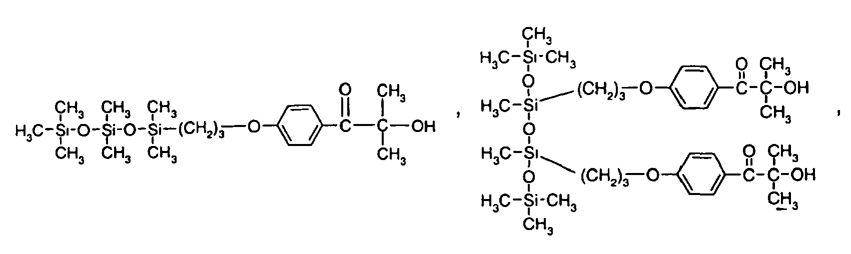

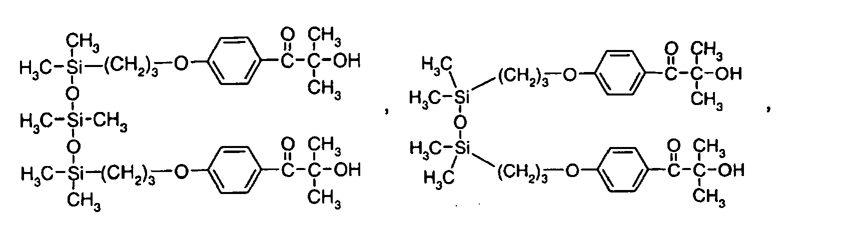

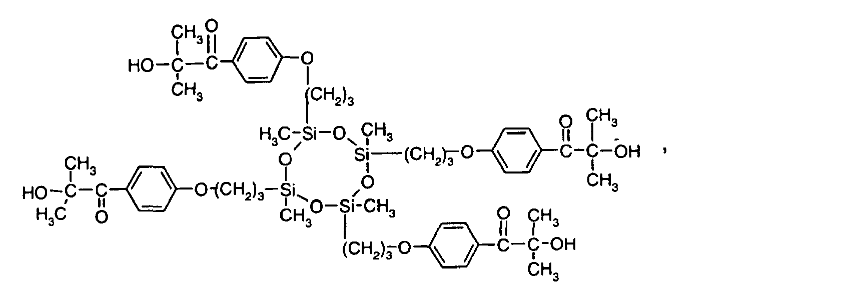

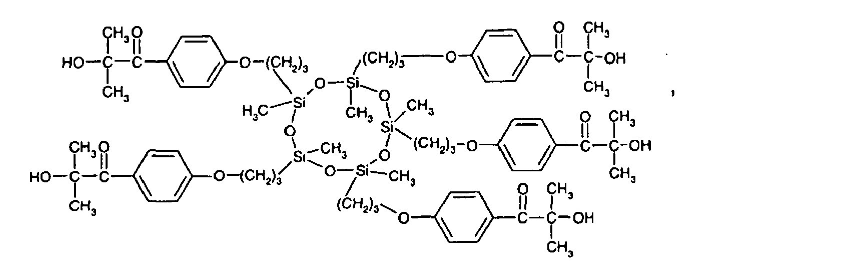

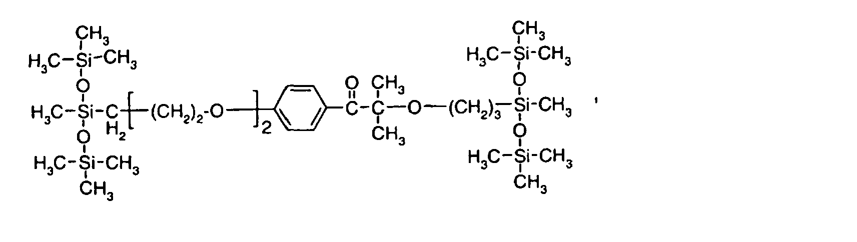

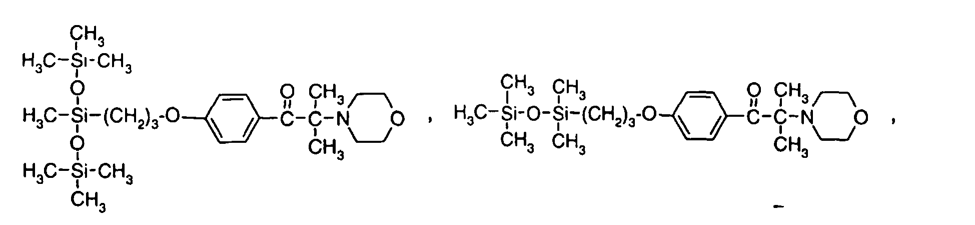

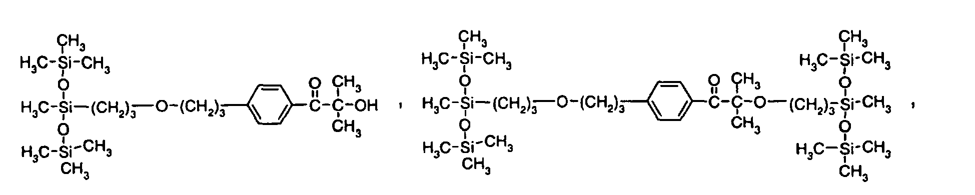

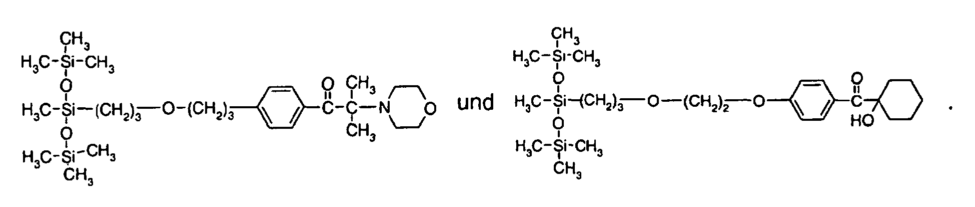

Die Herstellung der Verbindungen der Formel I erfolgt nach dem Fachmann bekannten üblichen Methoden.
So können Verbindungen der Formel I z.B. erhalten werden durch Umsetzung eines Photoinitiators mit (mindestens einem) Alkenylrest (IV) oder (IVa) und einem Siloxan (V) in Gegenwart eines geeigneten Katalysators: 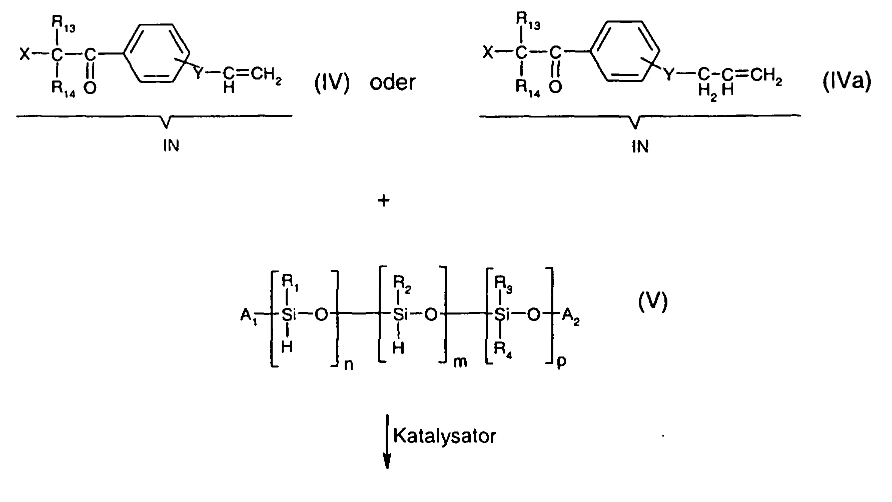 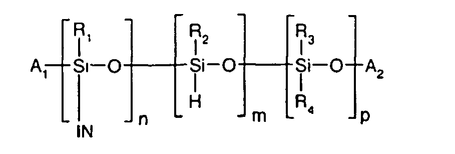 worin IN, R₁, R₂, R₃, R₄, R₁₃, R₁₄, X, Y, A₁, A₂, n, m und p wie vorstehend definiert sind.
Um Verbindungen der Formel I mit x = 2 herzustellen, werden entsprechend modifizierte Photoinitiatoren eingesetzt, d.h. solche mit z.B. 2 Alkyleneinheiten.

Die Alkyleneinheit kann im Photoinitiatormolekül z.B. auch an einer anderen Position zugegen sein und die Verknüpfung zum Siloxan erfolgt dann in dieser Position:

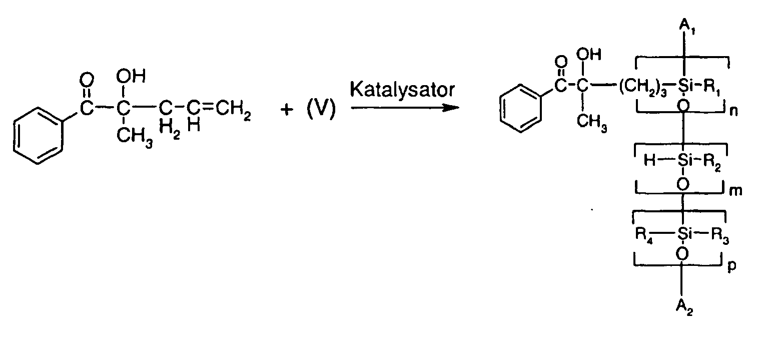

Solche Reaktionen sind z.B. beschrieben in US 4391963, EP 162572 oder N.S. Allen et al., J.Photochem. Photobiol. A: Chem. 62 (1991), 125-139.
Reaktionsbedingungen für solche Reaktionen sind dem Fachmann bekannt. Die Molverhältnisse von der alkenylmodifizierten Verbindung (IV) und der Siloxanverbindung (V) richten sich je nach dem gewünschten Produkt und sind in der Regel nicht kritisch. So wird die zu verwendende Menge von (IV) nach dem Gehalt der freien Si-H-Guppen in (V) und dem jeweiligen gewünschten Substitutionsgrad dieser Gruppen gewählt. Sollen alle Gruppen abreagieren, so ist es z.B. zweckmässig (IV) im Überschuss zuzusetzen. Es ist aber auch möglich einen Überschuss der Komponente (V) zu verwenden.
Die Reaktionstemperaturen werden zweckmässig in einem Bereich von 20-150°C, bevorzugt 60-110°C, gehalten. Ausserdem ist es zweckmässig die Umsetzung beispielsweise in einem geeigneten aprotischen organischen Lösungsmittel, wie z.B. Tetrahydrofuran (THF), Dioxan, Hexan, Heptan, Cyclohexan, Toluol, Xylol, Benzol oder Chlorbenzol durchzuführen. Es kann aber z.B. auch ohne Lösungsmittel gearbeitet werden.
Die Reaktionsmischung wird üblicherweise während der Durchführung der Reaktion gerührt.

Zweckmässig ist ausserdem die Durchführung der Reaktion unter Inertbedingungen, z.B. unter Argon- oder Stickstoffatmosphäre.
Zur Durchführung der Reaktion geeignete Katalysatoren sind beispielsweise Edelmetallkatalysatoren, wie z.B. Platin- oder Rhodiumkatalysatoren. Beispiele sind H₂PtCl₆ oder PtCl₂(C₆H₅-CH=CH₂)₂. Diese Katalysatoren können beispielsweise auch auf geeigneten Trägermaterialien, wie z.B. Aluminiumoxid aufgebracht sein wie Pt/Al₂O₃ (z.B. erhältlich von Heraeus). Beispiele für geeignete Katalysatoren sind Platin, Palladium, Rhodium, Nickel, Kobalt oder andere Metalle, insbesondere als Puder oder in Form von Komplexen. Beispiele sind Platinschwamm, Platinschwarz, Chlorplatinsäure, das Reaktionsprodukt von Chlorplatinsäure und Alkohol, ein Komplex von Chlorplatinsäure und Vinylsiloxan. Solche Katalysatoren sind käuflich, z.B. Platin-Carbonyl-Cyclovinylmethylsiloxan Komplex, Platin-Diviniyltetramethyldisiloxan Komplex, Platin-Oktanaldehyd/Oktanol Komplex, oder können nach in der Technik üblichen, dem Fachmann bekannten Methoden erhalten werden.
Die Konzentration des Katalysators beträgt zweckmässig beispielsweise 1-1'000 ppm, z.B. 150-400 ppm.

Eine weitere Möglichkeit die oberflächenaktiven Photoinitiatoren herzustellen ist die Umsetzung eines Photoinitiators, welcher eine entsprechende Silylgruppe enthält, mit einem alkenylmodifizierten Siloxan: 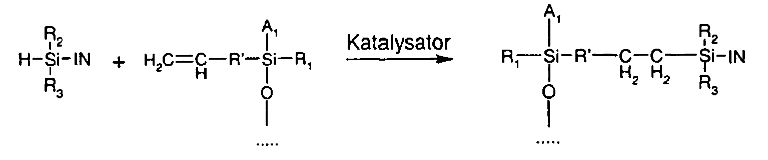 R₁, R₂, R₃, IN, A₁ haben die vorstehend genannten Bedeutungen; R' steht für einen Alkylenrest; "...." bedeutet, dass sich an dieser Stelle, der Rest des in Formel I definierten Siloxanmolekülteils anschliesst (entsprechend Fromel I muss in dieser Reaktion im Edukt m=0 sein). Die Reaktionsbedingungen für diese Methode entsprechen den vorstehend beschriebenen. In der Literatur sind solche Umsetzungen z.B. in US 4391963 und JMS Pure Applied Chem. A31(3) (1994), 305, dargestellt.

Die oberflächenakltiven Photoinitiatoren können beispielsweise auch erhalten werden durch Reaktion eines OH-gruppenhaltigen Initiators und einem Siloxan: 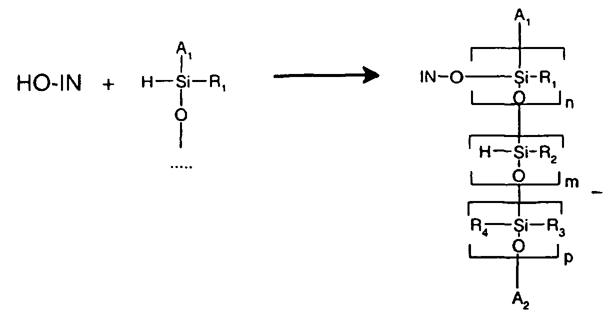 R₁, R₂, R₃, IN, A₁, n, m, p, R₄, A₂ haben die vorstehend genannten Bedeutungen; "...." bedeutet, dass sich an dieser Stelle, der Rest des in Formel I definierten Siloxanmolekülteils anschliesst.
Geeignete Katalysatoren für diese Reaktion sind z.B. Zinnoctoat, Dibutylzinndilaurat, Zinkoctanoat, Zinnoctanoat und Zinkoctanoat. Beispiele für solche Reaktionen (allerdings enthalten die Beispiele anstelle der Photoinitiatoreinheit eine Sensibilisatoreinheit) sind US 4921589 zu entnehmen.

L.Lecamp et al. beschreiben in JMS Pure Appl. Chem. A 34(11) (1997), 2335-2353 eine Methode zur Herstellung von siloxanhaltigen Initiatoren, worin ein Initiator enthaltend eine Si(OR)₁₋₃-Gruppe und ein Siloxan mit einer Si-(OH)₁₋₂-Gruppe umgesetzt werden. Als Katalysator wird z.B. Dibutylzinndilaurat eingesetzt: 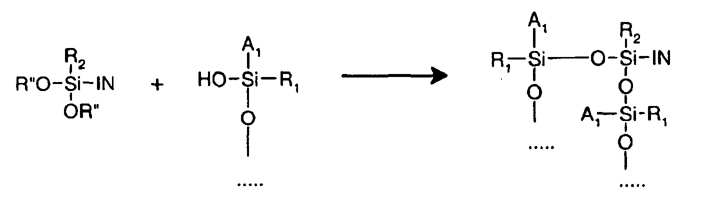 IN, R₁, R₂, A₁ haben die vorstehend angegebene Bedeutung; R" ist Alkyl, insbesondere Methyl; "...." bedeutet, dass sich an dieser Stelle, der Rest des in Formel I definierten Siloxanmolekülteils anschliesst.

Oberflächenaktive Photoinitiatoren entsprechend der vorliegenden Erfindung können beispielsweise auch durch Reaktion eines Photoinitiators enthaltend mindestens eine Carbonylgruppe am aromatischen Ring mit einem Siloxan enthaltend eine C-C-Doppelbindung als Endgruppe (z.B. Allyl oder Vinyl) erhalten werden. 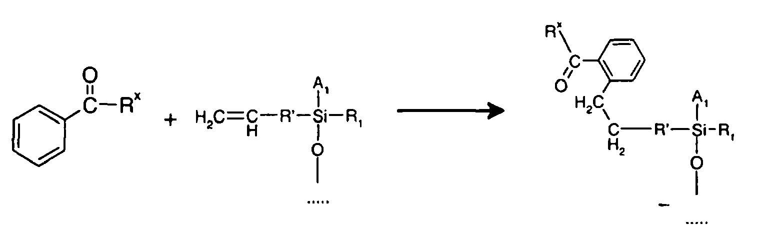 R₁, A₁ haben die vorstehend angegebene Bedeutung; R^{x} bibldet zusammen mit der benachbarten Carbonylgruppe ein Benzoin, ein α-Hydroxyketon oder ein α-Aminoketon; R' ist Alkylen; "...." bedeutet, dass sich an dieser Stelle, der Rest des in Formel I definierten Siloxanmolekülteils anschliesst.
Diese Reaktion ist in US 5776658 publiziert. Geeignete Katalysatoren für diese Umsetzung sind beispielsweise Ruthenium Verbindungen wie von Murai et al. in Nature 366 (1993) 529 beschrieben.

In US 4477326 und JP 9-328522-A ist die Polymerisation oder Copolymerisation von Polyalkoxysiloxanen in Gegenwart einer Base oder eines Säurekatalysators beschrieben. Die beschriebene Methode eignet sich auch zur Herstellung von oberflächenaktiven Initiatoren: 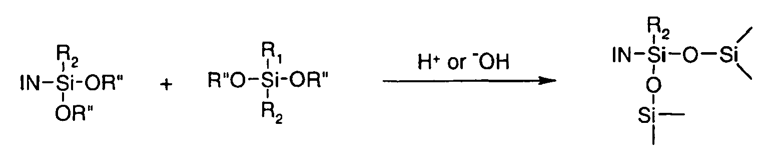 IN, R₁ und R₂ haben die vorstehend angegebene Bedeutung; R" ist Alkyl.
Bei dieser Reaktion können sowohl polymere als auch zyklische Produkte erhalten werden.

Eine weitere Methode, mit welcher oberflächenaktive Photoinitiatoren hergestellt werden können, ist z.B. in US 4587276 und US 4477276 dargestellt, die Polymerisation oder Copolymerisation von Siloxanen mit hydrolysierbaren Gruppen (z.B. Si-Cl) in der Gegenwart von Wasser: 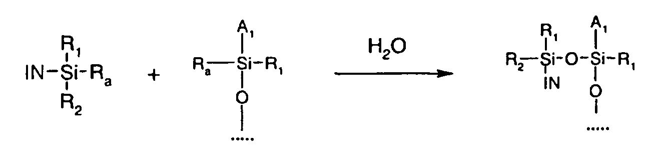 IN, R₁, R₂, A₁ haben die vorstehend angegebene Bedeutung; Rₐ ist z.B. Cl oder OCH₃; "...." bedeutet, dass sich an dieser Stelle, der Rest des in Formel I definierten Siloxanmolekülteils anschliesst.

In J.M.S. Pure Appl. Chem. A 31(3) (1994), 305-318 beschreiben A. Kolar et al. die Herstellung von Photoinitiatoren mit Siloxanresten ausgehend von 1,4-Dichlorobenzol. Durch Grignard Reaktion wird ein reaktives Zentrum geschaffen, welches mit Dimethyldichlorsilan oder Dimethylmonochlorsilan zum entsprechenden silylmodifizierten Chlorbenzol umgesetzt wird, an welches durch weitere Reaktionen der entsprechende α-spaltbare Photoinitiatorcarbonylrest eingeführt wird.

L. Pouliquen et al. publizierten in Makromol. Chem. 193 (1992) 1273-1282 eine mehrstufige Reaktion von Photoinitiatoren mit sauren Gruppen und einem Siloxan mit Epoxidresten in der Gegenwart von Essigsäureanhydrid. (die Photoinitiatorverbindungen in dieser Referenz sind vom Phenon-/tert-Amin-Typ) 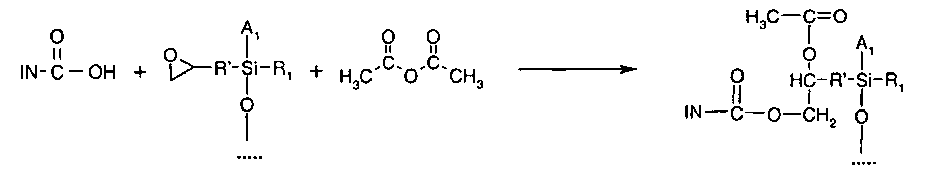 IN, Ar, R₁ haben die vorstehend angegebene Bedeutung; R' ist Alkylen; "...." bedeutet, dass sich an dieser Stelle, der Rest des in Formel I definierten Siloxanmolekülteils anschliesst.

Isocyanatgruppenhaltige Photoinitiatoren und Siloxane mit Hydroxyl- oder Amingruppen können ebenfalls zu oberflächenaktiven Photoinitiatoren umgesetzt werden: 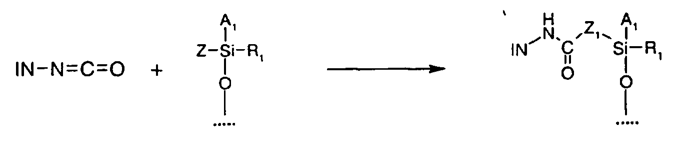 IN, A₁, R₁ haben die vorstehend angegebenen Bedeutungen; Z ist NH₂ oder OH; Z₁ ist NH oder O; "...." bedeutet, dass sich an dieser Stelle, der Rest des in Formel I definierten Siloxanmolekülteils anschliesst.
Solche Reaktionen sind z.B. in WO 96/20919 beschrieben.

Mit zyklischen Siloxanresten substituierte Photoinitiatoren können beispielsweise erhalten werden, indem die vorstehend beschriebenen Umsetzungen mit einem zyklischen Siloxan, z.B. 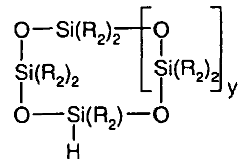 erfolgt. Zur Herstellung von mit zyklischen Siloxanresten versehenen Photoinitiatoren können jedoch auch zunächst lineare Siloxanreste, z.B. mittels der vorstehend beschriebenen Methoden eingeführt werden und diese anschliessend durch Einwirkung einer Base, beispielsweise Natriumhydroxid, oder durch Einwirkung einer Säure zur Zyklisierung gebracht werden.

Die Synthese von zyklische Siloxanreste enthaltenden oberflächenaktiven Photoinitiatoren kann z.B., wie vorstehend beschrieben durch Reaktion eines zyklischen Siloxans mit dem jeweiligen Initiatorteil erfolgen: 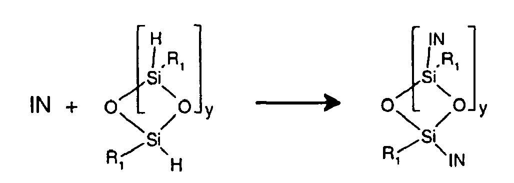 (IN, R₁ sind wie vorstehend definiert; y bestimmt die Ringrösse)
oder durch Zyklisierungsreaktion eines OR-Gruppen enthaltenden siloxanmodifizierten Initiatorteils in Gegewart von Säure oder Alkali: 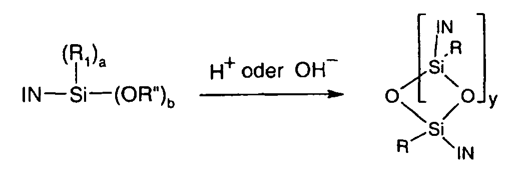 (R₁ und IN sind wie vorstehend definiert; R" ist Alkyl; a= 0,1; b=1,2, wobei die Summe von a+b=3; je nach Definition von a und b ist R entweder R₁ oder OR")
Weiterhin können zyklische Verbindungen durch Umsetzung eines OR-Gruppen enthaltenden siloxanmodifizierten Initiatorteils mit einem OR-Gruppen enthaltenden Siloxan gebildet werden: 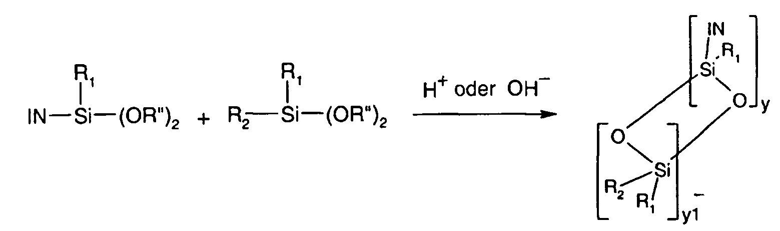 (IN, R₁, R₂ sind wie vorstehend definiert; R" ist Alkyl; die Summe von y und y1 bestimmt die Anzahl der Ringglieder)
Die Verteilung der Si(IN)(R₁)- und Si(R₁)(R₂)-Gruppen ergibt sich dabei statistisch oder in Blöcken.
Bei der Herstellung der oberflächenaktiven Photoinitiatoren können auch Gemische von aktiven Verbindungen entstehen. Diese Gemische können nach üblichen Methoden, wie z.B. Destillation, Kristallisation oder Chromatographie aufgetrennt werden, oder aber als solche in zu polymerisierenden Zusammensetzungen als oberflächenaktive Photoinitiatoren eingesetzt werden.
Gegenstand der Erfindung sind auch Photoinitiatormischungen enthaltend 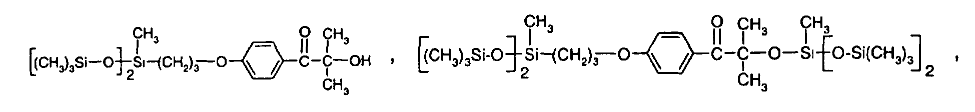 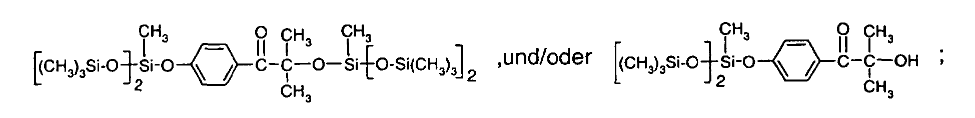 oder Mischungen enthaltend 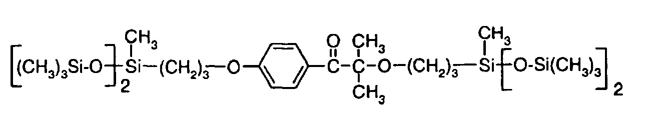 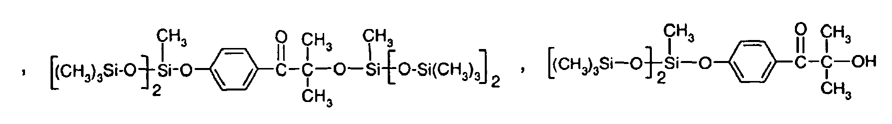 und/oder 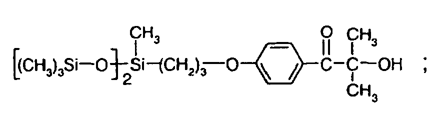 oder Mischungen enthaltend 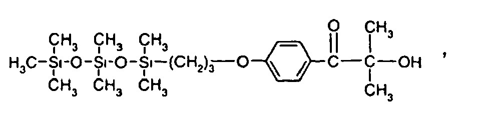 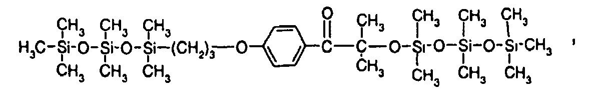 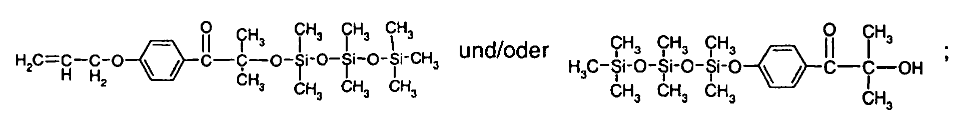 oder Mischungen enthaltend 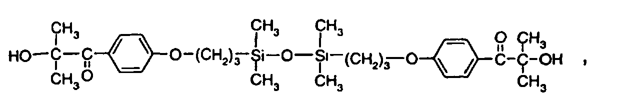 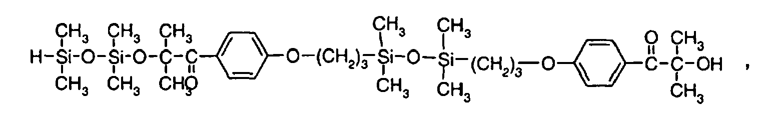 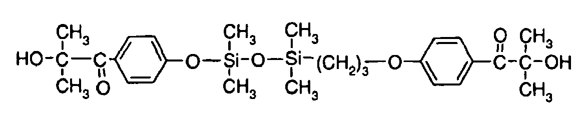 oder/und 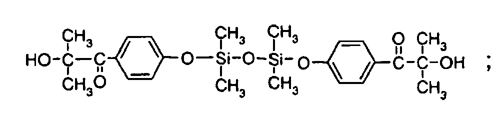 oder Mischungen enthaltend Verbindungen
der Formel 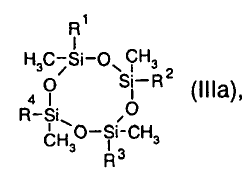 worin R¹=R²=R³=R⁴=

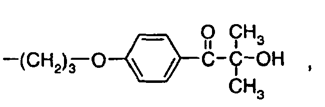

Verbindungen der Formel IIIa, worin R¹=R²=R³= 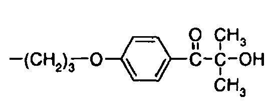 und R⁴=H, und/oder Verbindungen der Formel IIIa, worin R¹=R²=R³= 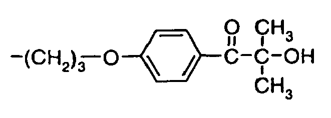 und R⁴=-(CH₂)₂CH₃ ; oder Mischungen enthaltend Verbindungen der Formel 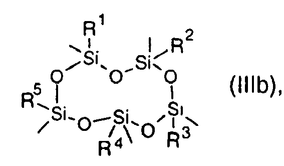 worin R¹=R²=R³=R⁴=R⁵= 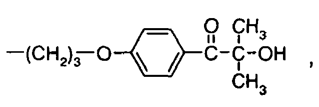 Verbindungen der Formel IIIb, worin R¹=R²=R³=R⁴= 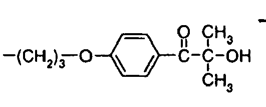 und R⁵=H und/oder Verbindungen der Formel IIIb, worin R¹=R²=R³= 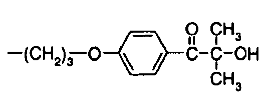 und R⁴=R⁵ = H;
oder Mischungen enthaltend 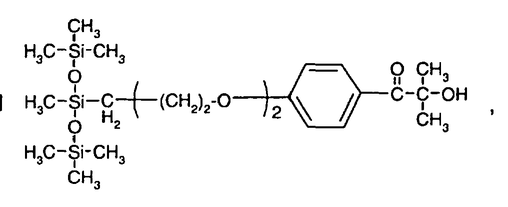 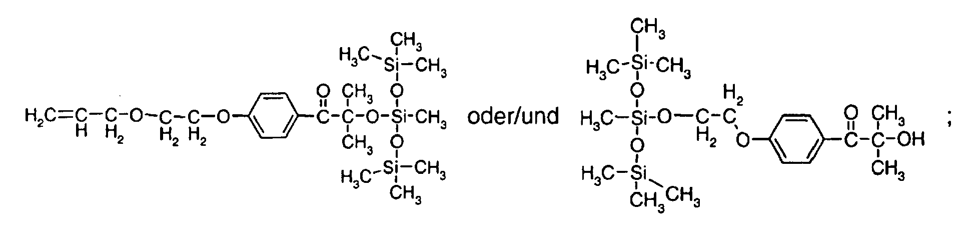 oder Mischungen enthaltend 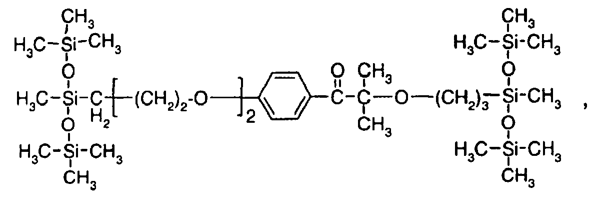 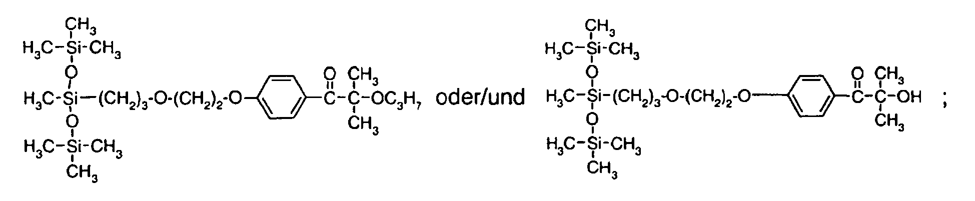 oder Mischungen enthaltend 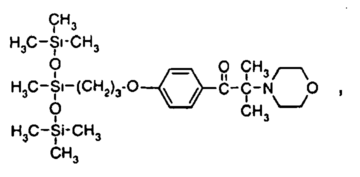 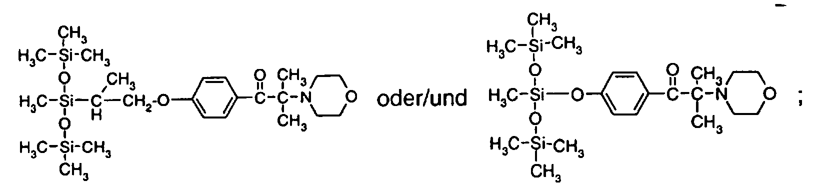 oder Mischungen enthaltend 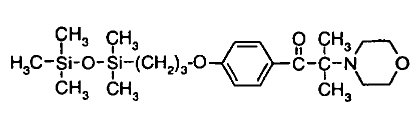 und 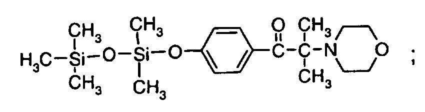 oder Mischungen enthaltend 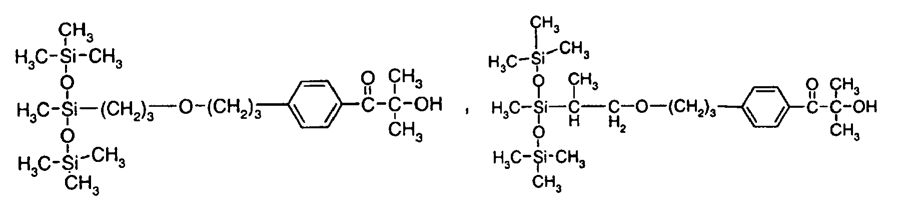 oder/und 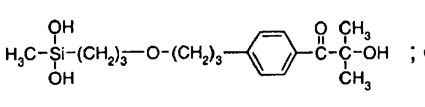 oder Mischungen enthaltend 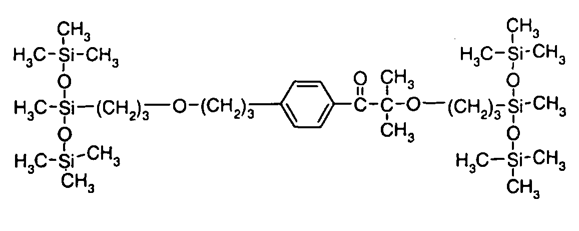 und

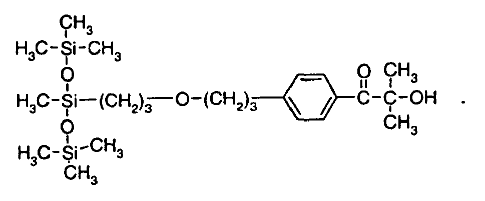

Die alkenylmodifizierten Photoinitiatoren (IV) können nach dem Fachmann bekannten Methoden hergestellt werden, z.B. nach der in EP 281941 beschriebenen Methode. Auch in der WO 97/49768 sind entsprechende Verfahren publiziert.

Die Siloxanverbindungen (V) sind teils im Handel erhältlich oder können nach dem Fachmann bekannten Methoden erhalten werden. So sind beispielsweise Methoden der Herstellung, bzw. Literaturzitate für die Herstellung dem Katalog der Firma Geleste "ABCR Geleste 2000", Seiten 434-447 zu entnehmen.

Die Photoinitiatoren werden erfindungsgemäss zur Härtung von radikalisch polymerisierbaren Systemen verwendet, wobei das Ziel ist, eine gehärtete Oberfläche mit hervorragenden Eigenschaften zu erhalten. Entscheidend dafür ist, dass sich der Photoinitiator an der Oberfläche der zu härtenden Formulierung anreichert. Dies wird, wie oben bereits dargelegt, durch entsprechende Substituenten am Photoinitiator erreicht. Eine Verbesserung der Oberflächeneigenschaften lässt sich mit Hilfe solcher Initiatoren jedoch nicht nur in rein photohärtbaren Systemen erzielen, sondern ist auch in gemischt thermisch/photohärtbaren Formulierungen gegeben. Gegenstand der vorliegenden Erfindung ist daher sowohl die Verwendung der Photoinitiatoren der Formel I in rein photohärtbaren Formulierungen, als auch die Verwendung der Photoinitiatoren der Formel I in gemischt photochemisch und thermisch härtbaren Formulierungen. Die thermische Härtung kann dabei vor, während oder nach der Belichtung erfolgen.

Gegenstand der Erfindung ist daher auch ein wie oben beschriebenes Verfahren, worin die photohärtbare Formulierung als weitere Komponente mindestens eine thermisch vernetzbare Verbindung (C) enthält, und die Härtung der Formulierung durch Bestrahlung mit Licht der Wellenlänge 200-600 nm und vorheriger, gleichzeitiger und/oder anschliessender Einwirkung von Wärme durchgeführt wird.

Erfindungsgomäss können die Verbindungen der Formel I in einer Menge von 0.05-15 Gewichts%, vorzugsweise 0.1-5 Gewichts% bezogen auf das Gewicht des Gemischtes als oberflächenaktive Photoinitiatoren für die Photopolymerisation von ethylenisch ungesättigten Verbindungen bzw. Gemischen, die solche Verbindungen enthalten, verwendet werden und orientieren sich zur Oberfläche der jeweiligen Formulierung hin. Die Initiatoren der Formel (I) werden erfindungsgemäss nicht in Zusammensetzungen, welche siloxanmodifizierte Harzkomponenten enthalten, verwendet, da darin die Anreicherung an der Oberfläche nicht erfolgen kann, sondern die Initiatoren vielmehr mit der Formulierung verträglich und daher gut mischbar oder kompatibel sind.
Die Verwendung der Photoinitiatoren kann auch in Kombination mit anderen Photoinitiatoren (E) und/oder weiteren Additiven (D) erfolgen.

Die Erfindung betrifft daher auch photopolymerisierbare Zusammensetzungen, enthaltend
(A) mindestens eine ethylenisch ungesättigte radikalisch photopolymerisierbare Verbindung; und
(B) in einer Menge von 0.05-15 Gewichts%, vorzugsweise 0.1-5 Gewichts% bezogen auf das Gewicht der Zusammensetzung_mindestens einen oberflächenaktiven Photoinitiator der Formel I,
vorausgesetzt, dass die Zusammensetzung neben dem Photoinitiator keine siloxanmodifizierten Harze enthält

Die Erfindung betrifft weiterhin photopolymerisierbare Zusammensetzungen, enthaltend
(A) mindestens eine ethylenisch ungesättigte radikalisch photopolymerisierbare Verbindung;
(B) in einer Menge von 0.05-15 Gewichts%, vorzugsweise 0.1-5 Gewichts% bezogen auf das Gewicht der Zusammensetzung_mindestens einen oberflächenaktiven Photoinitiator der Formel I, und
(C) mindestens eine thermisch vernetzbare Verbindung;
vorausgesetzt, dass die Zusammensetzung neben dem Photoinitiator keine siloxanmodifizierten Harze enthält.

Die Zusammensetzungen können erfindungsgemäss auch weitere andere Photoinitiatoren (E) und/oder weitere Additive (D) enthalten, wobei die totale Konzentration der Komponenten (B) und (E) 0,05-15 Gewichts%, vorzugsweise 0.1-5 Gewichts% bezogen auf das Gewicht der Zusammensetzung, beträgt,_
Auch die Zugabe von Katalysatoren für die thermische Vernetzung ist möglich. Geeignete Beispiele sind weiter unten aufgeführt.

Die ungesättigten Verbindungen (A) können eine oder mehrere olefinische Doppelbindungen enthalten. Sie können niedermolekular (monomer) oder höhermolekular (oligomer) sein. Beispiele für Monomere mit einer Doppelbindung sind Alkyl- oder Hydroxyalkyl-acrylate oder -methacrylate, wie z.B. Methyl-, Ethyl-, Butyl-, 2-Ethylhexyl- oder 2-Hydroxyethylacrylat, Isobornylacrylat, Methyl- oder Ethylmethacrylat. Weitere Beispiele sind Acrylnitril, Acrylamid, Methacrylamid, N-substituierte (Meth)acrylamide, Vinylester wie Vinylacetat, Vinylether wie Isobutylvinylether, Styrol, Alkyl- und Halogenstyrole, N-Vinylpyrrolidon, Vinylchlorid oder Vinylidenchlorid.

Beispiele für Monomere mit mehreren Doppelbindungen sind Ethylenglykol-, Propylen-glykol-, Neopentylglykol-, Hexamethylenglykol- oder Bisphenol-A-diacrylat, 4,4'-Bis(2-acryloyloxyethoxy)-diphenylpropan, Trimethylolpropan-triacrylat, Pentaerythrittriacrylat oder -tetraacrylat, Vinylacrylat, Divinylbenzol, Divinylsuccinat, Diallylphthalat, Triallylphosphat, Triallylisocyanurat oder Tris-(2-acryloylethyl)isocyanurat.

Beispiele für höhermolekulare (oligomere) mehrfach ungesättigte Verbindungen sind acrylierte Epoxidharze, acrylierte oder Vinylether- oder Epoxy-Gruppen enthaltende Polyester, Polyurethane und Polyether. Weitere Beispiele für ungesättigte Oligomere sind ungesättigte Polyesterharze, die meist aus Maleinsäure, Phthalsäure und einem oder mehreren Diolen hergestellt werden und Molekulargewichte von etwa 500 bis 3000 besitzen. Daneben können auch Vinylether-Monomere und -Oligomere, sowie maleat-terminierte Oligomere mit Polyester-, Polyurethan-, Polyether-, Polyvinylether- und Epoxidhauptketten eingesetzt werden. Insbesondere Kombinationen von Vinylethergruppen tragenden Oligomeren und Polymeren, wie sie in der WO 90/01512 beschrieben sind, sind gut geeignet. Aber auch Copolymere aus Vinylether und Maleinsäure funktionalisierten Monomeren kommen in Frage. Solche ungesättigten Oligomere kann man auch als Prepolymere bezeichnen.

Geeignet sind auch funktionalisierte Acrylate. Beispiele für geeignete Monomere, die normalerweise bnutzt werden, um das backbone (das Grundpolymer) solcher funktionalisierten Acrylat- und Methacrylatpolymere zu bilden, sind beispielsweise Acrylat, Methylarylat, Methylmethacrylat, Ethylacrylat, Ethylmethacrylat, n-Butylacrylat, n-Butylmethacrylat, Isobutylacrylat, Isobutylmethacrylat, 2-Ethylhexylacrylat, 2-Ethylhexylmethacrylat usw.. Zusätzlich werden geeignete Mengen funktioneller Monomere während der Polymerisation copolymerisiert, um so die funktionellen Polymere zu erhalten. Säurefunktionalisierte Acrylat- oder Methacrylat-Polymere werden mit Hilfe von säurefunktionellen Monomeren wie Acrylsäure und Methacrylsäure erhalten.Hydroxyfunktionelle Acrylat- oder Methacrylatpolymere ergeben sich aus hydroxyfunktionellen Monomeren, wie 2-Hydroxyethylmethacrylat, 2-Hydroxypropylmethacrylat, 3,4-Dihydroxybutylmethacrylat. Epoxyfunktionalisierte Acrylat- oder Methacrylat-Polymere werden mit Hilfe von epoxyfunktionellen Monomeren wie Glycidylmethacrylat, 2,3-Epoxybutylmethacrylat, 3,4-Epoxybutylmethacrylat, 2,3-Epoxycyclohexylmethacrylat, 10,11-Epoxyundecylmethacrylat usw. erhalten. Ebenso können z.B. isocyanatfunktionalisierte Polymere aus isocyanytfunktionalisierten Monomeren, wie z.B. meta-Isopropenyl-α,α-dimethylbenzylisocyanat, hergestellt werden.

Besonders geeignet sind z.B. Ester von ethylenisch ungesättigten mono- oder polyfunktionellen Carbonsäuren und Polyolen oder Polyepoxiden, und Polymere mit ethylenisch ungesättigten Gruppen in der Kette oder in Seitengruppen, wie z. B. ungesättigte Polyester, Polyamide und Polyurethane und Copolymere hiervon, Alkydharze, Polybutadien und Butadien-Copolymere, Polyisopren und Isopren-Copolymere, Polymere und Copolymere mit (Meth)Acrylgruppen in Seitenketten, sowie Mischungen von einem oder mehreren solcher Polymerer.

Beispiele für geeignete mono- oder polyfunktionelle ungesättigte Carbonsäuren sind Acrylsäure, Methacrylsäure, Crotonsäure, Itaconsäure, Zimtsäure, Maleinsäure, Fumarsäure, Itaconsäure, ungesättigte Fettsäuren wie Linolensäure oder Oelsäure. Bevorzugt sind Acryl- und Methacrylsäure.
Es können aber auch gesättigte Di- oder Polycarbonsäuren in Mischung mit ungesättigten Carbonsäuren eingesetzt werden. Beispiele für geeignete gesättigte Di- oder Polycarbonsäuren umfassen beispielsweise Tetrachlorophthalsäure, Tetrabromophthalsäure, Phthalsäureanhydrid, Adipinsäure, Tetrahydrophthalsäure, Isophthalsäure, Terephthalsäure, Trimellithsäure, Heptandicarbonsäure, Sebazinsäure, Dodecandicarbonsäure, Hexahydrophthalsäure usw..

Als Polyole sind aromatische und besonders aliphatische und cycloaliphatische Polyole geeignet. Beispiele für aromatische Polyole sind Hydrochinon, 4,4'-Dihydroxydiphenyl, 2,2-Di(4-hydroxyphenyl)-propan, sowie Novolake und Resole. Beispiele für Polyepoxide sind solche auf der Basis der genannten Polyole, besonders der aromatischen Polyole und Epichlorhydrin. Ferner sind auch Polymere und Copolymere, die Hydroxylgruppen in der Polymerkette oder in Seitengruppen enthalten, wie z.B. Polyvinylalkohol und Copolymere davon oder Polymethacrylsäurehydroxyalkylester oder Copolymere davon, als Polyole geeignet. Weitere geeignete Polyole sind Oligoester mit Hydroxylendgruppen.

Beispiele für aliphatische und cycloaliphatische Polyole sind Alkylendiole mit bevorzugt 2 bis 12 C-Atomen, wie Ethylenglykol, 1,2- oder 1,3-Propandiol, 1,2-, 1,3- oder 1,4-Butandiol, Pentandiol, Hexandiol, Octandiol, Dodecandiol, Diethylenglykol, Triethylenglykol, Polyethylenglykole mit Molekulargewichten von bevorzugt 200 bis 1500, 1,3-Cyclopentandiol, 1,2-, 1,3- oder 1,4-Cyclohexandiol, 1,4-Dihydroxymethylcyclohexan, Glycerin, Tris-(β-hydroxy-ethyl)amin, Trimethylolethan, Trimethylolpropan, Pentaerythrit, Dipentaerythrit und Sorbit.

Die Polyole können teilweise oder vollständig mit einer oder verschiedenen ungesättigten Carbonsäuren verestert sein, wobei in Teilestern die freien Hydroxylgruppen modifiziert, z.B. verethert oder mit anderen Carbonsäuren verestert sein können.

Beispiele für Ester sind:
Trimethylolpropantriacrylat, Trimethylolethantriacrylat, Trimethylolpropantrimethacrylat, Trimethylolethantrimethacrylat, Tetramethylenglykoldimethacrylat, Triethylenglykoldimethacrylat, Tetraethylenglykoldiacrylat, Pentaerythritdiacrylat, Pentaerythrittriacrylat, Pentaerythrittetraacrylat, Dipentaerythritdiacrylat, Dipentaerythrittriacrylat, Dipentaerythrittetraacrylat, Dipentaerythritpentaacrylat, Dipentaerythrithexaacrylat, Tripentaerythritoctaacrylat, Pentaerythritdimethacrylat, Pentaerythrittrimethacrylat, Dipentaerythritdimethacrylat, Dipentaerythrittetramethacrylat, Tripentaerythritoctamethacrylat, Pentaerythritdiitaconat, Dipentaerythrittrisitaconat, Dipentaerythritpentaitaconat, Dipentaerythrithexaitaconat, Ethylenglykoldiacrylat, 1,3-Butandioldiacrylat, 1,3-Butandioldimethacrylat, 1,4-Butandioldiitaconat, Sorbittriacrylat, Sorbittetraacrylat, Pentaerythrit-modifiziert-triacrylat, Sorbittetramethacrylat, Sorbitpentaacrylat, Sorbithexaacrylat, Oligoesteracrylate und -methacrylate, Glycerindi- und -tri-acrylat, 1,4-Cyclohexandiacrylat, Bisacrylate und Bismethacrylate von Polyethylenglykol mit Molekulargewicht von 200 bis 1500, oder Gemische davon.

Als Komponente (A) sind auch die Amide gleicher oder verschiedener ungesättigter Carbonsäuren von aromatischen, cycloaliphatischen und aliphatischen Polyaminen mit bevorzugt 2 bis 6, besonders 2 bis 4 Aminogruppen geeignet. Beispiele für solche Polyamine sind Ethylendiamin, 1,2- oder 1,3-Propylendiamin, 1,2-, 1,3- oder 1,4-Butylendiamin, 1,5-Pentylendiamin, 1,6-Hexylendiamin, Octylendiamin, Dodecylendiamin, 1,4-Diaminocyclohexan, Isophorondiamin, Phenylendiamin, Bisphenylendiamin, Di-β-aminoethylether, Diethylentriamin, Triethylentetramin, Di(β-aminoethoxy)- oder Di(β-aminopropoxy)ethan. Weitere geeignete Polyamine sind Polymere und Copolymere mit gegebenenfalls zusätzlichen Aminogruppen in der Seitenkette und Oligoamide mit Aminoendgruppen. Beispiele für solche ungesättigten Amide sind: Methylen-bis-acrylamid, 1,6-Hexamethylen-bis-acryl-amid, Diethylentriamin-trismethacrylamid, Bis(methacrylamidopropoxy)-ethan, β-Methacryl-amidoethylmethacrylat, N-[(β-Hydroxyethoxy)ethyl]-acrylamid.

Geeignete ungesättigte Polyester und Polyamide leiten sich z.B. von Maleinsäure und Diolen oder Diaminen ab. Die Maleinsäure kann teilweise durch andere Dicarbonsäuren ersetzt sein. Sie können zusammen mit ethylenisch ungesättigten Comonomeren, z.B. Styrol, eingesetzt werden. Die Polyester und Polyamide können sich auch von Dicarbonsäuren und ethylenisch ungesättigten Diolen oder Diaminen ableiten, besonders von längerkettigen mit z.B. 6 bis 20 C-Atomen. Beispiele für Polyurethane sind solche, die aus gesättigten oder ungesättigten Diisocyanaten und ungesättigten bzw. gesättigten Diolen aufgebaut sind.

Polybutadien und Polyisopren und Copolymere davon sind bekannt. Geeignete Comonomere sind z.B. Olefine wie Ethylen, Propen, Buten, Hexen, (Meth)-Acrylate, Acrylnitril, Styrol oder Vinylchlorid. Polymere mit (Meth)Acrylatgruppen in der Seitenkette sind ebenfalls bekannt. Es kann sich z.B. um Umsetzungsprodukte von Epoxidharzen auf Novolakbasis mit (Meth)-Acrylsäure handeln, um Homo- oder Copolymere des Vinylalkohols oder deren Hydroxyalkylderivaten, die mit (Meth)-Acrylsäure verestert sind, oder um Homo- und Copolymere von (Meth)-Acrylaten, die mit Hydroxyalkyl(meth)acrylaten verestert sind.

Die photopolymerisierbaren Verbindungen (A) können alleine oder in beliebigen Mischungen eingesetzt werden. Bevorzugt werden Gemische von Polyol(Meth)Acrylaten verwendet.

Den erfindungsgemässen Zusammensetzungen können auch Bindemittel zugesetzt werden, was besonders zweckmässig ist, wenn es sich bei den photopolymerisierbaren Verbindungen um flüssige oder viskose Substanzen handelt. Die Menge des Bindemittels kann z.B. 5-95, vorzugsweise 10-90 und besonders 40-90 Gew.-% betragen, bezogen auf den Gesamtfestkörper. Die Wahl des Bindemittels erfolgt je nach dem Anwendungsgebiet und hierfür geforderter Eigenschaften wie z.B. Entwickelbarkeit in wässrigen und organischen Lösungsmittelsystemen, Adhäsion auf Substraten und Sauerstoffempfindlichkeit.

Geeignete Bindemittel sind z.B. Polymere mit einem Molekulargewicht von etwa 5'000-2'000'000, bevorzugt 10'000-1'000'000. Beispiele sind: homo- und copolymere Acrylate und Methacrylate, z.B. Copolymere aus Methylmethacrylat/Ethylacrylat/Methacrylsäure, Poly-(methacrylsäurealkylester), Poly(acrylsäurealkylester); Celluloseester und -ether wie Celluloseacetat, Celluloseacetatbutyrat, Methylcellulose, Ethylcellulose; Polyvinylbutyral, Polyvinylformal, cyclisierter Kautschuk, Polyether wie Polyethylenoxid, Polypropylenoxid, Polytetrahydrofuran; Polystyrol, Polycarbonat, Polyurethan, chlorierte Polyolefine, Polyvinylchlorid, Copolymere aus VinylchloridNinylidenchlorid, Copolymere von Vinylidenchlorid mit Acrylnitril, Methylmethacrylat und Vinylacetat, Polyvinylacetat, Copoly(ethylen/vinylacetat), Polymere wie Polycaprolactam und Poly(hexamethylenadipamid), Polyester wie Poly(ethylenglykolterephtalat) und Poly(hexamethylenglykolsuccinat).

Als Komponente (A), d.h. UV-härtbare Komponente, können auch die weiter unten aufgeführten unter (C1) genannten Harze dienen. Insbesondere interessant sind z.B ungesättigte Acrylate mit reaktiven funktionellen Gruppen. Die reaktive funktionelle Gruppe kann z.B. ausgewählt sein aus einer Hydroxyl-, Thiol-, Isocyanat-, Epoxid-, Anhydrid-, Carboxyl-, Amino- oder einer blockierten Aminogruppe. Beipiele für OH-gruppenhaltige ungesättigte Acrylate sind Hydroxyethyl-, Hydroxybutylacrylate oder auch Glycidylacrylate.

Die ungesättigten Verbindungen können auch im Gemisch mit nicht-photopolymerisierbaren filmbildenden Komponenten verwendet werden. Diese können z.B. physikalisch trocknende Polymere bzw. deren Lösungen in organischen Lösemitteln sein, wie z.B. Nitrocellulose oder Celluloseacetobutyrat. Diese können aber auch chemisch bzw. thermisch härtbare Harze sein, wie z.B. Polyisocyanate, Polyepoxide oder Melaminharze. Die Mitverwendung von thermisch härtbaren Harzen ist für die Verwendung in sogenannten Hybrid-Systemen von Bedeutung, die sowohl photopolymerisiert werden und auch thermisch vernetzt werden.

Die Komponente (A) kann beispielsweise ein Beschichtungsmittel enthaltend
(A1) eine oder mehrere radikalisch polymerisierbare Doppelbindungen aufweisende Verbindungen, die zusätzlich mindestens eine weitere im Sinne einer Additions- und/oder Kondensationsreaktion reaktive funktionelle Gruppe enthalten (Beispiele sind vorstehend gegeben),
(A2) ein oder mehrere radikalisch polymerisierbare Doppelbindungen aufweisende Verbindungen, die zusätzlich mindestens eine weitere im Sinne einer Additions- und/oder Kondensationsreaktion reaktive funktionelle Gruppe enthalten, wobei die zusätzliche reaktive funktionelle Gruppe komplementär, bzw. reaktiv ist gegenüber den zusätzlichen reaktiven funktionellen Gruppen der Komponente (A1),
(A3) gegebenenfalls mindestens eine monomere, oligomere und/oder polymere Verbindung mit mindestens einer gegenüber den zusätzlich zu den radikalisch polymerisierbaren Doppelbindungen vorhandenen funktionellen Gruppen aus Komponente (A1) oder Komponente (A2) im Sinne einer Additions- und/oder Kondensationsreaktion reaktiven funktionellen Gruppe,
sein.
Die Komponente (A2) trägt jeweils die zu Komponente (A1) komplementären bzw. reaktiven Gruppen. Es können dabei jeweils auch verschiedenartige funktionelle Gruppen in einer Komponente vorhanden sein. Mit der Komponente (A3) steht eine weitere Komponente zur Verfügung, welche im Sinne von Additions- und/oder Kondensationsreaktionen reaktive funktionelle Gruppen enthält, welche mit den neben den radikalisch polymerisierbaren Doppelbindungen zusätzlich vorliegenden funktionellen Gruppen von (A1) oder (A2) reagiren können. Die Komponente (A3) enthält keine radikalisch polymerisierbaren Doppelbindungen. Beispiele für solche Kombinationen (A1), (A2), (A3) sind der WO 99/55785 zu entnehmen. Beispiele für geeignete reaktive funktionelle Gruppen sind z.B. ausgewählt aus Hydroxyl-, Isocyanat-, Epoxid-, Anhydrid-, Carboxyl oder blockierten Aminogruppen. Beispiele sind vorstehend beschrieben.

Bestandteile der Komponente (C) sind z.B. in der Technik übliche thermisch härtbare Lack- bzw. Beschichtungssystem-Bestandteile. Die Komponente (C) besteht also gegebenenfalls aus mehreren Bestandteilen.
Beispiele für die Komponente (C) sind dabei beispielsweise Oligomere und/oder Polymere, die sich von α,β-ungesättigten Säuren und deren Derivaten ableiten, z.B. sind Polyacrylate und Polymethacrylate, mit Butylacrylat schlagzäh modifizierte Polymethylmethacrylate, Polyacrylamide und Polyacrylnitrile. Weitere Beispiele für die Komponente (C) sind Urethane, Polyurethane, die sich von Polyethern, Polyestern und Polyacrylaten mit freien Hydroxylgruppen einerseits und aliphatischen oder aromatischen Polyisocyanaten andererseits ableiten, sowie deren Vorprodukte. So umfasst die Komponente (C) beispielsweise auch vernetzbare Acrylharze, die sich von substituierten Acrylsäureestern ableiten, wie z.B. Epoxyacrylaten, Urethanacrylaten oder Polyesteracrylaten. Ferner können Alkydharze, Polyesterharze und Acrylatharze sowie deren Modifikationen, die mit Melaminharzen, Harnstoffharzen, Isocyanaten, Isocyanuraten, Polyisocyanaten, Polyisocyanuraten und Epoxyharzen vernetzt werden, Bestandteil der Komponente (C) sein.

Bei der Komponente (C) handelt es sich z.B. allgemein um ein filmbildendes Bindemittel basierend auf einem thermoplastischen oder thermohärtbaren Harz, vorwiegend auf einem thermohärtbaren Harz. Beispiele hierfür sind Alkyd-, Acryl-, Polyester-, Phenol-, Melamin-, Epoxid-, Polyurethanharze und deren Gemische. Beispiele dafür sind z.B. in Ullmann's Encyclopedia of Industrial Chemistry, 5. Ed., Vol. A18, pp. 368-426, VCH, Weinheim 1991 beschrieben.

Komponente (C) kann ein kalt aushärtbares oder ein heiß aushärtbares Bindemittel sein, wobei die Zugabe eines Härtungskatalysators vorteilhaft sein kann. Geeignete Katalysatoren, die die Aushärtung des Bindemittels beschleunigen, sind beispielsweise beschrieben in Ullmann's Encyclopedia of Industrial Chemistry, Vol. A18, S.469, VCH Verlagsgesellschaft, Weinheim 1991.

Beispiele für als Komponente (C) geeignete spezielle Bindemittel sind:
1. Lacke auf Basis von kalt- oder heiß-vernetzbaren Alkyd-, Acrylat-, Polyester-, Epoxid- oder Melaminharzen oder Mischungen solcher Harze, gegebenenfalls mit Zusatz eines Härtungskatalysators;
2. Zweikomponenten-Polyurethanlacke auf Basis von hydroxylgruppenhaltigen Acrylat-, Polyester- oder Polyetherharzen und aliphatischen oder aromatischen Isocyanaten, Isocyanuraten oder Polyisocyanaten;
3. Einkomponenten-Polyurethanlacke auf Basis von blockierten Isocyanaten, Isocyanuraten oder Polyisocyanaten, die während des Einbrennens deblockiert werden; gegebenenfalls ist auch die Zugabe von Melaminharzen möglich;
4. Einkomponenten-Polyurethanlacke auf Basis von aliphatischen oder aromatischen Urethanen oder Polyurethanen und hydroxylgruppenhaltigen Acrylat-, Polyester- oder Polyetherharzen;
5. Einkomponenten-Polyurethanlacke auf Basis von aliphatischen oder aromatischen Urethanacrylaten oder Polyurethanacrylaten mit freien Amingruppen in der Urethanstruktur und Melaminharzen oder Polyetherharzen, gegebenenfalls mit Zusatz eines Härtungskatalysators;
6. Zweikomponentenlacke auf Basis von (Poly)ketiminen und aliphatischen oder aromatischen Isocyanaten, Isocyanuraten oder Polyisocyanaten;
7. Zweikomponentenlacke auf Basis von (Poly)ketiminen und einem ungesättigten Acrylatharz oder einem Polyacetoacetatharz oder einem Methacrylamidoglykolat-methylester;
8. Zweikomponentenlacke auf Basis von carboxyl- oder aminogruppenhaltigen Polyacrylaten und Polyepoxiden;
9. Zweikomponentenlacke auf Basis von anhydridgruppenhaltigen Acrylatharzen und einer Polyhydroxy- oder Polyaminokomponente;
10. Zweikomponentenlacke auf Basis von acrylathaltigen Anhydriden und Polyepoxiden;
11. Zweikomponentenlacke auf Basis von (Poly)oxazolinen und anhydridgruppenhaltigen Acrylatharzen oder ungesättigten Acrylatharzen oder aliphatischen oder aromatischen Isocyanaten, Isocyanuraten oder Polyisocyanaten;
12. Zweikomponentenlacke auf Basis von ungesättigten Polyacrylaten und Polymalonaten;
13. Thermoplastische Polyacrylatlacke auf Basis von thermoplastischen Acrylatharzen oder fremdvernetzenden Acrylatharzen in Kombination mit veretherten Melaminharzen;
14. Lacksysteme auf Basis von Urethan(meth)acrylat, das (Meth)Acryloylgruppen und freie Isocyanatgruppen aufweist und einer oder mehreren mit Isocyanaten reaktiven Verbindungen, wie z.B. gegebenenfalls veresterte Polyole. Solche systeme sind beispielsweise in EP 928800 publiziert.

Blockierte Isocyanate, wie sie in der Komponente (C) auch zum Einsatz kommen können, sind z.B. in Organischer Metallschutz: Entwicklung und Anwendung von Beschichtungsstoffen, Seite 159-160, Vincentz Verlag, Hannover (1993), beschrieben. Es handelt sich dabei um solche Verbindungen, in welchen die sehr reaktionsfähige NCO-Gruppe durch Reaktion mit speziellen Resten, wie z.B. primären Alkoholen, Phenol, Acetessigester, ε-Caprolactam, Phtalimid, Imidazol, Oxim oder Amin "blockiert" wird. Das blockierte Isocyanat, ist in flüssigen Systemen und auch in Gegenwart von Hydroxygruppen stabil. Beim Erhitzen werden die Blockierungsmittel wieder abgespalten und die NCO-Gruppe freigesetzt.

Es können sowohl -Komponenten- (1K) als auch 2-Komponentensysteme (2K) als komponente (C) verwendet werden. Beispiele für solche Systeme sind in Ullmann's Encyclopedia of Industrial Chemistry, Vol. A18, Paints and Coatings, Seite 404-407, VCH Verlagsgesellschaft mbH, Weinheim (1991), beschrieben.

Eine Optimierung der Zusammensetzung ist möglich durch spezielle Anpassung der Formulierung, z.B. durch Variation des Bindemittet/Vernetzer Verhältnisses. Solche Massnahmen sind dem Fachmann in der Lacktechnologie geläufig.

Im erfindungsgemässen Härtungsverfahren ist die Komponente (C) bevorzugt eine Mischung auf Basis Acrylat/Melamin (und Melaminderivate), 2-Komponenten Polyurethan, 1-Komponenten Polyurethan, 2-Komponenten Epoxy/Carboxy oder 1-Komponenten Epoxy/Carboxy. Auch Mischungen dieser Systeme sind möglich, beispielsweise die Zugabe von Melamin (oder Derivaten davon) zu 1-Komponenten Polyurethanen.

Bevorzugt ist die Komponente (C) ein Bindemittel auf Basis eines Polyacrylats mit Melamin oder eines Melaminderivats. Ausserdem bevorzugt ist ein System auf Basis eines Polyacrylat- oder/und Polyesterpolyols mit einem unblockierten Polyisocyanat oder Polyisocyanurat.

Die Komponente (C) kann weiterhin monomere oder/und oligomere Verbindungen mit ethylenisch ungesättigten Bindungen (Präpolymeren), die zusätzlich noch mindestens eine oder mehrere OH-, NH₂-, COOH-, Epoxy- oder NCO-Gruppen enthalten(= C1), die zur Reaktion mit dem Bindemittel- und/oder Vernetzerbestandteil der Komponente (C) fähig sind, enthalten. Nach der Applikation und thermischen Härtung werden die ethylenisch ungesättigten Bindungen durch UV-Strahlung in eine vernetzte, hochmolekulare Form überführt. Beispiele für solche Komponenten (C) sind z.B. in der oben genannten Publikation, Ullmann's Encyclopedia of Industrial Chemistry, 5. Ed., Vol. A18, Seiten 451-453, oder von S. Urano, K. Aoki, N. Tsuboniva und R. Mizuguchi in Progress in Organic Coatings, 20 (1992), 471-486, oder von H. Terashima und O. Isozaki in JOCCA 1992 (6), 222 beschrieben.
(C1) kann z.B ein OH-gruppenhaltiges ungesättigtes Acrylat sein, z.B. Hydroxyethyl-, Hydroxybutylacrylat oder auch Glycidylacrylate. Die Komponente (C1) kann beliebig aufgebaut sein (z.B. Polyester-, Polyacrylat-, Polyether- usw.-Einheiten enthalten), solange eine ethylenisch ungesättigte Doppelbindung und zusätzlich noch freie OH-, COOH-, NH₂-, Epoxy- oder NCO-Gruppen enthalten sind.
(C1) kann beispielsweise auch durch Umsetzung eines epoxyfunktionellen Oligomers mit Acrylsäure oder Methacrylsäure erhalten werden. Ein typisches Beispiel für OH-funktionelles Oligomer mit vinylischen Doppelbindungen ist 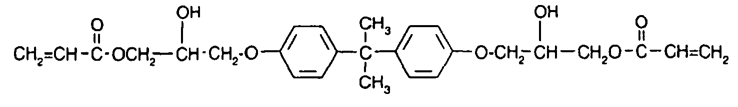 erhalten durch Umsetzung von CH₂=CHCOOH mit 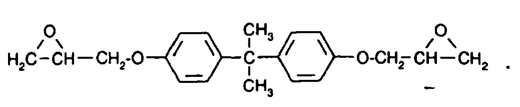
Eine Möglichkeit zur Herstellung der Komponente (C1) ist beispielsweise auch die Umsetzung eines Oligomeren, das nur eine Epoxygruppe enthält und an einer anderen Stelle im Molekül eine freie OH-Gruppe besitzt.

Das Mengenverhältnis der Komponenten (A) zu (C) in den UV- und thermisch- vernetzenden Formulierungen ist nicht kritisch. Dem Fachmann sind "dual-cure" Systeme geläufig und er ist sich daher über die optimalen Verhältnisse der UV-und thermisch-vernetzbaren Komponente für die jeweils gewünschte Anwendung im Klaren. So können die Zusammensetzungen die Komponenten (A) und (C) beispielsweise in einem Verhältnis von 5:95 bis 95:5, 20:80 bis 80:20 oder 30:70 bis 70:30, z.B. 40:60 bis 60:40 enthalten.
Beispiele für "dual-cure"-Systeme, d.h. Systemen mit sowohl UV- als auch thermisch härtbaren Komponenten sind u.a. US 5922473, Spalten 6 bis 10 zu entnehmen.

Den Zusammensetzungen, welche im erfindungsgemässen Verfahren verwendet werden, können auch Lösungsmittel oder Wasser zugesetzt werden. Werden die Zusammensetzungen ohne Lösungsmittel verwendet, so handelt es sich beispielsweise um Pulverlackformulierungen. Geeignete Lösungsmittel sind dem Fachmann bekannte, insbesondere in der Lacktechnologie übliche Lösungsmittel. Beispiele sind verschiedene organische Lösungsmittel, wie etwa Ketone, z.B. Methylethylketon, Cyclohexanon; aromatische Kohlenwasserstoffe, z.B. Toluol, Xylol oder Tetramethylbenzol; Glykolether, wieDiethylenglykolmonoethylether, Dipropylenglykoldiethylether; Ester, wie z.B. Ethylacetat; aliphatische Kohlenwasserstoffe, wie Hexan, Oktan, Decan; oder Petroleum Lösungsmittel, wie z.B.Petrolether.

Die erfindungsgemässen Verbindungen und Mischungen davon können weiterhin als radikalische Photoinitiatoren oder photoinitiierende Systeme für strahlenhärtbare Pulverlacke verwendet werden. Die Pulverlacke können auf festen Harzen und Monomeren enthaltend reaktive Doppelbindungen basieren, wie z.B. Maleaten, Vinylethern, Acrylaten, Acrylamiden und Mischungen davon. Ein radikalisch UV-härtbarer Pulverlack kann durch Mischen von ungesättigten Polyesterharzen mit festen Acrylamiden (z.B. Methylacrylamido-glycolatmethylester) und einem erfindungsgemässen radikalischen Photoinitiator, wie beispielsweise im Vortrag "Radiation Curing of Powder Coating", Conference Proceedings, Radtech Europe 1993 von M. Wittig und Th. Gohmann beschrieben, formuliert werden. Ebenso können radikalisch UV-härtbare Pulverlacke durch Mischen von ungesättigten Polyesterharzen mit festen Acrylaten, Methacrylaten oder Vinylethern und einem erfindungsgemässen Photoinitiator (bzw. Photoinitiatorgemisch) formuliert werden. Die Pulveracke können auch Bindemittel enthalten, wie sie z.B. in der DE 4228514 und der EP 636669 beschrieben sind. Die in der EP 636669 beschriebenen Pulverlackformulierungen enthalten beispielsweise a) ein ungesättigtes Harz aus der Gruppe der (semi)kristallinen oder amorphen ungesättigten Polyester, ungesättigten Polyacrylate oder Mischungen davon mit ungesättigten Polyestern, wobei solche, die sich von Maleinsäure oder Fumarsäure ableiten besonders bevorzugt sind; b) ein oligomeres oder polymeres Vernetzungsmittel mit Vinylether-, Vinylester- oder (Meth)acrylat-funktionellen Gruppen, wobei Vinylether Oligomere besonders bevorzugt sind, wie etwa divinylether-funktionalisierte Urethane; c) den Photoinitiator.
Die UV-härtbaren Pulverlacke können auch weisse oder farbige Pigmente enthalten. So kann z.B. vorzugsweise Rutil-Titaniumdioxid bis zu Konzentrationen von 50 Gew.-% eingesetzt werden, um einen gehärteten Pulverlack mit gutem Abdeckungsvermögen zu erhalten. Das Verfahren beinhaltet normalerweise elektrostatisches oder tribostatisches Aufsprühen des Pulvers auf das Substrat, wie z.B. Metall oder Holz, Aufschmelzen des Pulvers durch Erwärmen und, nachdem ein glatter Film entstanden ist, Strahlenhärten des Überzugs mit ultraviolettem und/oder sichtbaren Licht, z.B. mit Quecksilbermitteldrucklampen, Metallhalogenidlampen oder Xenonlampen. Ein besonderer Vorteil der strahlenhärtbaren Pulverlacke im Vergleich zu den entsprechenden thermisch härtbaren liegt darin, dass die Fliesszeit nach dem Aufschmelzen der Pulverpartikel wahlweise hinausgezögert werden kann, um die Bildung eines glatten hochglänzenden Überzugs zu gewährleisten. Im Gegensatz zu thermisch härtbaren Systemen können strahlenhärtbare Pulverlacke ohne den unerwünschten Effekt der Lebensdauerverkürzung so formuliert werden, dass sie bei niedrigeren Temperaturen schmelzen. Aus diesem Grund sind sie auch geeignet als Überzüge für wärmeempfindliche Substrate, wie z.B. Holz oder Kunststoffe.
Es können, falls die Pulverlacke auf nicht wärmeempfindliche Substrate, z.B. Metalle (Fahrzeugbeschichtungen), appliziert werden sollen, jedoch auch "dual cure" Pulverlackformulierungen mit den erfindungsgemässen Photoinitiatoren bereit gestellt werden. Solche Formulierungen sind dem Fachmann bekannt, sie werden sowohl thermisch als auch UV-gehärtet. Solche Formuleirungen sind beispielsweise US 5922473 zu entnehmen.

Die Pulverlackformulierungen können neben den erfindungsgemässen Photoinitiatoren auch UV-Absorber enthalten. Entsprechende Beispiele sind weiter unten aufgeführt.

Die photopolymerisierbaren Gemische können ausser dem Photoinitiator verschiedene Additive (D) enthalten. Beispiele hierfür sind thermische Inhibitoren, die eine vorzeitige Polymerisation verhindern sollen, wie z.B. Hydrochinon, Hydrochinonderivate, p-Methoxyphenol, β-Naphthol oder sterisch gehinderte Phenole wie z.B. 2,6-Di(tert-butyl)-p-kresol. Zur Erhöhung der Dunkellagerstabilität können z.B. Kupferverbindungen, wie Kupfernaphthenat, -stearat oder -octoat, Phosphorverbindungen, wie z.B. Triphenylphosphin, Tributylphosphin, Triethylphosphit, Triphenylphosphit oder Tribenzylphosphit, quartäre Ammoniumverbindungen, wie z.B. Tetramethylammoniumchlorid oder Trimethylbenzylammoniumchlorid, oder Hydroxylaminderivate, wie z.B. N-Diethylhydroxylamin verwendet werden. Zwecks Ausschluss des Luftsauerstoffes während der Polymerisation können Paraffin oder ähnliche wachsartige Stoffe zugesetzt werden, die bei Beginn der Polymerisation wegen mangelnder Löslichkeit im Polymeren an die Oberfläche wandern und eine transparente Oberflächenschicht bilden, die den Zutritt von Luft verhindert. Ebenso kann eine sauerstoffundurchlässige Schicht aufgetragen werden. Als Lichtschutzmittel können UV-Absorber, wie z.B. solche vom Hydroxyphenyl-benztriazol-, Hydroxyphenyl-benzophenon-, Oxalsäureamid- oder Hydroxyphenyl-s-triazin-Typ, zugesetzt werden. Es können einzelne oder Mischungen dieser Verbindungen mit oder ohne Einsatz von sterisch gehinderten Aminen (HALS) verwendet werden. Beispiele für solche UV-Absorber und Lichtschutzmittel sind
1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [R-CH₂CH₂-COO-CH₂CH₂]₂- mit R = 3'-tert-Butyl-4'-hydroxy-5'-2H-benzotriazol-2-yl-phenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
5. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropyl-amino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butyl-amino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.
6. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyloxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
7. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-(2-Hydroxy-4-[3-(2-ethylhexyl-1-oxy)-2-hydroxypropyloxy]phenyl)-4,6-bis(2,4-dimethylphenyl)-1,3,5-triazin.
8. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearylpentaerythritdiphosphit, Tris(2,4-di-tert-butylphenyl)-phosphit, Düsodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)-methylphosphit, Bis(2,4-di-tert-butyl-6-methylphenyl)-ethylphosphit, 6-Fluor-2,4,8,10-tetra-tert-butyl-12-methyl-dibenz[d,g]-1,3,2-dioxaphosphocin, 2,2',2"-Nitrilo-[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit, 5-Butyl-5-ethyl-2-(2,4,6-tri-tert-butylphenoxy)-1,3,2-dioxaphosphiran.

Weiterhin können in der Technik übliche Zusätze, wie beispielsweise Antistatika, Verlaufshilfsmittel und Adhäsionsverbesserer eingesetzt werden.
Die Photoinitiatoren der Formel I, welche mit Siloxanresten versehen sind, können auch als Verlaufhilfsmittel fungieren, da sie sich zur Oberfläche hin orientieren und durch den Siloxanrest die Oberflächeneigenschaften mit beeinflussen. Die Zugabe weiterer, in der Technik üblicher, Verlaufhilfsmittel kann auch erfolgen. Beispiele dafür sind Siloxanverbindungen oder Fluorkohlenwasserstoffverbindungen wie sie im Handel vielfältig angeboten werden.
Gegenstand der Erfindung ist auch die Verwendung von Verbindungen der Formel I als Verlaufhilfsmittel, gegebenenfalls in Kombination mit weiteren üblichen Verlaufhilfsmitteln.

Der Verlauf wird nach DIN 55945 definiert als "das mehr oder weniger ausgeprägte Vermögen eines noch flüssigen Anstrichs, die bei seinem Auftrag entstehenden Unebenheiten selbstständig auszugleichen." (vgl. J. Bielemann, Lackadditive, VCH Weinheim 1998, Kapitel 6). Der Verlauf eines Beschichtungsstoffes hängt stark ab von seinem Fliessverhalten und seiner Oberflächenspannung. Als Verlaufshilfsmittel werden Substanzen bezeichnet, die durch Erniedrigung der Viskosität und/oder Oberflächenspannung Nassbeschichtungen zu eben verlaufenden Filmen verhelfen. Bei Pulverlacken erniedrigen Verlaufshilfsmittel ausserdem die Schmelzviskosität und die Glasübergangstemperatur, zudem wirken sie entlüftend. Mit Hilfe von Verlaufshilfsmitteln werden Verlaufs- bzw. Oberflächenstörungen, die zu einer Verschlechterung des Gesamteindrucks der Beschichtung führen, behoben. Unter Verlaufs-, bzw. Oberflächenstörungen sind u.a. Orangenschaleneffekt, Strukturbildung, Kraterbildung, Fischaugenbildung, Zugluftempfindlichkeit, Substratbenetzungsprobleme, Pinsel-Auftragsspuren, Läuferbildung, Stippenbildung, Nadelstiche usw. zu verstehen. Durch Verwendung der erfindungsgemässen Verbindungen als Verlaufshilfsmittel lässt sich die Oberflächenspannung erniedrigen. Die Oberflächenspannung lässt sich über die Ermittlung des Randwinkels eines Flüssigkeitstropfens auf einer Oberfläche berechnen (Kontaktwinkelmessung).

Zur Beschleunigung der Photopolymerisation können als weitere Additive (D) Amine zugesetzt werden, wie z.B. Triethanolamin, N-Methyl-diethanolamin, p-Dimethylaminobenzoesäureethylester oder Michlers Keton. Die Wirkung der Amine kann verstärkt werden durch den Zusatz von aromatischen Ketonen vom Typ des Benzophenons. Als Sauerstofffänger brauchbare Amine sind beispielsweise substituierte N,N-dialkylaniline, wie sie in der EP 339841 beschrieben sind. Weitere Beschleuniger, Coinitiatoren und Autoxidizer sind Thiole, Thioether, Disulfide und Phosphine, wie z.B. in der EP 438123 und GB 2180358 beschrieben.
Es ist auch möglich, den erfindungsgemässen Zusammensetzungen in der Technik übliche Kettenübertragunsreagenzien zuzusetzen. Beispiele sind Mercaptane, Amine und Benzthiazol.

Eine Beschleunigung der Photopolymerisation kann weiterhin durch Zusatz von Photosensibilisatoren als weitere Additive (D) geschehen, welche die spektrale Empfindlichkeit verschieben bzw. verbreitern. Dies sind insbesondere aromatische Carbonylverbindungen wie z.B. Benzophenon-, Thioxanthon-, insbesondere auch Isopropylthioxanthon, Anthrachinon- und 3-Acylcumarinderivate, Terphenyle, Styrylketone, sowie 3-(Aroylmethylen)-thiazoline, Campherchinon, aber auch Eosin-, Rhodamin- und Erythrosin-Farbstoffe.
Als Photosensibilisatoren können beispielsweise auch die oben angegebenen Amine betrachtet werden.

Unterstützt werden kann der Härtungsvorgang, insbesondere von (z.B. mit Titandioxid) pigmentierten Zusammensetzungen, auch durch Zugabe eines zusätzlichen Additivs (D) welches eine unter thermischen Bedingungen radikalbildende Komponente ist, wie z.B. einer Azoverbindung wie etwa 2,2'-Azobis(4-methoxy-2,4-dimethylvaleronitril), eines Triazens, Diazosulfids, Pentazadiens oder einer Peroxyverbindung wie etwa Hydroperoxid oder Peroxycarbonat, z.B. t-Butylhydroperoxid, wie z.B. in der EP 245639 beschrieben.

Die Zusammensetzungen können als weitere Additve (D) z.B. auch einen photoreduzierbaren Farbstoff, wie z.B. Xanthen-, Benzoxanthen-, Benzothioxanthen-, Thiazin-, Pyronin-, Porphyrin- oder Acridinfarbstoffe, und/oder eine durch Strahlung spaltbare Trihalogenmethylverbindung enthalten. Ähnliche Zusammensetzungen sind beispielsweise in der EP 445624 beschrieben.

Weitere übliche Zusätze (D) sind - je nach Verwendungszweck - optische Aufheller, Füllstoffe, z.B. Kaolin, Talk, Barytr, Gips, Kreide oder silikatische Füllstoffe, Pigmente, Farbstoffe, Netzmittel oder Verlaufhilfsmittel.
Zur Härtung dicker und pigmentierter Beschichtungen eignet sich der Zusatz von Mikro-Glaskugeln oder pulverisierten Glasfasern, wie z.B. im US 5013768 beschrieben.

Die Formulierungen können auch Farbstoffe und/oder weisse oder farbige Pigmente enthalten. Es können, je nach Anwendungszweck sowohl anorganische als auch organische Pigmente verwendet werden. Solche Zusätze sind dem Fachmann bekannt, einige Beispiele sind Titandioxid-Pigmente, z.B. vom Rutil- oder Anatas-Typ, Russ, Zinkoxid, wie Zinkweiss, Eisenoxide, wie Eisenoxidgelb, Eisenoxidrot, Chromgelb, Chromgrün, Nickeltitangelb, Ultramarinblau, Kobaltblau, Bismutvanadat, Cadmiumgelb oder Cadmiumrot. Beispiele für organische Pigmente sind Mono- oder Bisazopigmente, sowie Metallkomplexe davon, Phthalocyaninpigmente, polycyclische Pigmente, wie z.B. Perylen-, Anthrachinon-, Thioindigo-, Chinacridon- oder Triphenylmethanpigmente, sowie Diketo-Pyrrolo-Pyrol-, Isoindolinon-, z.B. Tetrachlorisoindolinon-, Isoindolin-, Dioxazin-, Benzimidazolon- und Chinophthalonpigmente. Die Pigmente können einzeln aber auch im Gemisch in den Formulierungen eingesetzt werden.
Die Pigmente werden, je nach Verwendungszweck, den Formulierungen in in der Technik üblichen Mengen beigefügt, beispielsweise in einer Menge von 1 bis 60 Gew.-%, oder 10 bis 30 Gew.-%, bezogen auf die gesamte Masse.

Die Formulierungen können beispielsweise auch organische Farbstoffe der verschiedensten Klassen enthalten. Beispiele sind Azofarbstoffe, Methinfarbstoffe, Anthrachinonfarbstoffe oder Metallkomplexfarbstoffe. Übliche Konzentrationen sind beispielsweise 0.1 bis 20 %, insbesondere 1 bis 5 %, bezogen auf die gesamte Masse.

Die Wahl der Additive richtet sich nach dem jeweiligen Anwendungsgebiet und den für dieses Gebiet gewünschten Eigenschaften. Die vorstehend beschriebenen Additive (D) sind in der Technik üblich und werden demnach in in der Technik üblichen Mengen eingesetzt.

In bestimmten Fällen kann es von Vorteil sein, Gemische von zwei oder mehr der Photoinitiatoren der Formel I zu verwenden, günstig ist beispielsweise der Einsatz von direkt bei der Herstellung anfallenden Gemischen. Selbstverständlich können auch Gemische mit bekannten Photoinitiatoren (E) verwendet werden, z.B. Gemische mit Campherchinon, Benzophenon, Benzophenonderivaten, Acetophenon, Acetophenonderivaten, wie beispielsweise α-Hydroxycycloalkylphenylketonen oder 2-Hydroxy-2-methyl-1-phenyl-propanon, Dialkoxyacetophenonen, α-Hydroxy- oder α-Aminoacetophenonen, wie z.B. (4-Methylthiobenzoyl)-1-methyl-1 -morpholino-ethan, (4-Morpholino-benzoyl)-1-benzyl-1-dimethylamino-propan, 4-Aroyl-1,3-Dioxolanen, Benzoinalkylethern und Benzilketalen, wie z.B. Benzildimethylketal, Phenylglyoxalaten und Derivaten davon, dimeren Phenylglyoxalaten, Perestern, z.B.. Benzophenon-tetracarbonsäureperestern wie z.B. in EP 126541 beschrieben, Monoacylphosphinoxiden, wie z.B. (2,4,6-Trimethylbenzoyl)-phenyl-phosphinoxid, Bisacylphosphinoxiden, wie z.B. Bis(2,6-dimethoxybenzoyl)-(2,4,4-trimethyl-pent-1-yl)phosphinoxid, Bis(2,4,6-trimethylbenzoyl)-phenyl-phosphinoxid oder Bis(2,4,6-trimethylbenzoyl)-(2,4-dipentoxyphenyl)phosphinoxid, Trisacylphosphinoxiden, Halomethyltriazinen, z.B. 2-[2-(4-Methoxy-phenyl)-vinyl]-4,6-bis-trichloromethyl-[1,3,5]triazin, 2-(4-Methoxy-phenyl)-4,6-bis-trichloromethyl-[1,3,5]triazin, 2-(3,4-Dimethoxy-phenyl)-4,6-bis-trichloromethyl-[1,3,5]triazin, 2-Methyl-4,6-bis-trichloromethyl-[1,3,5]triazin, Hexaarylbisimidazol / Coinitiator Systeme, z.B. ortho-Chlorohexaphenylbisimidazol zusammen mit 2-Mercaptobenzthiazol, Ferroceniumverbindungen oder Titanocenen, wie beispielsweise Dicyclopentadienyl-bis(2,6-difluoro-3-pyrrolo-phenyl)-titan oder Borat-photoinitiatoren.
Im Falle des Einsatzes der erfindungsgemäßen Photoinitiatoren in Hybridsystemen, d.h. sowohl radikalisch als auch kationisch härtbaren Systemen, werden zusätzlich zu den radikalischen Härtern der Formel I und ggf. weiteren radikalischen Härtern, kationische Photoinitiatoren wie z.B. Benzoylperoxid (andere geeignete Peroxide sind in US 4950581, Spalte 19, Zeilen 17-25 beschrieben), aromatische Sulfonium-, Phosphonium- oder lodonium-Salze wie sie z.B. in US 4950581, Spalte 18, Zeile 60 bis Spalte 19, Zeile 10 beschrieben sind, verwendet.

Die photopolymerisierbaren Zusammensetzungen enthalten den Photoinitiator zweckmässig in einer Menge von 0,05 bis 15 Gew.-%, vorzugsweise 0,1 bis 5 Gew.-%, bezogen auf die Zusammensetzung. Die angegebene Menge Photoinitiator bezieht sich auf die Summe aller zugegebenen Photoinitiatoren, wenn Mischungen derselben verwendet werden, also sowohl auf den Photoinitiator (B) als auch auf die Photoinitiatoren (B) + (E).

Die photopolymerisierbaren Zusammensetzungen können für verschiedene Zwecke verwendet werden, beispielsweise als Druckfarbe, als Klarlack, als Weisslack, als bunt-pigmentierter Lack, z.B. für Holz oder Metall, als Pulverlacke, als Anstrichstoff, u.a. für Papier, Holz, Metall oder Kunststoff, als tageslichthärtbarer Anstrich für Bauten- und Straßenmarkierung, für photographische Reproduktionsverfahren, für holographische Aufzeichnungsmaterialien, für Bildaufzeichnungsverfahren oder zur Herstellung von Druckplatten, die mit organischen Lösemitteln oder wässrig-alkalisch entwickelbar sind, zur Herstellung von Masken für den Siebdruck, als Zahnfüllmas-sen, als Klebstoffe, als drucksensitive Klebstoffe, als Laminierharze, als Aetz- oder Permanentresists, sowohl flüssig als auch Trockenfilme, als photostrukturierbare Dielektrika, und als Lötstoppmasken für elektronische Schaltungen, als Resists zur Herstellung von Farbfiltern (Color Filter) für jeden Bildschirmtyp oder zum Erzeugen von Strukturen im Herstellungsprozess von Plasma-Anzeigen und Elektrolumineszenz Anzeigen, für die Herstellung von optischen Schaltern, optischen Gittern (Interferenzgittern), zur Herstellung von dreidimensionalen Gegenständen durch Massenhärtung (UV-Härtung in transparenten Formen) oder nach dem Stereolithographie-Verfahren, wie es z.B. im US 4575330 beschrieben ist, zur Herstellung von Verbundwerkstoffen (z.B. styrolischen Polyestern, die gegebenenfalls Glasfasern und/oder andere Fasern und andere Hilfsstoffe, enthalten können) und anderen dickschichtigen Massen, zur Beschichtung oder Versiegelung von elektronischen Teilen oder als Ueberzüge für optische Fasern. Die Zusammensetzungen eignen sich weiterhin zur Herstellung von optischen Linsen, z.B. Kontaktlinsen oder Fresnel Linsen, sowie zur Herstellung von medizinischen Geräten, Hilfsmitteln oder Implantaten.
Die Zusammensetzungen können auch zur Herstellung von Gelen mit thermotropen Eigenschaften verwendet werden, wie sie z.B. in der DE 19700064 und EP 678534 beschrieben sind.

Die Verbindungen der Formel I können weiterhin als Initatoren für Emulsions-, Perl- oder Suspensionspolymerisationen oder als Initiatoren einer Polymerisation für die Fixierung von Ordnungszuständen von flüssigkristallinen Mono- und Oligomeren, als Initiatoren für die Fixierung von Farbstoffen auf organischen Materialien eingesetzt werden.

Die erfindungsgemässen photohärtbaren Zusammensetzungen eignen sich z.B. als Beschichtungsstoffe für Substrate aller Art, z.B. Holz, Textilien, Papier, Keramik, Glas, Kunststoffe wie Polyester, Polyethylenterephthalat, Polyolefine oder Celluloseacetat, insbesondere in Form von Filmen, sowie Metalle wie Al, Cu, Ni, Fe, Zn, Mg oder Co und GaAs, Si oder SiO₂, auf denen eine Schutzschicht oder durch bildmässiges Belichten eine Abbildung aufgebracht werden soll.

Die Beschichtung der Substrate kann erfolgen, indem eine flüssige Zusammensetzung, eine Lösung oder Suspension auf das Substrat aufgebracht wird. Die Wahl des Lösungsmittels und die Konzentration richten sich hauptsächlich nach der Art der Zusammensetzung und nach dem Beschichtungsverfahren. Das Lösungsmittel soll inert sein, d.h. es soll mit den Komponenten keine chemische Reaktion eingehen und es soll bei der Trocknung nach dem Beschichten wieder entfernt werden können. Geeignete Lösungsmittel sind z.B. Ketone, Ether und Ester, wie Methylethylketon, Isobutylmethylketon, Cyclopentanon, Cyclohexanon, N-Methylpyrrolidon, Dioxan, Tetrahydrofuran, 2-Methoxyethanol, 2-Ethoxyethanol, 1-Methoxy-2-propanol, 1,2-Dimethoxyethan, Essigsäureethylester, Essigsäure-n-butylester und 3-Ethoxy-propionsäureethylester.
Die Formulierung wird mittels bekannter Beschichtungsverfahren gleichförmig auf ein Substrat aufgebracht, z.B. durch Schleudern, Tauchen, Rakelbeschichtung, Vorhanggiessverfahren, Aufpinseln, Sprühen, speziell durch elektrostatisches Sprühen und Reverse-Roll-Beschichtung, sowie durch elektrophoretische Abscheidung. Es ist auch möglich, die lichtempfindliche Schicht auf einen temporären, flexiblen Träger zu bringen und dann durch Schichtübertragung via Lamination das endgültige Substrat.

Die Auftragsmenge (Schichtdicke) und Art des Substrates (Schichtträger) sind abhängig vom gewünschten Applikationsgebiet. Der Trockenschichtdickenbereich umfasst im allgemeinen Werte von ca 0,1 µm bis mehr als 100 µm, bevorzugt 0.02 bis 2 cm.

Ein weiteres Einsatzgebiet der Photohärtung ist die Metallbeschichtung, beispielsweise bei der Lackierung von Blechen und Tuben, Dosen oder Flaschenverschlüssen, sowie die Photohärtung auf Kunststoffbeschichtungen, beispielsweise von Fussboden- oder Wandbelägen auf PVC-Basis.

Beispiele für die Photohärtung von Papierbeschichtungen sind die farblose Lackierung von Etiketten, Schallplattenhüllen oder Buchumschlägen.

Die Lichtempfindlichkeit der erfindungsgemässen Zusammensetzungen reicht in der Regel von ca. 200 nm bis ca. 600 nm (UV-Gebiet). Geeignete Strahlung enthält z.B. Sonnenlicht oder Licht aus künstlichen Lichtquellen. Als Lichtquellen kommen daher eine grosse Anzahl der verschiedensten Typen zur Anwendung. Es sind sowohl Punktquellen als auch flächenförmige Strahler (Lampenteppiche) geeignet. Beispiele sind: Kohlelichtbogenlampen, Xenon-Lichtbogenlampen, Quecksilbermitteldruck-, Quecksilberhochdruck- und Quecksilberniederdruckstrahler, gegebenenfalls mit Metall-Halogeniden dotiert (Metall-Halogenlampen), mikrowellenangeregte Metalldampflampen, Excimer Lampen, superaktinische Leuchtstoffröhren, Fluoreszenzlampen, Argonglühlampen, Blitzlampen, photographische Flutlichtlampen, lichtemittierende Dioden (LED), Elektronenstrahlen und Röntgenstrahlen. Der Abstand zwischen Lampe und zu belichtendem Substrat kann je nach Anwendungszweck und Lampentyp bzw. Lampenstärke variieren, z.B. zwischen 2 cm bis 150 cm. Speziell geeignet sind Laserlichtquellen, z.B. Excimer-Laser, wie Krypton-F-Laser zur Belichtung bei 248 nm. Auch Laser im sichtbaren Bereich können eingesetzt werden.

Wie bereits erwähnt kann im erfindungsgemässen Verfahren die Härtung lediglich durch Bestrahlen mit elektromagnetischer Strahlung erfolgen. Je nach Zusammensetzung der zu härtenden Formulierung ist jedoch eine thermische Härtung vor, während oder nach der Bestrahlung zweckmässig.
Die thermische Härtung erfolgt nach dem Fachmann bekannten Methoden. Im allgemeinen wird die Härtung in einem Ofen, z.B. Umluftofen, auf einer Heizplatte oder durch Bestrahlen mit IR-Lampen durchgeführt. Eine Härtung ohne Hilfsmittel bei Raumtemperatur ist ebenfalls möglich, je nach dem verwendeten Bindemittelsystem. Die Härtungstemperaturen liegen in der Regel zwischen Raumtemperatur und 150°C, z.B. 25-150°C oder 50-150°C. Bei Pulverlacken oder "Coil Coat" Lacken können die Härtungstemperaturen auch höher liegen, z.B. bis zu 350°C.

Erfindungsgemäss können, falls die Formulierung thermisch härtbare Komponenten (C) enthält, zusätzlich auch thermische Trocknungs- bzw. Härtungskatalysatoren als zusätzliche Additive (D) der Formulierung zugegeben werden. Mögliche Trocknungskatalysatoren, bzw. thermische Härtungskatalysatoren, sind beispielsweise organische Metallverbindungen, Amine oder/und Phosphine. Organische Metallverbindungen sind z.B. Metallcarboxylate, insbesondere solche der Metalle Pb, Mn, Co, Zn, Zr oder Cu, oder Metallchelate, insbesondere solche der Metalle Al, Ti oder Zr oder Organometallverbindungen wie z.B. Organozinnverbindungen. Beispiele für Metallcarboxylate sind die Stearate von Pb, Mn oder Zn, die Octoate von Co, Zn oder Cu, die Naphthenate von Mn und Co oder die entsprechenden Linoleate oder Tallate. Beispiele für Metallchelate sind die Aluminium-, Titan- oder Zirkonium-Chelate von Acetylaceton, Ethylacetylacetat, Salicylaldehyd, Salicylaldoxim, o-Hydroxyacetophenon oder Ethyl-trifluoracetylacetat und die Alkoxide dieser Metalle. Beispiele für Organozinnverbindungen sind Dibutylzinnoxid, Dibutylzinndilaurat oder Dibutylzinndioctoat. Beispiele für Amine sind vor allem tertiäre Amine, wie z.B. Tributylamin, Triethanolamin, N-Methyl-diethanolamin, N-Dimethylethanolamin, N-Ethylmorpholin, N-Methylmorpholin oder Diazabicyclooctan (Triethylendiamin) sowie deren Salze. Weitere Beispiele sind quaternäre Ammoniumsalze, wie z.B. Trimethylbenzylammoniumchlorid. Als Härtungskatalysator können auch Phosphine verwendet werden, wie z.B. Triphenylphosphin. Geeignete Katalysatoren sind beispielsweise auch in J. Bielemann, Lackadditive, Wiley-VCH Verlag GmbH, Weinheim, 1998, Seite 244-247 beschrieben. Beispiele sind Carbonsäuren, wie etwa p-Toluolsulfonsäure, Dodecylbenzolsulfonsäure, Dinonylnaphthalinsulfonsäure oder Dinonylnaphthalindisulfonsäure. Verwendet werden können beispielsweise auch latente oder blockierte Sulfonsäuren, wobei die Blockierung der Säure ionogen oder nicht-ionogen sein kann.
Der Einsatz solcher Katalysatoren erfolgt in dem Fachmann bekannten in der Technik üblichen Konzentrationen.

Gegenstand der Erfindung ist auch ein Verfahren zur Photopolymerisation von nichtflüchtigen monomeren, oligomeren oder polymeren Verbindungen mit mindestens einer ethylenisch ungesättigten Doppelbindung, dadurch gekennzeichnet, dass eine wie oben beschriebene Zusammensetzung mit elektromagnetischer Strahlung im Bereich von 200 bis 600 nm bestrahlt wird.

Erfindungsgegenstand ist auch die Verwendung der oben beschriebenen Zusammensetzung bzw. ein Verfahren zur Herstellung von pigmentierten und nichtpigmentierten Lacken, Pulverlacken, Verbundmassen oder Glasfaserkabelbeschichtungen.

Ebenfalls Gegenstand der Erfindung ist ein beschichtetes Substrat, das auf mindestens einer Oberfläche mit einer wie oben beschriebenen Zusammensetzung beschichtet ist.

Die folgenden Beispiele erläutern die Erfindung weiter, ohne diese auf die Beispiele beschränken zu wollen. Teile und Prozente beziehen sich, wie in der übrigen Beschreibung und in den Ansprüchen auf das Gewicht, sofern nicht anders angezeigt. Wenn auf Alkylreste mit mehr als drei C-Atomen ohne die Angabe des Isomeren Bezug genommen wird, so sind immer die n-lsomeren gemeint.

### Beispiel A: Herstellung der Photoinitiatoreinheit

### A.1: Herstellung von Phenylisobutyrat

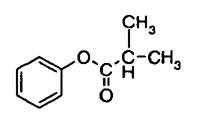

In einem mit Thermometer, Kühler und Tropftrichter ausgerüsteten Kolben werden 176.6 g Phenol unter Stickstoff auf 5°C abgekühlt. Während 40 Minuten werden tropfenweise 250 g Isobutylsäurechlorid zugegeben und die Lösung wird bei 5°C während einer Stunde gerührt. Die Temperatur wird auf Raumtemperatur erhöht und das Rühren während 2 Stunden fortgesetzt. Die Mischung wird destilliert (bp = 95-100°C (20 mbar)) und es werden 298 g des reinen Produktes erhalten (97%).
¹H-NMR (CDCl₃) [ppm]: 7.39 (m, 2H arom.); 7.22 (m, 1H arom.); 7.10 (m, 2H arom.); 3.54 (q x q, J = 6.99, 1H); 1.33 (d, J = 7.00, 6H, 2CH₃).
A.2: Herstellung von 1-(4-Hydroxyphenyl)-2-methyl-1-propanon

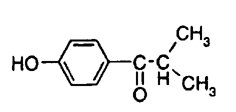

In einem mit Thermometer, Kühler und Tropftrichter ausgerüsteten Kolben werden 580.8 g Aluminiumchlorid bei 0-5°C unter stickstoff zu 1 l Chlorobenzol gegeben. Die Mischung wird während 45 Minuten bei Raumtemperatur gerührt. 298 g des wie in A.1 beschrieben hergestellten Produktes werden tropfenweise während 45 Minuten zugegeben, wobei die Temperatur bei 20-25°C gehalten wird. Die entstehende Suspension wird während 2 Tagen bei Raumtemperatur gerührt. Die Mischung wird auf ein Mischung aus Eis (3 kg) und Salzsäure (450 ml) geschüttet und mit Toluol extrahiert. Die organischen Phasen werden mit Salzwasser gewaschen. Nach dem Trocknen über MgSO₄ und Filtrieren wird das Lösungsmittel im Vakuum entfernt. Der Rest wird mit 1 l Wasser versetzt, und der pH Wert der Lösung wird mit 30%iger Natronlauge auf 14 erhöht, während die Temperatur bei 20°C gehalten wird. Diese Lösung wird mit Ethylacetat extrahiert. Die wässrige Phase wird auf 0°C gekühlt und der pH Wert mit konz. Salzsaüre auf 0 eingestellt, die organische Phase über MgSO₄ getrocknet, filtriert und das Lösungsmittel im Vakuum abgezogen. Es resultiert eine Flüssigkeit, welche sich im Gefrierschrank verfestigt. Das reine Produkt wird als weisser Feststoff erhalten (213 g, 71%).
¹H-NMR (CDCl₃) [ppm]: 7.90 (m, 2H arom.); 6.94 (m, 2H arom.); 3.54 (q x q, J = 6.84, 1H); 1.20 (d, J = 6.82, 6H, 2CH₃).

### A.3: Herstellung von 2-Hydroxy-1-(4-hydroxyphenyl)-2-methyl-1-propanon

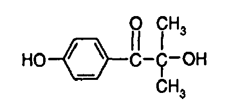

Eine Lösung von 213 g des in A.2 hergestellten Produktes in 475 ml Dioxan wird auf 0°C abgekühlt. 228 g Brom werden während einer Stunde tropfenweise zugegeben, während die Temperatur auf 10-15°C gehalten wird. Die orangefarbene Mischung wird während 2 Stunden bei Raumtemperatur gerührt. Die Lösung wird auf (5.4 l) Wasser gegossen und mit Ethylacetat extrahiert. Nach dem Trocknen der organischen Phasen über MgSO₄ und Filtrieren wird das Lösungsmittel im Vakuum abgezogen und es resultiert ein braunes Öl. Zu diesem Öl werden 3 l Wasser gegeben und die sich bildende beigefarbene Emulsion wird mit 650 g 30%iger Natronlauge behandelt. Die Mischung wird bei Raumtemperatur während 3 Stunden gerührt. Dann werden 293 ml konzentrierte HCI zugeben, um den pH Wert der Lösung auf 7 einzurichten. Die entstehende weisse Suspension wird während 4 Stunden bei 0°C und über Nacht bei Raumtemperatur gerührt. Die Mischung wird dann auf 5°C abgekühlt und filtriert. Die Kristalle werden mit Wasser gewaschen und bei 40°C im Vakuum getrocknet. Zunächst werden 137.8 g als schmutzig-weisse Kristalle erhalten. Aus der extrahierten Mutterlauge werden weitere 47.8 g einer verschmutzten Verbindung erhalten. Beide Produkte werden in Toulol gereinigt und es werden 135 g (58%) reines Produkt und 27 g (12%) eines noch nicht ganz reinen Produktes isoliert.
¹H-NMR (DMSOd₆) [ppm]: 10.23 (s, OH); 8.12 (m, 2 H arom.); 6.79 (m, 2 H arom.); 5.59 (s, OH); 1.37 (s, 6 H, 2 CH₃). Mikroanalyse: ber.: C 66.65; H 6.71; gef.: C 65.60; H 6.52.

### A.4: Herstellung von 2-Hydroxy-2-methyl-1-[4-(2-propenyloxy)phenyl]-1-propanon (A4a) und 2-Methyl-2-(2-propenyloxy)-1-[4-(2-propenyloxy)phenyl]-1-propanon (A4b)

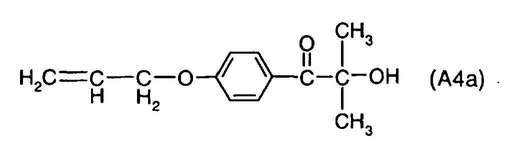

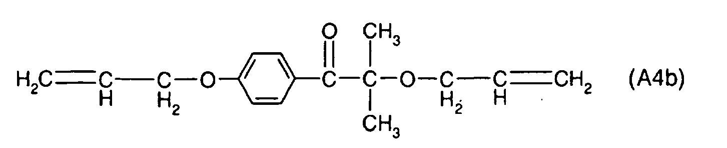

Eine Lösung von 75 g der wie in A.3 beschrieben hergestellten Verbindung in 300 ml Dimethylsolfoxid (DMSO) wird bei Raumtemperatur unter Argon während einer Stunde zu einer Suspension von NaH (20 g; 55-60% in Öl) in 950 ml DMSO gegeben. Die Lösung wird während 15 Minuten bei Raumtemperatur gerührt und während weiterer 15 Minuten bei 35-40°C. Eine Lösung von 38.7 ml Allylbromid in 75 ml DMSO wird während 15 Minuten zugegeben und die entstandene Mischung wird während 30 Minuten auf 45°C erwärmt. Die orangefarbene Mischung wird auf eine Eis/Wassermischung (2.5 l) gegossen und mit tert.-Butylmethylether extrahiert. Die organische Phasen werden mit Wasser gewaschen und über Magnesiumsulfat getrocknet. Nach dem Filtrieren, Abdampfen des Lösungsmittels und Chromatographie (Laufmittel Hexan/Essigester 5:1 bis 4:1) werden 2-Hydroxy-2-methyl-1-[4-(2-propenyloxy)phenyl]-1-propanon (53 g, 58%) als leicht gelblicher Feststoff und 2-Methyl-2-(2-propenyloxy)-1-[4-(2-propenyloxy)phenyl]-1-propanon (17.6 g; 16%) als Öl erhalten.

### A4a: 2-Hydroxy-2-methyl-1-[4-(2-propenyloxy)phenyl]-1-propanon:

U.V. (CH₃CN) max. bei 273 nm (e 16'482). IR (KBr Film, cm⁻¹): 3452 (OH); 1663 (CO). ¹H-NMR (CDCl₃) [ppm]: 8.02 (m, 2H arom.); 6.92 (m, 2H arom.); 6.01 (m, 1H, Allyl); 5.37 (m, 2 H, Allyl); 4.60 (m, 2H, CH₂-O); 4.28 (s, OH); 1.62 (s, 6H, 2CH₃). ¹³C-NMR (CDCl₃) [ppm]: 162.5 (Cₐᵣₒₘ-O); 132.5 (CH Allyl); 132.4 (arom.); 118.3 (CH₂ Allyl); 114.4 (arom.); 75.8 (C(CH₃)₂OH); 69.0 (CH₂-O-Ph); 28.8 (CH₃). Mikroanalyse: ber.: C 70.89; H 7.32; gef.: C 70.86; H 7.42

### A4b: 2-Methyl-2-(2-propenyloxy)-1-[4-(2-propenyloxy)phenyl]-1-propanon

U.V. (CH₃CN) max. bei 275 nm (e 16'467).¹H-NMR (CDCl₃) [ppm]: 8.30 (m, 2H arom.); 6.92 (m, 2H arom.); 6.05 (m, 1H, Allyl); 5.80 (m, 1H, Allyl); 5.45-5.08 (m, 4H, Allyl); 4.60 (m, 2 H, CH₂-O); 3.82 (m, 2H, CH₂-O); 1.54 (s, 6H, 2CH₃).

### Beispiel B: Herstellung eines Katalysators

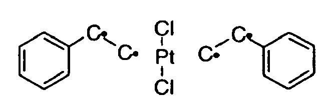

Eine Mischung aus 20 ml frisch destilliertem Styrol und 1 g Pt-(II)-chlorid wird bei Raumtemperatur während 40 Stunden gerührt. Die orangefarbene Suspension wird filtriert und der erhaltene Feststoff mit Toluol und Hexan gewaschen.
¹H-NMR (DMSO-d₆): 7.35 (m, 5H arom.); 6.72 (dd, J = 10.9, J = 17.6, 1H, Ph-CH); 5.81 (d, J = 17.6, 1H); 5.25 (d, J = 10.8, 1H). Mikroanalyse: ber.: C 40.52; H 3.40; gef.: C 40.45; H 3.03.

### Beispiel 1:

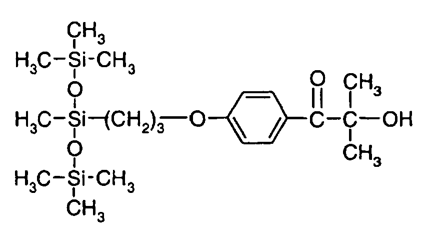

(n = 1, m = p = 0, x = 1, R₁, R₅, R₆, R₇, R₈, R₉, R₁₀, R₁₃, R₁₄ = CH₃, Y = -(CH₂)₃-O-, X = OH)
Eine Mischung von einem Äquivalent 2-Hydroxy-2-methyl-1-[4-(2-propenyloxy)phenyl]-1-propanon und einem Äquivalent 1,1,1,3,5,5,5-Heptamethyltrisiloxan in Toluol wird während 18 Stunden in der Gegenwart von 0.012 Äquivalenten (120 ppm, bezogen auf den Pt-Gehalt) eines durch Aluminiumoxid unterstützten Pt-Katalysators auf 90ºC erhitzt. Die Mischung wird dann filtriert und die erhaltene Lösung mit Aktivkohle behandelt. Nach Filtration und Abdampfen des Lösungsmittels wird die Verbindung quantitativ als Öl erhalten.
U.V. (CH₃CN) max. bei 274 nm (ε 16'299). ¹H NMR (CDCl₃) δ [ppm]: 8.02 (m, 2 H, ArH); 6.94 (m, 2 H, ArH); 4.30 (s, OH); 3.99 (m, 2 H, Ph-OCH₂); 1.83 (m, 2 H, Ph-OCH₂-CH₂); 1.59 (s, 6 H, 2 CH₃); 0.58 (m, 2 H, CH₂-Si); 0.05 (s, 21 H, 7 Si-CH₃). m/z (El) 427 (M⁺-15); gemäss Massenspektrum sind ausserdem weitere Verbindungen in geringer Menge vorhanden: 647 (M⁺-15); 605 (M⁺-15); 385 (M⁺-15); 220 (M⁺); 180 (M⁺).
Titelprodukt M = 442

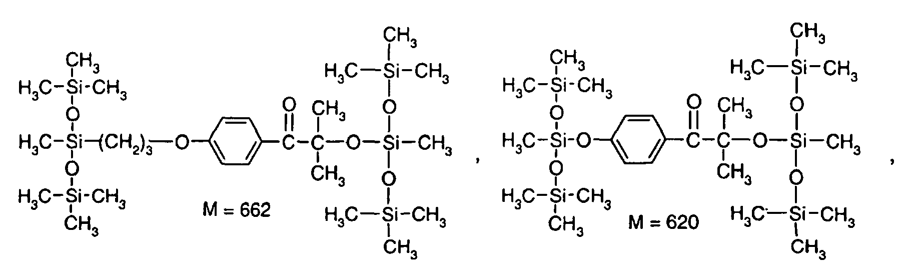

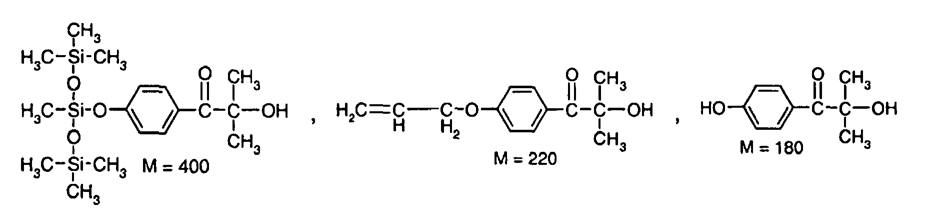

Eine Probe wird durch Flashchromatographie gereinigt und es wird ein Produkt mit M = 442 und einer Reinheit von 85 % (bestimmt durch Gaschromatographie) erhalten. Es verbleibt eine Verunreinigung durch das Produkt mit M = 400.
U.V. (CH₃CN) max. bei 274 nm (ε 16'761).

### Beispiel 2:

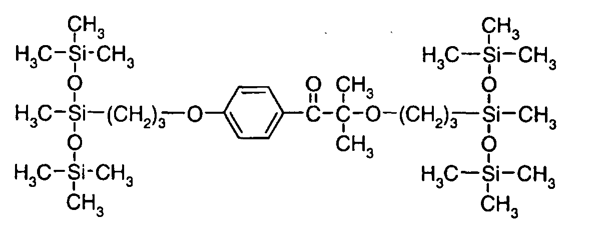

(x = 2; n = 1; m, p = 0; R₁, R₅, R₆, R₇, R₈, R₉, R₁₀, R₁₃, R₁₄ = CH₃; Y, X₁ = -(CH₂)₃-O-)

Die Verbindung des Beispiels 2 wird nach der in Beispiel 1 beschriebenen Methode hergestellt, wobei 1 Moläquivalent 2-Methyl-2-(2-propenyloxy)-1-[4-(2-propenyloxy)phenyl]-1-propanon und 2 Moläquivalente 1,1,1,3,5,5,5-Heptamethyltrisiloxan eingesetzt werden.
U.V. (CH₃CN) max. bei 275 nm (ε 14'666). ¹H NMR (CDCl₃) δ [ppm]: 8.30 (m, 2H, arom.); 6.87 (m, 2H, arom.); 3.98 (m, 2H, Ph-OCH₂); 3.23 (m, 2H, Ph-C(O)-C(CH₃)₂-OCH₂); 1.80 (m, 2H, Ph-OCH₂-CH₂); 1.54 (m, 2H, Ph-C(O)-C(CH₃)₂-O-CH₂-CH₂); 1.50 (s, 6H, 2 CH₃); 0.60 (m, 2H, CH₂-Si); 0.34 (m, 2H, CH₂-Si); 0.10 (m, 42H, 14 Si-CH₃). m/z (Cl) : 705 (MH⁺); gemäss Massenspektrum sind ausserdem weitere Verbindungen in geringer Menge vorhanden: 663 (MH⁺); 621 (MH⁺); 443 (MH⁺); 401 (MH⁺); 459 (MH⁺); 265 (MH⁺); 239 (MH⁺).

M = 662, M = 620, M = 442, M = 400 vgl. die in Beispiel 1 dargestellten Strukturen. Die Werte MH⁺ = 459, 265 und 239 sind verschiedenen Siloxanketten zuzuordnen.

### Beispiel 3:

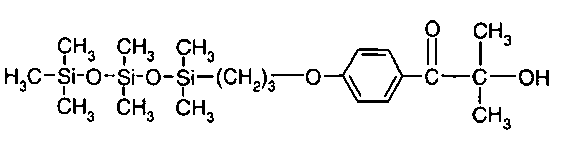

(x, n, p = 1; m = 0; R₁, A₁, R₃, R₄, R₈, R₉, R₁₀, R₁₃, R₁₄ = CH₃; Y = -(CH₂)₃-O-; X = OH)
Die Verbindung des Beispiels 3 wird nach der in Beispiel 1 beschriebenen Methode erhalten, wobei 1 Moläquivalent 2-Hydroxy-2-methyl-1-[4-(2-propenyloxy)phenyl]-1-propanon und 1 Moläquivalent 1,1,3,3,5,5,5-Heptamethyltrisiloxan umgesetzt werden.
U.V. (CH₃CN) max. bei 274 nm (ε 24'989). ¹H-NMR (CDCl₃) δ [ppm]: 7.94 (m, 2H arom.); 6.81 (m, 2H arom.); 4.34 (OH); 3.91 (m, 2 H, Ph-OCH₂); 1.80 (m, 2 H, Ph-OCH₂-CH₂); 1.55 (s, 6H, 2CH₃); 0.57 (m, 2H, CH₂-Si); 0.01 (m, 21H, 7 Si-CH₃). m/z (El) (% Verhältnis durch GC-MS bestimmt): 663 (MH⁺)(18%); 443 (MH⁺)(57%); 441 (MH⁺)(3%); 401 (MH⁺)(3%); 221 (MH⁺)(8); 181 (MH⁺)(8%).
Titelprodukt M = 442 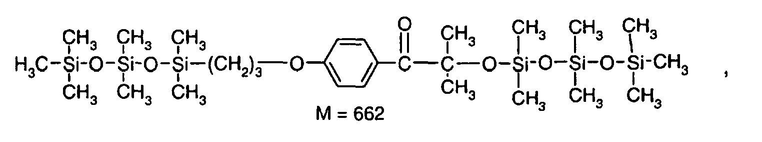 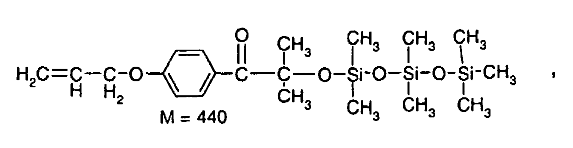 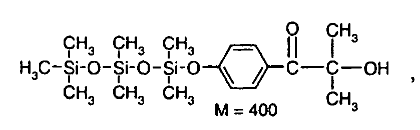 M = 220 und M = 180 vgl. Beispiel 1.

Eine Probe wird durch Flashchromatographie gereinigt und es wird das reine Produkt mit M = 442 isoliert. U.V. (CH₃CN) max. bei 274 nm (ε 27180).

### Beispiel 4:

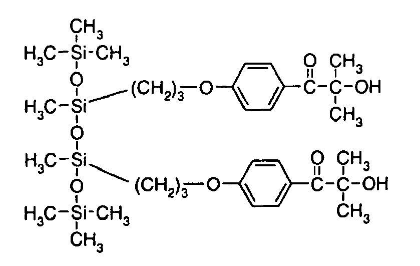

(n = 2; x = 1; m, p = 0; R₁, R₅, R₆, R₇, R₈, R₉, R₁₀, R₁₃, R₁₄ = CH₃; Y = -(CH₂)₃-O-; X = OH)
Eine Mischung aus 2 Moläquivalenten 2-Hydroxy-2-methyl-1-[4-(2-propenyloxy)phenyl]-1-propanon und 1 Moläquivalent 1,1,1,3,5,7,7,7-Octamethyltetrasiloxan in 50 ml Toluol wird in Gegenwart von 0.01 Äquivalenten eines Styrol-Platindichlorid-Komplexes (hergestellt wie in Beispiel B beschrieben) während 18 Stunden auf 60°C erwärmt. Weitere 0.1 Äquivalente des Katalysators werden zugegeben und die Mischung erneut während 22 Stunden erwärmt. Dann wird über Tonerde ("Celite") filtriert. Abdampfen des Lösungsmittels ergibt ein braunes Öl, welches in Ethylacetat aufgenommen und mit Aktivkohle behandelt wird. Filtrieren und Abdampfen des Lösungsmittels ergibt das gewünschte Produkt in quantitativer Ausbeute als gelbes Öl.
U.V. (CH₃CN) max. bei 274 (ε 22'657). ¹H-NMR (CDCl₃) δ [ppm]: 7.91 (m, 4H arom.); 6.83 (m, 4H arom.); 4.21-3.85 (m, 4H, 2 Ph-OCH₂); 1.76 (m, 4H, 2Ph-OCH₂-CH₂); 1.52 (br. s, 12H, 4CH₃); 0.95 (m, 2H, CH₂-Si); 0.55 (m, 2H, CH₂-Si); 0.01 (m, 24H, 8 Si-CH₃). m/z (El) : 707 (M⁺-15); 221 (MH⁺). Titelprodukt: M = 722; M = 220 vgl. Beispiel 1.

### Beispiel 5:

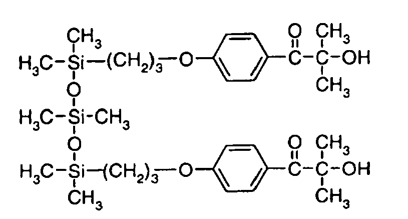

(n = 2; p, x = 1; m = 0; R₁, R₃, R₄, A₁, A₂, R₁₃, R₁₄ = CH₃; Y = -(CH₂)₃-O-; X = OH)
Die Verbindung des Beispiels 5 wird nach der in Beispiel 1 beschriebenen Methode erhalten, wobei 2 Moläquivalente von 2-Hydroxy-2-methyl-1-[4-(2-propenyloxy)phenyl]-1-propanon und 1 Moläquivalent von 1,1,3,3,5,5-Hexamethyltrisiloxan verwendet werden.
U.V. (CH₃CN) max. bei 274 (ε 25'286). ¹H-NMR (CDCl₃), δ [ppm]: 7.97 (m, 4 H arom.); 6.78 (m, 4 H arom.); 4.20 (OH), 3.95 (m, 4 H, 2 Ph-OCH₂); 1.73 (m, 4 H, Ph-OCH₂-CH₂); 1.49 (s, 12H, 4CH₃); 0.48 (m, 4H, 2 CH₂-Si); 0.01 (m, 18H, 6Si-CH₃). m/z (Cl) : 631 (M⁺-18); 613 (M⁺-(2 x 18)); 221 (MH⁺).

### Beispiel 6:

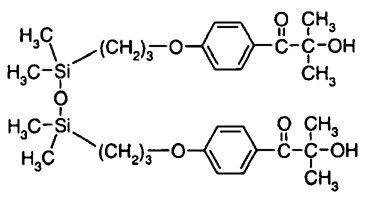

(n = 2; x = 1; m, p = 0; R₁, A₁, A₂, R₁₃, R₁₄ = CH₃; Y = -(CH₂)₃-O-; X = OH)
Die Verbindung des Beispiels 6 wird nach der in Beispiel 1 beschriebenen Methode hergestellt, wobei 2 Moläquivalente 2-Hydroxy-2-methyl-1-[4-(2-propenyloxy)phenyl]-1-propanon und 1 Moläquivalent 1,1,3,3-Tetramethyldisiloxan eingesetzt werden. Nach dem ¹H-NMR-Spektrum bleiben noch ca. 50% des 2-Hydroxy-2-methyl-1-[4-(2-propenyloxy)phenyl]-1-propanons (Ausgansmaterial, "sm") unreagiert.
U.V. (CH₃CN) max. bei 274 (ε 32'443). ¹H-NMR (CDCl₃) δ [ppm]: 8.19 (m, 2H arom. sm); 7.97 (m, 4H arom.); 6.78 (m, 4H arom.); 5.99 (m, 1H allyl sm); 5.31 (m, 2H allyl sm); 4.41 (m, 2H allyl sm); 4.20 (br. s, OH); 3.95 (m, 4H, 2Ph-OCH₂); 1.80 (m, 4H, 2Ph-OCH₂-CH₂); 1.56 (s, 12H, 4 CH₃); 0.56 (m, 4H, 2CH₂-Si); 0.01 (m, 12H, 4Si-CH₃). m/z (Cl) : 707 (MH⁺); 575 (MH⁺); 533 (MH⁺); 491 (MH⁺); 221 (MH⁺); 181 (MH⁺). Titelprodukt: M = 574 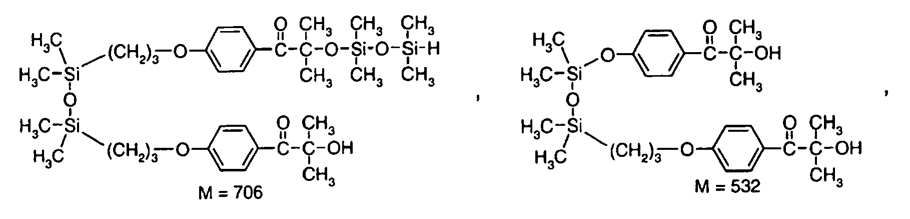 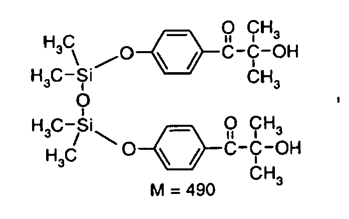 M = 220 und M = 180 vgl. Beispiel 1.

### Beispiel 7:

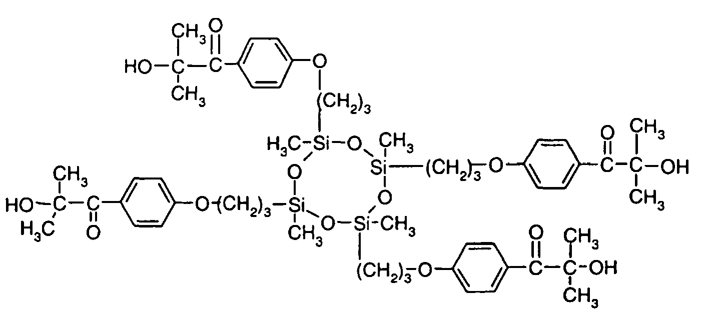

(n = 4; x = 1; m, p = 0; A₁+A₂ = Einfachbindung; R₁, R₁₃, R₁₄ = CH₃; Y = -(CH₂)₃-O-; X = OH)
Die Verbindung des Beispiels 7 wird nach der in Beispiel 1 beschriebenen Methode hergestellt, wobei 4 Moläquivalente 2-Hydroxy-2-methyl-1-[4-(2-propenyloxy)phenyl]-1-propanon und 1 Moläquivalent 2,4,6,8-Tetramethylcyclotetrasiloxan verwendet werden. Gemäss ¹H-NMR-Spektrum, enthält die Mischung nach der Reaktion noch ca. 36% 2-Hydroxy-2-methyl-1-[4-(2-propenyloxy)phenyl]-1-propanon (Ausgangsverbindung, "sm").
U.V. (CH₃CN) max. bei 274 (ε 58'856). ¹H-NMR (CDCl₃) δ [ppm]: 7.90 (m, 8 H arom.); 6.77 (m, 8 H arom.); 5.9 (m, 1 H Allyl sm); 5.25 (m, 2 H Allyl sm); 4.41 (m, 2 H Allyl sm); 4.10 (m, OH); 3.90 (m, 8 H, 4 Ph-OCH₂); 1.71 (m, 8 H, 4 Ph-OCH₂-CH₂); 1.47 (s, 24 H, 8 CH₃); 0.54 (m, 8 H, 4 CH₂-Si); 0.01 (m, 12 H, 4 Si-CH₃). ¹³C-NMR (CDCl₃) δ [ppm]: 202.5 (CO); 162.9, 162.5, 160.8 (Cₐᵣₒₘ-O); 132.3-114.0 (arom.); 75.9 (C(CH₃)₂OH); 70.2 (CH₂-O-Ph); 28.6 (CH₃); 22.7 (CH₂-CH₂-O-Ph); 13.0 (CH₂-Si); -0.7 (CH₃-Si); m/z (Cl): 1121 (MH⁺); 943 (MH⁺); 901 (MH⁺); m/z 221 (MH⁺);
Titelprodukt: M = 1120 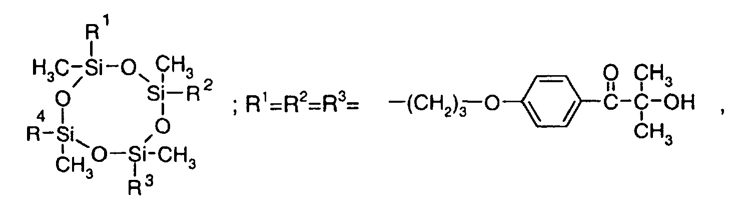 R⁴=H; M=900

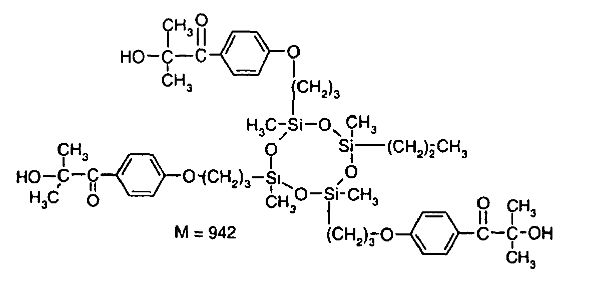

### Beispiel 8:

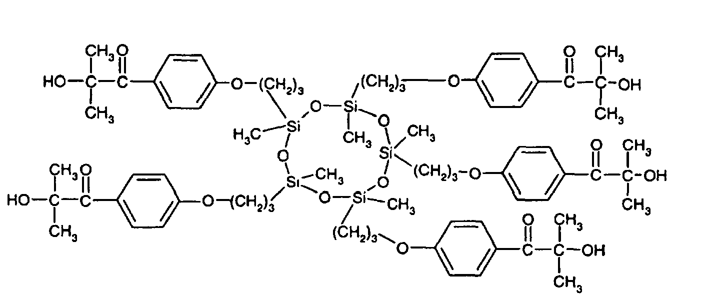

(n = 5; x = 1; m, p = 0; A₁+A₂= Einfachbindung; R₁, R₁₃, R₁₄ = CH₃; Y = -(CH₂)₃-O-; X = OH)
Die Verbindung des Beispiels 8 wird nach der in Beispiel 1 beschriebenen Methode erhalten, wobei 5 Moläquivalente 2-Hydroxy-2-methyl-1-[4-(2-propenyloxy)phenyl]-1-propanon und 1 Moläquivalent 2,4,6,8,10-Pentamethylcyclopentasiloxan eingestezt werden.
U.V. (CH₃CN) max. bei 275 (ε 61'882). ¹H-NMR (CDCl₃) δ [ppm]: 7.87 (m, 10 H arom.); 6.72 (m, 10 H arom.); 4.10 (m, OH); 3.7 (m, 10 H, 5 Ph-OCH₂); 1.7-0.8 (m, 40 H, 5 Ph-OCH₂-CH₂ and 10 CH₃); 0.5 (m, 10 H, 5 CH₂-Si); 0.01 (m, 15 H, 5 Si-CH₃). m/z (Cl) : 1401 (MH⁺); 1181 (MH⁺); 960 (MH⁺); 221 (MH⁺).
Titelverbindung M = 1400 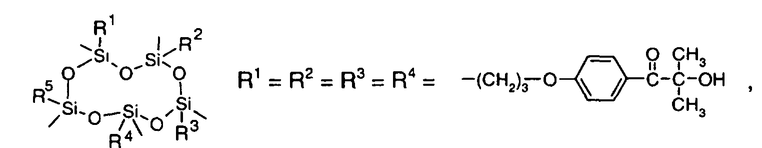 R⁵=H, M=1180;
R¹ = R² = R³ = 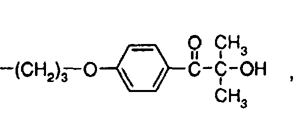 R⁴ = R⁵ = H, M = 960; M = 220, vgl. Beispiel 1.

### Beispiel 9:

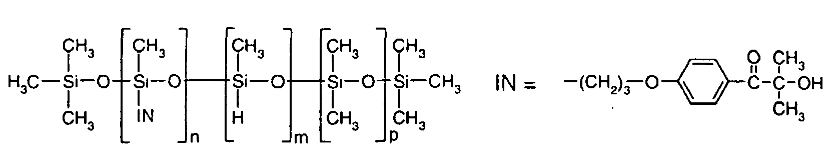

(n ≅ 0.8; m ≅ 0.4; p ≅ 23.75; x = 1; R₁, R₂, R₃, R₄, R₅, R₆, R₇, R₈, R₉, R₁₀, R₁₃, R₁₄ = CH₃;
Y = -(CH₂)₃-O-; X = OH)
Die Verbindung des Beispiels 9 wird nach der in Beispiel 1 beschriebenen Methode erhalten wobei 29 Moläquivalente 2-Hydroxy-2-methyl-1-[4-(2-propenyloxy)phenyl]-1-propanon und 1 Moläquivalent Methylhydrosiloxan-dimethylsiloxan Copolymer mit 6-7 mol-% Methylhydrosiloxangruppen und einem Molekulargewicht von 1900-2000 (HMS 071 von Gelest, DE) verwendet werden.
Entsprechend dem ¹H-NMR- Spektrum, enthält das Produkt noch ca. 33 % 2-Hydroxy-2-methyl-1-[4-(2-propenyloxy)phenyl]-1-propanon (Ausgangsmaterial "sm"). Aus dem ¹H-NMR-Spektrum geht auch hervor, dass der Gehalt an Methylhydrosiloxangruppen 5 % beträgt, wovon 67 % mit einer Photoinitiatorgruppe (IN) subsitutiert sind, d.h. n = 0.83, m = 0.41, p = 23.75.
¹H-NMR (CDCl₃) δ [ppm]: 7.94 (m, H arom.); 6.85 (m, H arom.); 5.95 (m, H Allyl sm); 5.28 (m, H Allyl sm); 4.52 (m, H Allyl sm); 4.24 (m, OH); 3.90 (m, Ph-OCH₂); 1.76 (m, Ph-OCH₂-CH₂); 1.55 (s, CH₃); 0.56 (m, CH₂-Si); 0.01 (m, Si-CH₃). ¹³C-NMR (CDCl₃) : 202 (CO); 163 (Cₐᵣₒₘ-O); 132.3-114.0 (arom.); 70.5 (C(CH₃)₂OH); 68.9 (CH₂-O-Ph); 28.7 (CH₃); 22.8 (CH₂-CH₂-O-Ph); 13.3 (CH₂-Si); 1.1, 1.0, 0.8 (CH₃-Si).

### Beispiel 10:

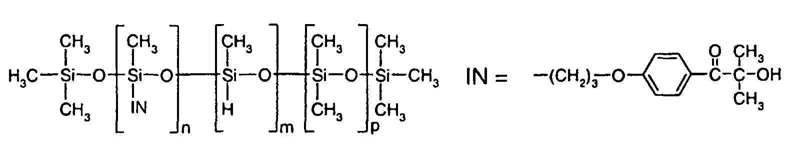

Die Verbindung des Beispiels 10 wird analog zu der in Beispiel 1 beschriebenen Methode hergestellt, wobei 1 Moläquivalent (bezogen auf die Si-H Gruppen) 2-Hydroxy-2-methyl-1-[4-(2-propenyloxy)phenyl]-1-propanon und 1 Moläquivalent Methylhydrosiloxan-dimethylsiloxan-Copolymer mit 1.78 mmol/g(Harz) Methylhydrosiloxangruppen (VXL Fluid von Witco) verwendet werden.
¹H-NMR (CDCl₃) δ [ppm]: 7.95 (m, H arom.); 6.8 (m, H arom.); 4.25 (m, OH); 3.9 (m, Ph-OCH₂); 1.75 (m, Ph-OCH₂-CH₂); 1.5 (s, CH₃); 0.55 (m, CH₂-Si); 0.01 (m, Si-CH₃).

### Beispiel 11:

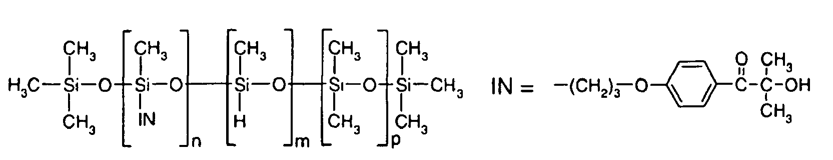

Die Verbindung des Beispiels 11 wird nach der in Beispiel 1 beschriebenen Methode hergestellt wobei 1 Moläquivalent (bezogen auf die Si-H Gruppen) 2-Hydroxy-2-methyl-1-[4-(2-propenyloxy)phenyl]-1-propanon und 1 Moläquivalent Methylhydrosiloxan-dimethylsiloxan-Copolymer mit 7.05 mmol/g(Harz) Methylhydrosiloxangruppen (Y 12183 von Witco) eingesetzt werden.
¹H-NMR (CDCl₃) δ [ppm]: 7.9 (m, H arom.); 6.75 (m, H arom.); 4.15 (m, OH); 3.85 (m, Ph-OCH₂); 1.75 (m, Ph-OCH₂-CH₂); 1.45 (br. s, CH₃); 0.55 (m, CH₂-Si); 0.01 (m, Si-CH₃).

### Beispiel 12:

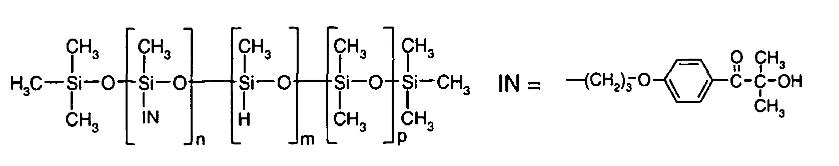

Die Verbindung des Beispiels 12 wird wie in Beispiel 1 beschrieben hergestellt, wobei 1 Moläquivalent (bezogen auf Si-H Gruppen) 2-Hydroxy-2-methyl-1-[4-(2-propenyloxy)phenyl]-1-propanon und 1 Moläquivalent Methylhydrosiloxan-dimethylsiloxan-Copolymer mit 15.62 mmol/g(Harz) Methylhydrosiloxangruppen (Fluid L31 von Witco) verwendet werden.
Gemäss ¹H-NMR-Spektrum enthält das Produkt noch etwa 33 % 2-Hydroxy-2-methyl-1-[4-(2-propenyloxy)phenyl]-1-propanon (Ausgangsmaterial "sm").
¹H-NMR (CDCl₃) δ [ppm]: 7.94 (m, H arom.); 6.85 (m, H arom.); 5.95 (m, H Allyl sm); 5.25 (m, H Allyl sm); 4.52 (m, H Allyl sm); 4.22 (m, OH); 3.90 (m, Ph-OCH₂); 1.65 (m, Ph-OCH₂-CH₂); 1.55 (s, CH₃); 0.6 (m, CH₂-Si); 0.01 (m, Si-CH₃).

### Beispiel 13

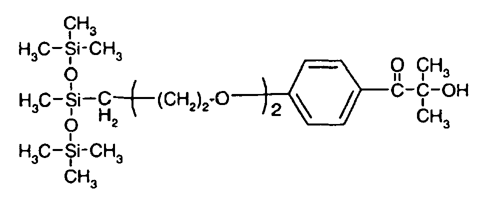

Die Verbindung des Beispiels 13 wird nach dem in Beispiel 1 beschriebenen Verfahren hergestellt wobei 1 Molequivalent 1-[4-(2-Allyloxy-ethoxy)-phenyl]-2-hydroxy-2-methyl-propan-1-one und 1 Molequivalent 1,1,1,3,5,5,5-Heptamethyltrisiloxan eingesetzt werden.
U.V. (CH₃CN) max. bei 273 nm (ε 13'811). ¹H NMR (CDCl₃): 7.96 (m, 2 H, arom.); 6.87 (m, 2 H, arom.); 4.38 (OH); 4.09 (m, 2 H, Ph-OCH₂); 3.71 (m, 2 H, Ph-O(CH₂)₂-O-CH₂); 3.40 (m, 2 H, Ph-OCH₂CH₂); 1.53 (m, 2 H, Ph- O(CH₂)₂-OCH₂-CH₂); 1.53 (s, 6 H, 2 CH₃); 0.38 (m, 2 H, CH₂-Si); 0.01 (m, 21 H, 7 Si-CH₃). m/z (El und Cl) : 486 (M⁺); gemäss MS-Spektrum, sind ausserdem folgende Verbindungen in geringen Mengen vorhanden: 486 (M⁺) (zweites Signal); 442 (M⁺); 264 (M⁺)(2 Signale); 246 (M⁺); 238 (M⁺). Die Werte M = 264 (zweites Signal) und 238 sind verschiedenen Siloxanketten zugeordnet.

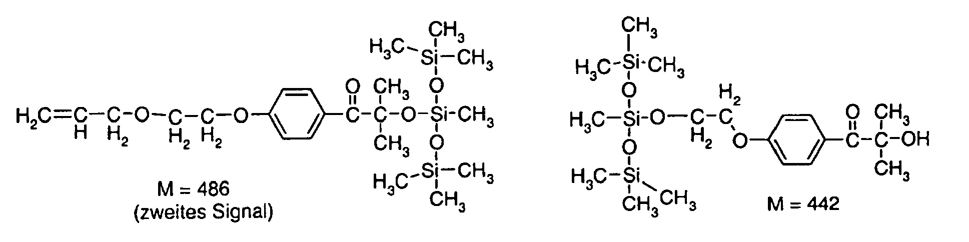

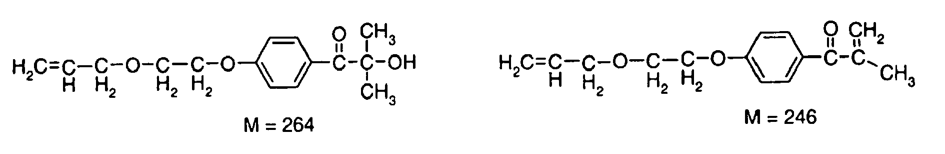

### Beispiel 14

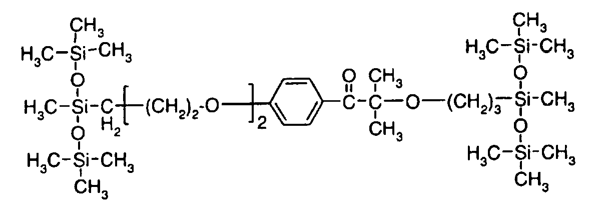

Die Verbindung des Beispiel 14 wird wie im Beispiel 1 beschrieben hergestellt wobei 1 Molequivalent 2-Allyloxy-1-[4-(2-allyloxy-ethoxy)-phenyl]-2-methyl-propan-1-on und 2 Molequivalente 1,1,1,3,5,5,5-Heptamethyltrisiloxan verwendet werden.
U.V. (CH₃CN) max. bei 276 nm (ε 11'693). ¹H NMR (CDCl₃): 8.24 (m, 2 H, arom.); 5.94 (m, 2 H, arom.); 4.09 (m, 2 H, Ph-OCH₂); 3.71 (m, 2 H, Ph-O(CH₂)₂-O-CH₂); 3.40 (m, 2 H, Ph-OCH₂CH₂); 3.13 (m, 2 H, C(CH₃)₂-OCH₂); 1.54 (m, 4 H, Ph-O(CH₂)₂-OCH₂-CH₂ and C(CH₃)₂-OCH₂-CH₂); 1.42 (s, 6 H, 2 CH₃); 0.38 (m, 4 H, 2 CH₂-Si); 0.01 (m, 42 H, 14 Si-CH₃). m/z (El und Cl) : 748 (M⁺); gemäss MS-Spektrum sind Verbindungen mit 528 (M⁺); 486 (M⁺) auch in geringen Mengen anwesend.

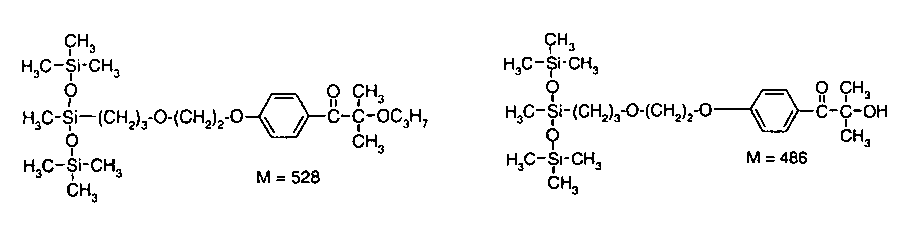

### Beispiel 15

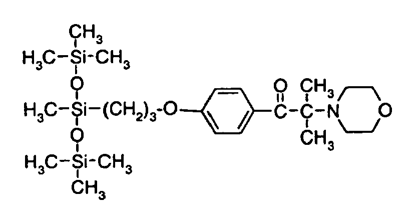

Die Verbindung des Beispiels 15 wird nach der in Beispiel 1 beschriebenen Methode hergestellt, wobei 1 Molequivalent 1-(4-Allyloxy-phenyl)-2-methyl-2-morpholin-4-yl-propan-1-on und 1 Molequivalent 1,1,1,3,5,5,5-Hptamethyltrisiloxan eingesetzt werden.
U.V. (CH₃CN) max. bei 273 nm (ε 15'248). ¹H NMR (CDCl₃): 8.47 (m, 2 H, arom.); 6.79 (m, 2 H, arom.); 4.09 (t, 2 H, Ph-OCH₂, J = 6); 3.58 (m, 4 H, N=(CH₂-CH₂)₂=O); 2.46 (m, 4 H, N=(CH₂-CH₂)₂=O); 1.73 (m, 2 H, Ph-O-CH₂CH₂); 1.21 (s, 6 H, 2 CH₃); 0.49 (m, 2 H, CH₂-Si); 0.01 (m, 21 H, 7 Si-CH₃). m/z (El und Cl) : 512 (MH⁺); gemäss MS Spektrum, sind auch Verbindungen 512 (MH⁺)(zweites Signal); 470 (MH⁺); 265 (MH⁺) in geringen Mengen anwesend. Der Wert MH⁺ = 265 ist einer Siloxanekette zugeordnet.

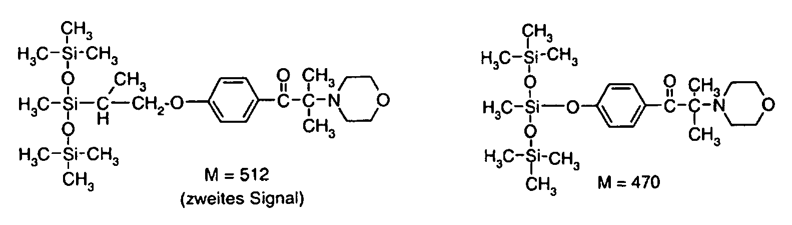

### Beispiel 16

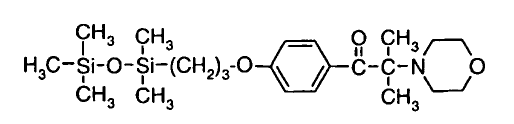

Die Verbindung des Beispiels 16 wird nach der in Beispiel 1 beschriebenen Methode hergestellt, wobei 1 Molequivalent 1-(4-Allyloxy-phenyl)-2-methyl-2-morpholin-4-yl-propan-1-on und 1 Molequivalent 1,1,3,3,3-Pentamethyldisiloxan verwendet werden.
U.V. (CH₃CN) max. bei 273 nm (ε 14'281).¹H NMR (CDCl₃): 8.51 (m, 2 H, arom.); 6.79 (m, 2 H, arom.); 3.90 (t, 2 H, Ph-OCH₂, J = 6); 3.60 (m, 4 H, N=(CH₂-CH₂)₂=O); 2.48 (m, 4 H, N=(CH₂-CH₂)₂=O); 1.77 (m, 2 H, Ph-O-CH₂CH₂); 1.23 (s, 6 H, 2 CH₃); 0.56 (m, 2 H, CH₂-Si); 0.01 (m, 15 H, 5 Si-CH₃). m/z (El und Cl) : 438 (MH⁺) (Cl); gemäss MS Spektrum sind auch in geringen Mengen Verbindungen 396 (MH⁺); 290 (MH⁺) vorhanden.

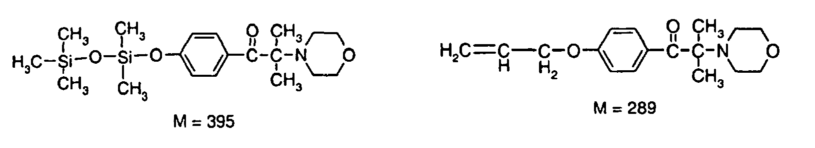

### Beispiel 17

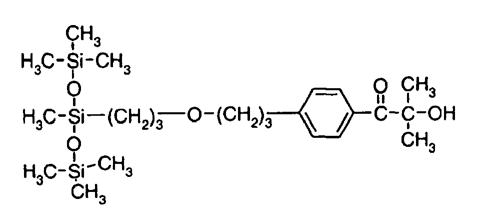

Die Verbindung des Beispiels 17 wird nach der in Beispiel 1 beschriebenen Methode erhalten, wobei 1 Molequivalent 1-[4-(3-Allyloxy-propyl)-phenyl]-2-hydroxy-2-methyl-propan-1-on und 1 Molequivalent 1,1,1,3,5,5,5-Heptamethyltrisiloxan eingesetzt werden.
U.V. (CH₃CN) max. bei 255 nm (ε 13'289). ¹H NMR (CDCl₃): 7.89 (m, 2 H, arom.); 7.18 (m, 2 H, arom.); 3.30 (m, 4 H, Ph-(CH₂)₂-CH₂-O-CH₂); 2.63 (m, 2 H, Ph-CH₂); 1.84 (m, 2 H, Ph-(CH₂)₃-O-CH₂-CH₂); 1.54 (s, 6 H, 2 CH₃); 1.47 (m, 2 H, Ph-CH₂-CH₂); 0.38 (m, 2 H, CH₂-Si); 0.01 (m, 21 H, 7 Si-CH₃). m/z (El und Cl): 484 (M⁺); gemäss Massenspektrum sind in geringen Mengen auch 484 (M⁺) (zweites Isomer); 338 (M⁺); 310 (M⁺ = 338 - 18); 262 (M⁺); 244 (M⁺ = 262 - 18); 222 (M⁺); 204 (M⁺ = 222 - 18) vorhanden.

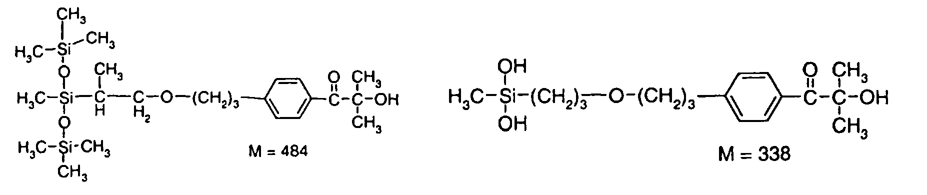

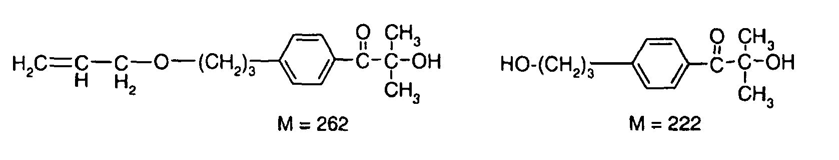

### Beispiel 18

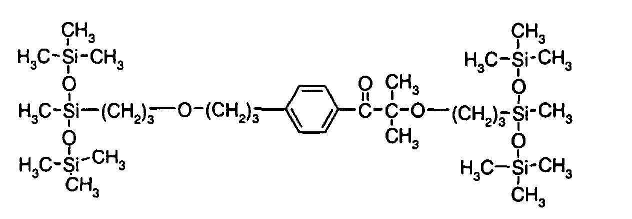

Die Verbindung des Beispiels 18 wird nach der in Beispiel 1 beschriebenen Methode hergestellt, wobei 1 Molequivalent 2-Allyloxy-1-[4-(3-allyloxy-propyl)-phenyl]-2-methyl-propan-1-on und 2 Molequivalente 1,1,1,3,5,5,5-Heptamethyltrisiloxan verwendet werden.
U.V. (CH₃CN) max. bei 256 nm (ε 9'542). ¹H NMR (CDCl₃): 8.14 (m, 2H, arom.); 7.19 (m, 2 H, arom.); 3.30 (m, 4 H, Ph-(CH₂)₂-CH₂-O-CH₂); 3.14 (m, 2 H, C(CH₃)₂-OCH₂); 2.65 (m, 2H, Ph-CH₂); 1.82 (m, 2 H, Ph-(CH₂)₃-O-CH₂-CH₂); 1.48 (m, 2 H, C(CH₃)₂-OCH₂-CH₂); 1.42 (s, 6 H, 2 CH₃); 1.15 (m, 2H, Ph-CH₂-CH₂); 0.38 (m, 4 H, 2 CH₂-Si); 0.01 (m, 42 H, 14 Si-CH₃). m/z (El und Cl) : 746 (M⁺); gemäss MS-Spektrum sind in geringen Mengen auch Verbindungen 484 (M⁺); 238 (M⁺) vorhanden. Der Wert M = 238 wird einer Siloxankette zugeordnet.

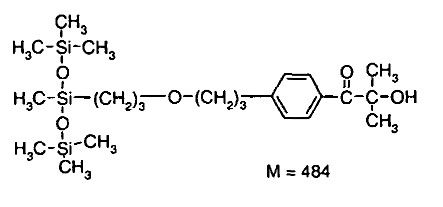

### Beispiel 19

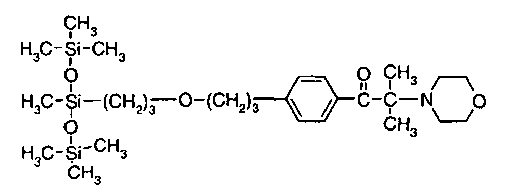

Die Verbindung des Beispiels 19 wird nach der in Beispiel 1 beschriebenen Methode hergestellt, wobei 1 Molequivalent 1-[4-(3-Allyloxy-propyl)-phenyl]-2-methyl-2-morpholin-4-yl-propan-1-on und 1 Molequivalent 1,1,1,3,5,5,5-Heptamethyltrisiloxan eingesetzt werden.
U.V. (CH₃CN) max. bei253 nm (ε 14'930).¹H NMR (CDCl₃): 8.38 (m, 2 H, arom.); 7.14 (m, 2 H, arom.); 3.60 (m, 4 H, N=(CH₂-CH₂)₂=O); 3.30 (m, 4 H, Ph-(CH₂)₂-CH₂-O-CH₂); 2.65 (t, 2 H, J = 6, Ph-CH₂); 2.48 (m, 2 H, N=(CH₂-CH₂)₂=O); 1.83 (m, 2 H, Ph-CH₂CH₂); 1.51 (m, 2 H, Ph-(CH₂)₃-O-CH₂-CH₂); 1.21 (s, 6 H, 2 CH₃); 0.38 (m, 2 H, CH₂-Si); 0.01 (m, 21 H, 7 Si-CH₃). m/z (El und Cl) : 553 (M⁺); gemäss Massenspektrum sind in geringen Mengen noch die Verbindungen mit 333 (M⁺); 331 (M⁺); 238 (M⁺) vorhanden. Der Wert M = 238 ist einer Siloxankette zugeordnet.

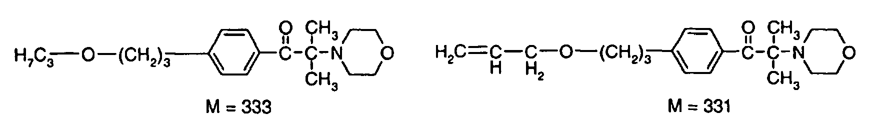

### Beispiel 20

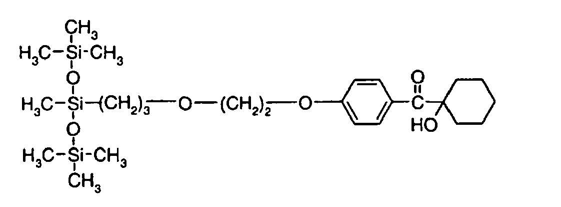

Die Verbindung des Beispiels 20 wird nach der in Beispiel 1 beschriebenen Methode erhalten, wobei 1 Molequivalent [4-(2-Allyloxy-ethoxy)-phenyl]-(1-hydroxy-cyclohexyl)-methanon und 1 Molequivalent 1,1,1,3,5,5,5-Heptamethyltrisiloxan eingesetzt werden.
U.V. (CH₃CN) max. bei 274 nm (ε 11'211). ¹H NMR (CDCl₃): 8.01 (m, 2 H, arom.); 6.87 (m, 2 H, arom.); 4.07 (m, 2 H, Ph-OCH₂); 3.71 (m, 2 H, Ph-O(CH₂)₂-O-CH₂); 3.40 (m, 2 H, Ph-OCH₂CH₂); 1.95 (m, 2 H, Ph-O-(CH₂)₂-OCH₂-CH₂); 1.68-1.20 (m, 11 H, -C₆H₁₁); 0.38 (m, 2 H, CH₂-Si); 0.01 (m, 21 H, 7 Si-CH₃). m/z (El und Cl): 526 (M⁺); gemäss Massenspektrum sind in geringen Mengen ausserdem die Verbindungen 304 (M⁺)(2 Signale); 264 (M⁺) 238 (M⁺) vorhanden. Die Werte M = 264 und 238 sind Siloxanketten zugeordnet.

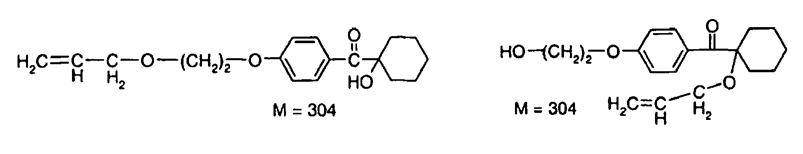

### Beispiel 21 Härtung eines UV-härtbaren Klarlacks

Ein UV-härtbarer Klarlack wird durch Mischen der folgenden Komponenten hergestellt:

| | |
|---|---|
| 50.0 | Teile eines difuntkionellen Urethane Acrylates (^{RTM}Actylan 200, Akcros) |
| 25.0 | Teile Tripropylengylkoldiacrylat (SR 306, Cray Valley) |
| 15.0 | Teile Trimethylolpropantriacrylat (UCB) |
| 10.0 | Teile Dipentaerythrol pentaacrylate (SR 399, Cray Valley) |

Dieser Mischung werden 2% des Photoinitiators aus Beispiel 1 zugegeben. Die Mischung wird auf eine weisse Spanplatte aufgetragen und mit einem UV-Prozessor unter zwei 80 W/cm Lampen bei einer Bandgeschwindigkeit von 3 m/min gehärtet. Es wird ein klebfreier gehärteter Film von ca. 50 µm Dicke erhalten. 30 Minuten nach der Härtung wird die Pendelhärte nach König (DIN 53157) in Sekunden bestimmt. Je höher der Wert, desto grösser ist die Härte der vernetzten Oberfläche. Ausserdem wird der statische Wasserkontaktwinkel (0) bestimmt. Verwendet wird dazu ein Kontaktwinkelmesssystem G10 von Krüss. Dabei wird nach der Härtung der Formulierung ein Wassertropfen auf diese aufgebracht. Der Kontaktwinkel wird bestimmt vom Kräftegleichgewicht an der Dreiphasengrenze (Luft/Wasser/Beschichtung). Ein Computerprogramm passt das Profil des liegenden Wassertropfens an eine allgemeine Kegelschnittgleichung an. Die Ableitung dieser Gleichung an der Basislinie ergibt die Steigung im Dreiphasenkontaktpunkt und somit den Kontaktwinkel. Je grösser der gemessene Kontaktwinkel, desto besser sind die Feuchtigkeitsbeständigkeit und Kratzfestigkeit der gehärteten Oberfläche. (Folgenden Publikationen sind weitere Erläuterungen im Hinblick auf die Bestimmung von Kontaktwinkeln zu entnehmen: "Contact Angle, Wettability, and Adhesion", Advances in Chemistry Series 43, Am. Chem. Soc. 1964; Benutzerhandbuch von Krüss, Drop Shape Analysis, Krüss GmbH, Hamburg 1997; G. Hirsch "Bestimmung der Oberflächenspannung von Festkörpern aus Randwinkelmessungen und ihre Bedeutung bei Benetzungsproblemen", Chemie-Ing.-Techn 40.Jahrg. 1968, Heft 13, 639-645.)
Es wird eine Pendelhärte von 130 s gemessen, der Kontaktwinkel θ beträgt 81°.

### Beispiel 22 Härtung eines UV-/thermisch-härtbaren Systems (Dual Cure)

Ein "Dual-Cure" Klarlack wird durch Mischen der folgenden Komponenten hergestellt:

| | |
|---|---|
| 21.1 | Teile eines hydroxyfunktionellen Poyacrylates (^{RTM}Desmophen LS 2009/1, Bayer AG) |
| 32.3 | Teile eines Urethanacrylates basierend auf Isocyanurat in 80% Butylacetat |
| | (^{RTM}Roskydal FWO 2518C, Bayer AG) |
| 0.3 | Teile Verlaufhilfsmittel in 10% Xylol (^{RTM}Baysilone OL 17, Bayer AG) |
| 0.3 | Teile Verlaufhilfsmittel (^{RTM}Modaflow, Monsanto) |
| 26.0 | Teile 1-Methoxy-2-propanol (Fluka Chemicals) |
| 0.5 | Teile Verlaufhilfsmittel (^{RTM}Byk 306, Byk-Chemie) |
| 11.2 | Teile Urethanacrylat mit Isocyanatgruppen (^{RTM}Roskydal FWO 2545 E, Bayer AG) |

Dieser Mischung werden 2.635% des Photoinitiators aus Beispiel 1 , 0.375% Bis(2,4,6-trimethylbenzoyl)phenylphosphinoxid (^{RTM}Irgacure 819, Ciba Spezialitätenchemie), 1.5% einer Mischung aus 2-[4-[(2-Hydroxy-3-dodecyloxypropyl)oxy]-2-hydroxypehnyl]-4,6-bis(2,4-dimethylphenyl)-1,3,5-triazin und 2-[4-[(2-Hydroxy-3-tridecyloxypropyl)oxy]-2-hydroxyphenyl]-4,6-bis(2,4-dimethylphenyl)-1,3,5-triazin (^{RTM}Tinuvin 400) und 1% einer Mischung aus Bis(1,2,2,6,6-pentamethyl-4-piperidinyl)sebacat und 1-(Methyl)-8-(1,2,2,6,6-pentamethyl-4-piperidinyl)-sebacate (^{RTM}Tinuvin 292, Ciba Spezialitätenchemie) zugegeben. Die Mischung wird auf eine weiss-beschichtetes Aluminiumblech aufgetragen, 5 Minuten bei Raumtemperatur luftgetrocknet und auf einer Wärmeplatte während 10 Minuten auf 80°C erhitzt. Die Belichtung wird danach mit einem UV-Prozessor unter zwei 120 W/cm Lampen bei einer Bandgeschwindigkeit von 5 m/min durchgeführt. Es wird ein klebfreier gehärteter Film von ca. 40 µm Dicke erhalten. 45 Minuten nach der Härtung wird die Pendelhärte nach König (DIN 53157) in Sekunden bestimmt. Je höher der Wert, desto grösser ist die Härte der vernetzten Oberfläche. Weiterhin wird der statische Wasserkontaktwinkel (0), wie in Beispiel 13 beschrieben, mit einem Kontaktwinkelmesssystem G10 von Krüss bestimmt. Je grösser der gemessene Kontaktwinkel, desto besser sind die Feuchtigkeitsbeständigkeit und Kratzfestigkeit der gehärteten Oberfläche. Es wird eine Pendelhärte von 85 s gemessen, der Kontaktwinkel 0 beträgt 92°.

### Beispiel 23 Siloxanhaltiger Photoinitiator als Verlaufshilfsmittel

Eine Formulierung wird durch Mischen der folgenden Komponenten hergestellt:
57.0 Teile eines hexafunktionellen aliphatischen Urethanacrylates (der Firma UCB)
13.0 Teile Hexandioldiacrylate (der Firma UCB)

In dieser Formulierung werden 2% der Verbindung aus Beispiel 13 gelöst. Die Formulierung wird anschliessend mit einer 100 mm Spaltrakel auf eine weiss grundierte Spanplatte appliziert und der Kontaktwinkel der Beschichtung gegen Wasser bestimmt (Beschreibung der Kontakwinkelmessung vgl. Beispiel 21). Dazu wird ein Wassertropfen eines bestimmten Volumens auf die beschichtete Oberfläche aufgebracht und mittels einer speziellen Optik und einem Computerprogramm der Winkel θ einer an die Grenzfläche des Tropfens angelegten Tangente zur Oberfläche gemessen. Je grösser der Kontaktwinkel, desto besser ist der Verlauf der Beschichtung auf dem entsprechenden Substrat (in diesem Fall eine weisse Spanplatte), d.h. desto niedriger ist die Oberflächenspannung. Der Kontaktwinkel θ für die vorliegende Formulierung beträgt 51.56°.

## Patentansprüche

1. Verfahren zur Herstellung von Beschichtungen mit kratzfesten beständigen Oberflächen, worin
(I) eine photohärtbare Formulierung enthaltend Vebindung: und
(A) eine ethylenisch ungesättigte polymeriserbare Vebindung; und
(B) 0.05 - 15 Gewichts%, vorzugsweise 0,1 - 5 Gewichts%, bezogen auf das Gewicht der Formulierung, eines Photoinitiators;
bereitet wird;
wobei die Formulierung als Photoinitiator (B) mindestens einen oberflächenaktiven Photoinitiator der Formel I enthält, welcher sich an der Oberfläche der Formulierung
anreichert, der Oberfläche der Formulierung 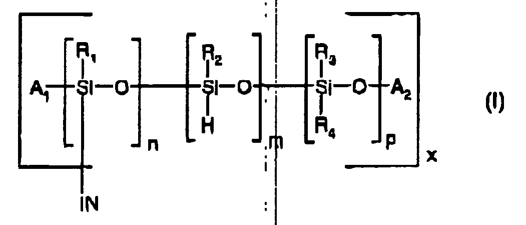 wobei die Einheiten der Formeln Ia, Ib und/oder Ic 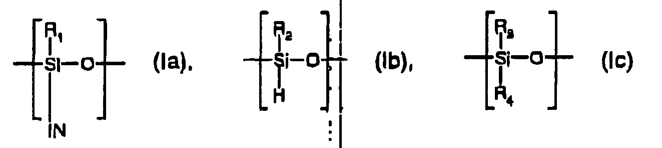 statistisch oder in Blöcken angeordnet sind, und worin
n für eine Zahl von 1 bis 100 steht;
m eine Zahl von 0 bis 100 darstellt;
p eine Zahl von 0-1000 ist:
x r die Zahl 1 oder 2 steht
A₁ C₁-C₁₈-Alkyl oder einen Rest der Formel 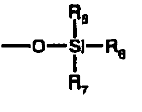 bedeutet;
**A₂** C₁-C₁₈-Alkyl oder einen Rest der Formel 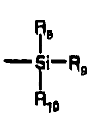 darstellt;
oder A₁ und A₂ zusammen eine Einfachbindung bedeuten;
**R₁, R₂, R₃, R₅, R₆, R₇, R₈, R₉ und R₁₀** unabhängig voneinander C₁-C₁₈-Alkyl, Phenyl, C₂-C₈-Hydroxyalkyl, C₂-C₈-Aminoalkyl oder C₅-C₈-Cycloalkyl bedeuten;
**R₄** C₁-C₁₈-Alkyl; C₁-C₁₈-Alkyl substituiert mit Hydroxy, C₁-C₁₂-Alkoxy, Halogen, C₃-C₈-Cycloalkyl und/oder N(R₁₁)(R₁₂) ist; oder R₄ Phenyl; Phenyl substituiert mit C₁-C₁₂-Alkyl, C,-C₁₂-Alkoxy, Halogen, Hydroxy und/oder N(R₁₁)(R₁₂) darstellt; oder R₄ C₅-C₈-Cycloalkyl ist; **R₁₁** und **R₁₂** unabhängig voneinander für Wasserstoff, C₁-C₁₂-Alkyl oder C₁-C₁₂-Hydroxyalkyl stehen, oder R₁₁ und R₁₂ zusammen C₂-C₈-Alkylen bedeuten, welches durch ein O-Atom unterbrochen sein kann;
IN wenn x 1 bedeutet, für einen Rest der Formel 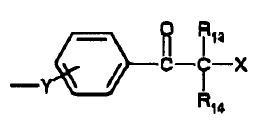 steht; oder
IN wenn x 2 bedeutet, einen Rest der Formel 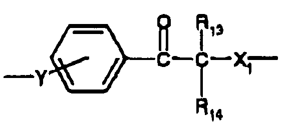 darstellt;
**R₁₃** und **R₁₄** unabhängig voneinander C₁-C₁₂-**Alkyl**, C₂-C₈-Alkenyl, C₅-C₈-Cycloalkyl, Phonyl-C₁-C₃-alkyl bedeuten; oder **R**₁₃ und **R**₁₄ zusammen C₂-C₈-Alkylen, C₃-C₉-Oxaalkylen oder C₃-C₉-Azaalkylen bedeuten
**Y** -(CH₂)ₐ-, -(CH₂)ₐ-O-, -O-(CH₂)ₐ-O-, -(CH₂)_{b}-O-(CH₂)ₐ-, -(CH₂)_{b}-O-(CH₂)ₐ-O-, -(CH₂)ₐ-N(R₁₂)-, -(CH₂)_{b}-O-(CH₂)ₐ-N(R₁₂)-, -(C₂-C₁₀-Alkenylen)-O-, -(C₂-C₁₀-Alkenylen)-N(R₁₂)-, -(C₂-C₁₀-Alkenylen)-O-(CH₂)ₐ-O- oder -(C₂-C₁₀-Alkenylen)-O-(CH₂)ₐ-N(R₁₂)- bedeutet;
**a** und **b** unabhängig voneinander für eine Zahl 0 bis 10 stehen;
**X** für OR₁₅ oder N(R₁₆)(R₁₇) steht;
**R₁₆** Wasserstoff, C₁-C₄-Alkyl, C₂-C₈-Alkenyl oder C₁-C₄-Alkanoyl bedeutet;
**R₁₆** und **R₁₇** unabhängig voheinander Wasserstoff, C₁-C₁₂-Alkyl oder C₂-C₆-Alkenyl bedeuten; oder R₁₆ und R₁₇ zusammen für C₄-C₆-Alkylen stehen und zusammen mit dem Stickstoffatom, an welches sie gebunden sind, einen 5- oder 6-gliedrigen Ring bilden, welcher durch O oder N(R₁₂) unterbrochen sein kann; und
**X₁** für einen Rest -O-, -O-(CH₂)ₐ- oder -N(R₁₂)-(CH₂)ₐ- steht;
wobei die Formulierung neben dem oberflächenaktiven Photoinitiator der Formel I keine siloxanmodifizierten Harze enthält;
(II) diese Formulierung auf einen Träger aufgebracht wird; und
(III) die Härtung der Formulierung entweder
nur durch Bestrahlung mit elektromagnetischer Strahlung der Wellenlänge 200-600 nm erfolgt, oder
durch Bestrahlung mit elektromagnetischer Strahlung der Wellenlänge 200-600 nm und vorheriger, gleichzeitiger und/oder anschliessender thermischer Härtung durchgeführt wird.

2. Verfahren nach Anspruch wobei die Formulierung als Photoinitiator (B) mindestens einen oberflächenaktiven Photoinitiator der Formel I enthält, welcher sich an der Oberfläche der Formulierung anreichert, worin
**n** für eine Zahl von 1 bis 10 steht;
**m** eine Zahl von 0 bis 25 darstellt;
**p** eine Zahl von 0 bis 25 ist;
**A₁** C₁-C₄-Alkyl oder einen Rest der Formel 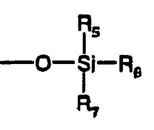 bedeutet;
**A₂** C₁-C₄-Alkyl oder einen Rest der Formel 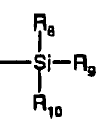 darstellt;
oder A₁ und A₂ zusammen eine Einfachbindung bedeuten;
R₁, R₂, R₃, R₅, R₆, R₇, R₈, R₉ und R₁₀ unabhängigen voneinander C1-C4-Alkyl bedeuten; R₄ C₁-C₄-Alkyl ist;
R₁₃ und R₁₄ unabhängigen voneinander C₁-C₄-Alkyl bedeuten; oder R13 und R₁₄ zusammen C₂-C₈-Alkylen bedeuten;
Y -(CH₂)ₐ-O-, -(CH₂)_{b}-O-(CH₂)ₐ- oder -(CH₂)_{b}-O-CH₂)ₐ-O- bedeutet;
a und b unabhängigen voneinander für eine Zahl 2 oder 3 stehen;
R₁₅ Wasserstoff ist;
R₁₆ und R₁₇ zusammen für C₄-C₅-Alkylen stehen und zusammen mit dem Stickstoffatom, an welches sie gebunden sind, einen 6-gliedrigen Ring bilden, welcher durch O unterbrochen ist; und
X₁ für einen Rest -O-(CH₂)ₐ- steht. Wellenlänge 200-600 nm und vorheriger, gleichzeitiger und/oder anschliessender thermischer Härtung durchgeführt wird.

3. Verfahren nach Anspruch 1, worin die photohärtbare Formulierung als weitere Komponente mindestens eine thermisch vernetzbare Verbindung (C) enthält, und die Härtung der Formulierung durch Bestrahlung mit elektromagnetischer Strahlung der

4. Verfahren nach Anspruch 3, worin die thermisch vernetzbare Verbindung (C) ein Bindemittel auf Basis eines Polyacrylats mit Melamin oder Melaminderivats, oder ein System auf Basis eines Polyacrylatpolyols oder/und Polyesterpolyols mit einem unblockierten Polyisocyanat oder Polyisocyanurat, ist.

5. Oberflächenaktiver Photoinitiator der Formel

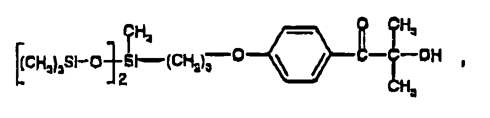

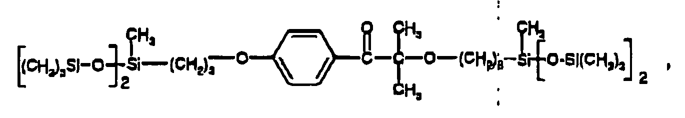

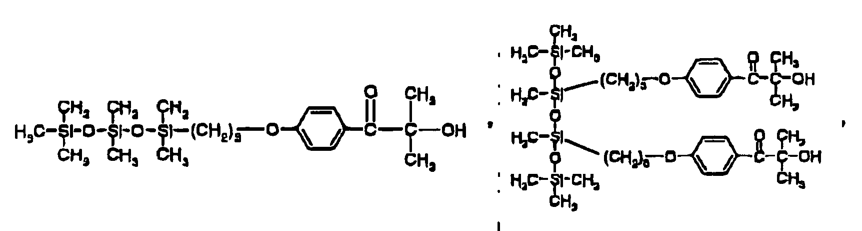

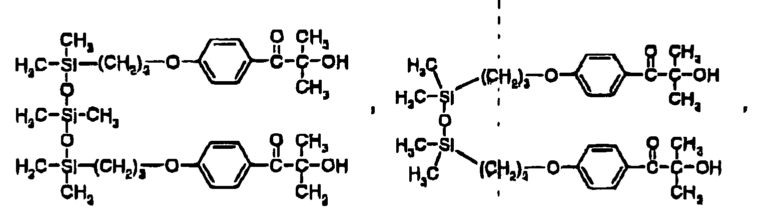

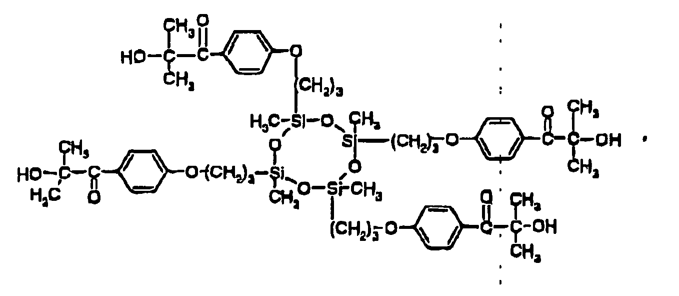

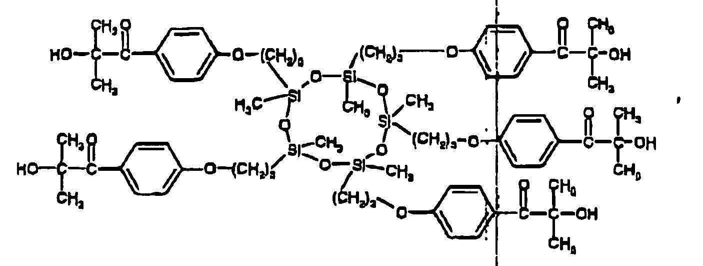

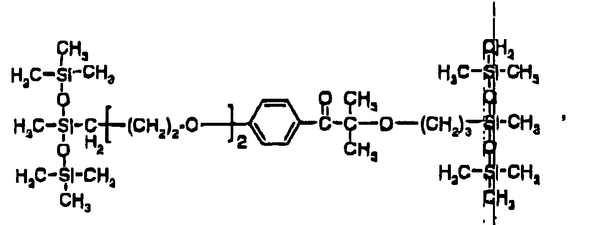

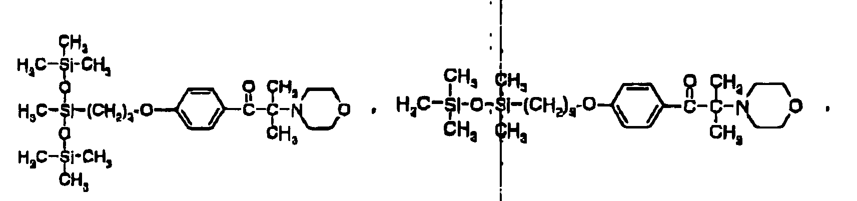

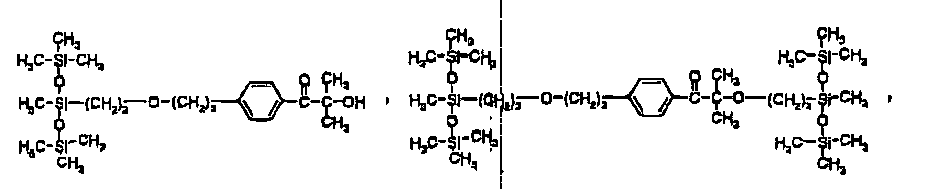

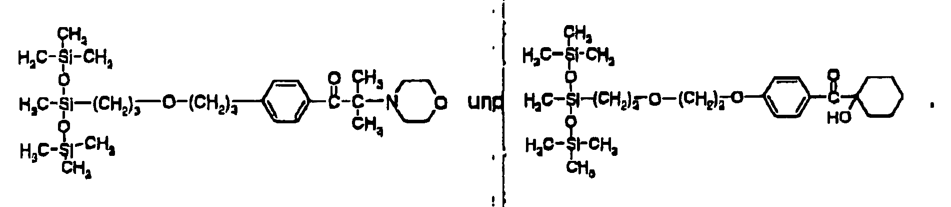

6. Photoinitiatormischungen enthaltend 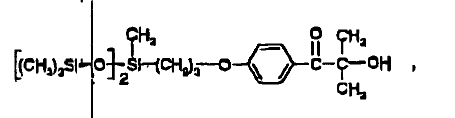 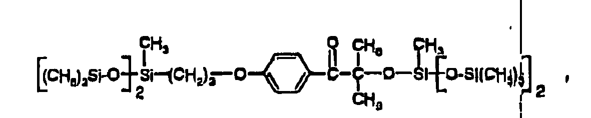 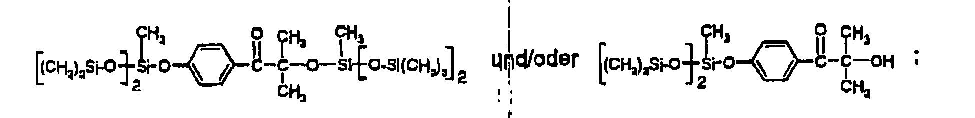 oder Mischungen enthaltend 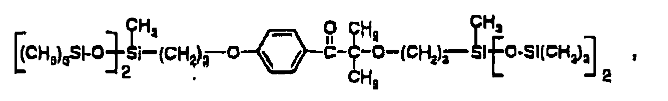 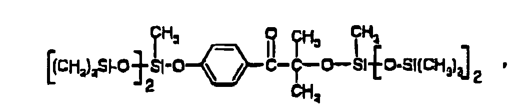 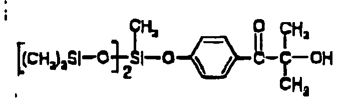 und/oder 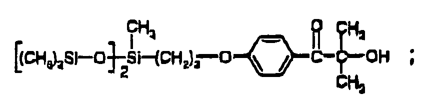 oder Mischungen enthaltend 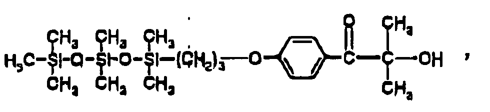 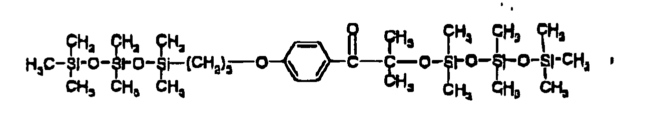 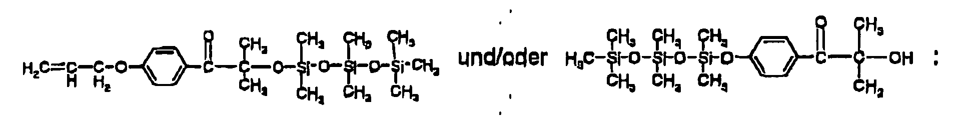 oder Mischungen enthaltend 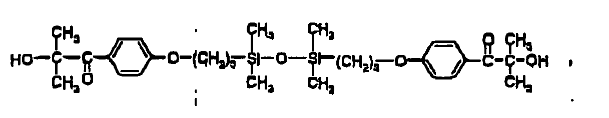 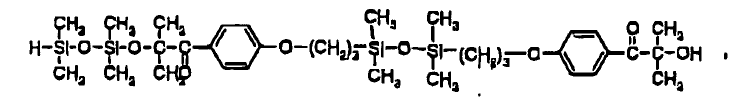 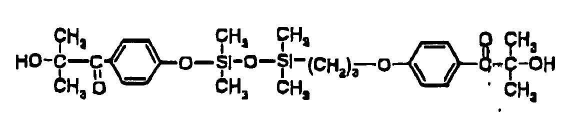 oder/und 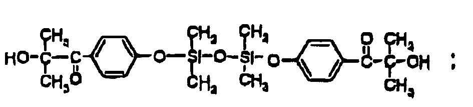 oder Mischungen enthaltend Verbindungen der Formel 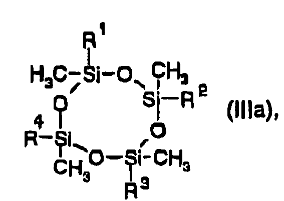 worin 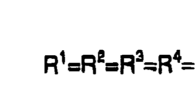 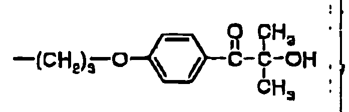 Verbindungen der Formel IIIa, worin R¹=R²=R³= 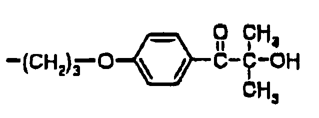 und R⁴=H, und/oder Verbindungen der Formel IIIa, worin R¹=R²=R³= 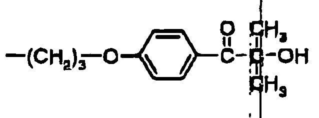 und R⁴=-(CH₂)₂CH₃; oder Mischungen enthaltend Verbindungen der Formel IIIb 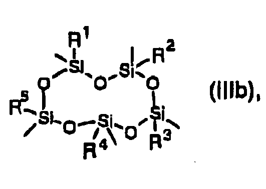 worin R¹=R²=R³=R⁴= R⁵= 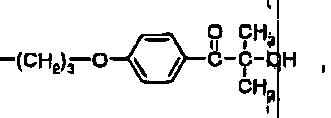 Verbindungen der Formel IIIb, worin R¹=R²=R³=R⁴= 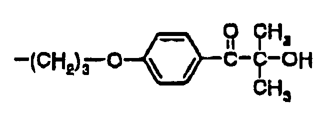 und R⁵=H und/oder Verbindungen der Formel IIIb, worin R¹=R²=R³= 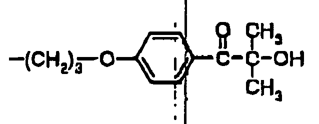 und R⁴=R⁵ = H: oder Mischungen enthaltend 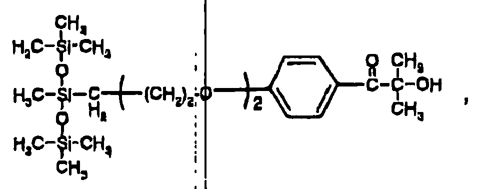 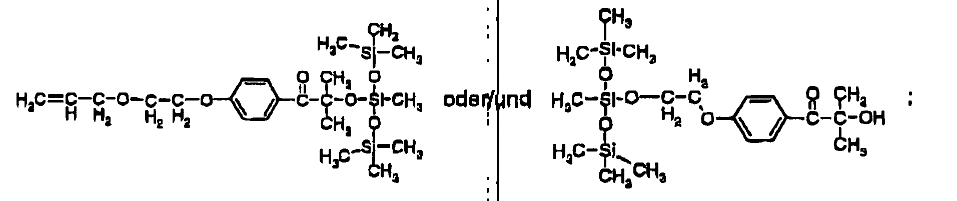 oder Mischungen enthaltend 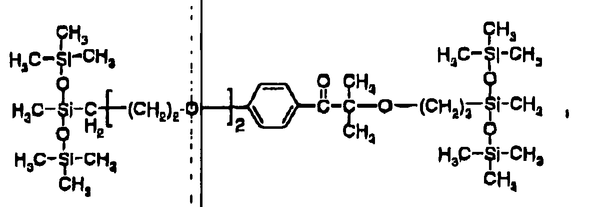 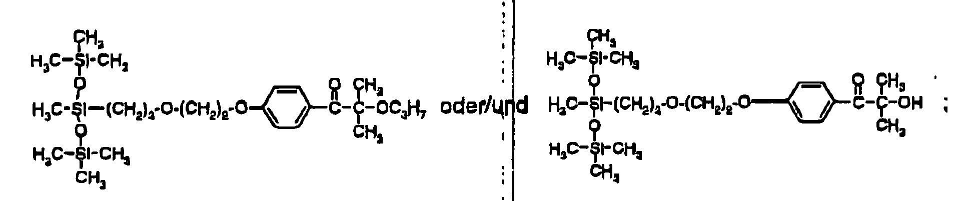 oder Mischungen enthaltend 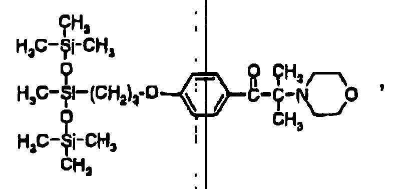 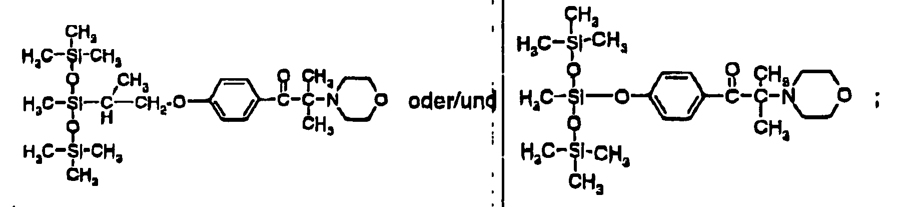 oder Mischungen enthaltend 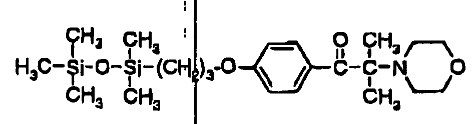 und 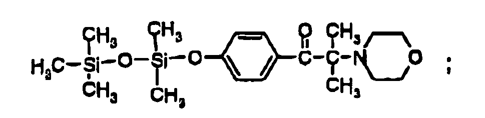 oder Mischungen enthaltend 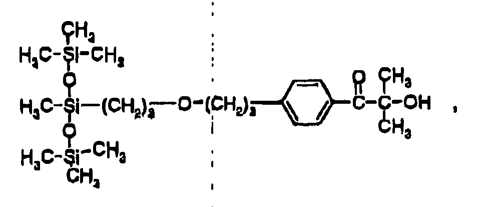 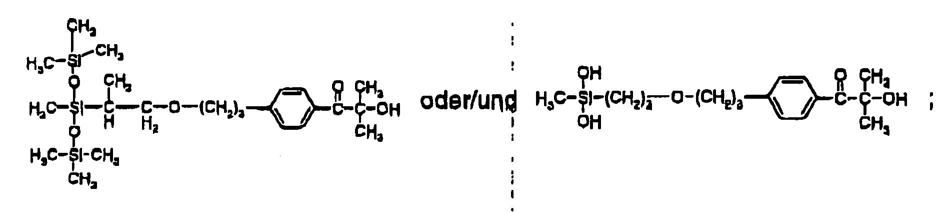 oder Mischungen enthaltend 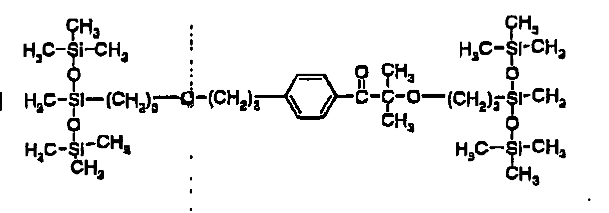 und

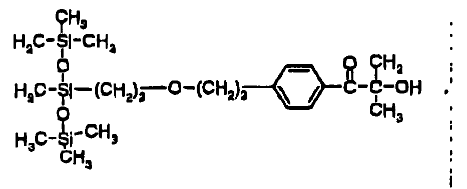

7. Verwendung von Verbindungen der Formel I als oberflächenaktive Photoinitiatoren für die Photopolymerisation von ethylenisch ungesättigten Verbindungen bzw. Gemischen, die solche Verbindungen enthalten wobei die Verbindungen der Formel in einer Menge von 0.05 -15 Gewlchts%, vorzugsweise 0.1 - 5 Gewichts%, bezogen auf das Gewicht des Gemisches, verwendet werden;
vorausgesetzt, dass das Gemisch neben dem oberflächenaktiven Photoinitiator keine siloxanmodifizierten Harze enthält,

8. Zusammensetzung enthaltend
(A) mindestens eine ethylenisch ungesättigte radikalisch photopolymerisierbare Verbindung; und
(B) 0.05-15 Gewichts%, vorzugsweise 0.1-5 Gewichts%, bezogen auf das Gewicht der Zusammensetzung, mindestens eines oberflächenaktiven Photoinitiators der Formel I, vorausgesetzt, dass die Zusammensetzung neben dem Photoinitiator keine siloxanmodifizierten Harze enthält.

9. Verfahren nach Anspruch 1 zur Herstellung von pigmentierten und nichtpigmentierten Lacken, Pulverlacken, Verbundmassen oder Glasfaserkabelbeschichtungen.

10. Beschichtetes Substrat, das auf mindestens einer Oberfläche mit einer Zusammensetzung nach Anspruch 8 beschichtet ist.

## Claims

1. A process for the preparation of coatings having scratch-resistant durable surfaces, in which
(I) a photocurable formulation comprising
(A) an ethylenically unsaturated polymerisable compound; and
(B) from 0.05% to 15% by weight, preferably from 0.1 to 5% by weight, based on the weight of the formulation, of a photoinitiator;
is prepared;
the formulation comprising as photoinitiator (B) at least one surface-active photoinitiator of formula I that is concentrated at the surface of the formulation, 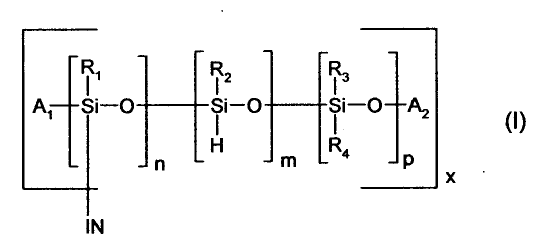 wherein the units of formulae la, Ib and/or Ic 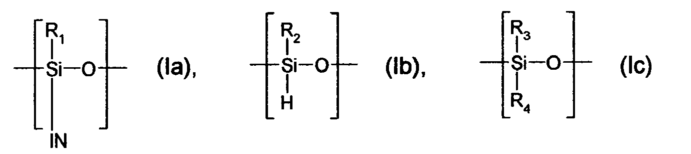 are arranged randomly or in blocks, and wherein
**n** is a number from 1 to 100;
**m** is a number from 0 to 100;
**p** is a number from 0 to 1000;
**x** is the number 1 or 2;
**A₁** is C₁-C₁₈alkyl or a radical of formula 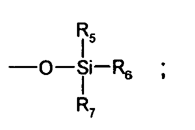
**A₂** is C₁-C₁₈alkyl or a radical of formula 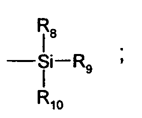
or A₁ and A₂ together are a single bond;
**R₁, R₂, R₃, R₅, R₆, R₇, R₈, R₉** and **R₁₀** are each independently of the others C₁-C₁₈alkyl, phenyl, C₂-C₆hydroxyalkyl, C₂-C₆aminoalkyl or C₅-C₈cycloalkyl;
**R₄** is C₁-C₁₈alkyl; C₁-C₁₈alkyl substituted by hydroxy, C₁-C₁₂alkoxy, halogen, C₃-C₈cycloalkyl and/or by N(R₁₁)(R₁₂); or R₄ is phenyl; phenyl substituted by C₁-C₁₂alkyl, C₁-C₁₂alkoxy, halogen, hydroxy and/or by N(R₁₁)(R₁₂); or R₄ is C₅-C₈cycloalkyl;
**R₁₁** and **R₁₂** are each independently of the other hydrogen, C₁-C₁₂alkyl or C₁-C₁₂hydroxyalkyl, or R₁₁ and R₁₂ together are C₂-C₈alkylene, which may be interrupted by an oxygen atom;
**IN** when x is 1, is a radical of formula 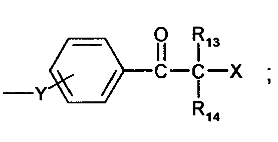 or
**IN** when x is 2, is a radical of formula 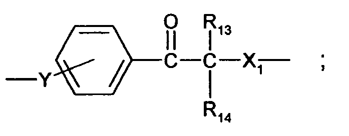
**R₁₃** and **R₁₄** are each independently of the other C₁-C₁₂alkyl, C₂-C₈alkenyl, C₅-Cₑcycloalkyl, phenyl-C₁-C₃alkyl; or R₁₃ and R₁₄ together are C₂-C₈alkylene, C₃-C₉oxaalkylene or C₃-C₉azaalkylene;
**Y** is -(CH₂)ₐ-, -(CH₂)ₐ-O-, -O-(CH₂)ₐ-O-, -(CH₂)_{b}-O-(CH₂)ₐ-, -(CH₂)_{b}-O-(CH₂)ₐ-O-, -(CH₂)ₐ-N(R₁₂)-, -(CH₂)_{b}-O-(CH₂),-N(R₁₂)-, -(C₂-C₁₀alkenylene)-O-, -(C₂-C₁₀alkenylene)-N(R₁₂)-, -(C₂-C₁₀alkenylene)-O-(CH₂)ₐ-O- or -(C₂-C₁₀alkenylene)-O-(CH₂)ₐ-N(R₁₂)- ;
**a** and **b** are each independently of the other a number from 0 to 10;
**X** is OR₁₅ or N(R₁₆)(R₁₇);
**R₁₅** is hydrogen, C₁-C₄alkyl, C₂-C₈alkenyl or C₁-C₄alkanoyl;
**R₁₆** and **R₁₇** are each independently of the other hydrogen, C₁-C₁₂alkyl or C₂-C₆alkenyl; or R₁₆ and R₁₇ together are C₄-C₅alkylene and, together with the nitrogen atom to which they are bonded, form a 5- or 6-membered ring, which may be interrupted by O or by N(R₁₂); and
**X₁** is a radical -O-, -O-(CH₂)ₐ- or -N(R₁₂)-(CH₂)ₐ- ;
wherein the formulation does not contain any siloxane-modified resins in addition to the surface-active photoinitator of formula I;
(II) that formulation is applied to a support; and
(III) the formulation is cured either
solely by irradiation with electromagnetic radiation of a wavelength of from 200 to 600 nm, or
by irradiation with electromagnetic radiation of a wavelength of from 200 to 600 nm and by prior, simultaneous and/or subsequent action of heat.

2. A process according to claim 1, in which the formulation comprises as photoinitiator (B) at least one surface-active photoinitiator of formula I that is concentrated at the surface of the formulation , wherein
**n** is a number from 1 to 10;
**m** is a number from 0 to 25;
**p** is a number from 0 to 25;
**A₁** is C₁-C₄alkyl or a radical of formula 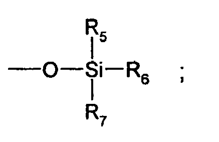
**A₂** is C₁-C₄alkyl or a radical of formula 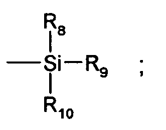
or A₁ and A₂ together are a single bond;
**R₁, R₂, R₃, R₅, R₆, R₇, R₈, R₉** and **R₁₀** are each independently of the others C₁-C₄alkyl;
**R₄** is C₁-C₄alkyl;
**R₁₃** and **R₁₄** are each independently of the other C₁-C₄alkyl; or R₁₃ and R₁₄ together are C₂-C₈alkylene;
**Y** is -(CH₂)ₐ-O-, -(CH₂)_{b}-O-(CH₂)ₐ- or -(CH₂)_{b}-O-(CH₂)ₐ-O- ;
**a** and **b** are each independently of the other the number 2 or 3;
**R₁₅** is hydrogen;
**R₁₆** and **R₁₇** together are C₄-C₅alkylene and together with the nitrogen atom to which they are bonded form a 6-membered ring interrupted by O; and
**X₁** is a radical -O-(CH₂)ₐ-.

3. A process according to claim 1, in which the photocurable formulation comprises as further component at least one thermally crosslinkable compound (C), and the curing of the formulation is carried out by irradiation with electromagnetic radiation of a wavelength of from 200 to 600 nm and by prior, simultaneous and/or subsequent action of heat.

4. A process according to claim 3, wherein the thermally crosslinkable compound (C) is a binder based on a polyacrylate with melamine or on a melamine derivative, or a system based on a polyacrylate polyol and/or polyester polyol with an unblocked polyisocyanate or polyisocyanurate.

5. A surface-active photoinitiator of formula 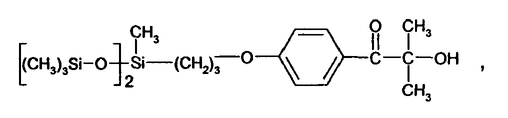 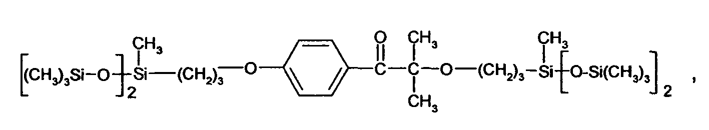 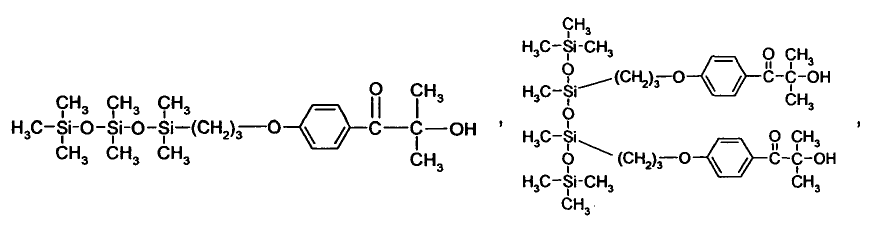 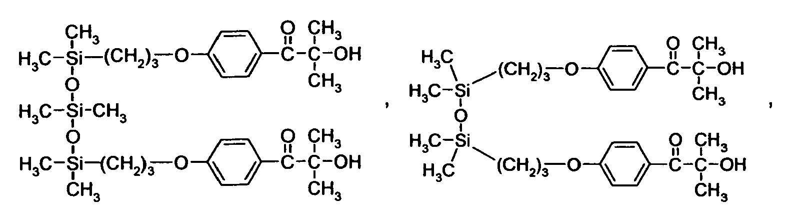 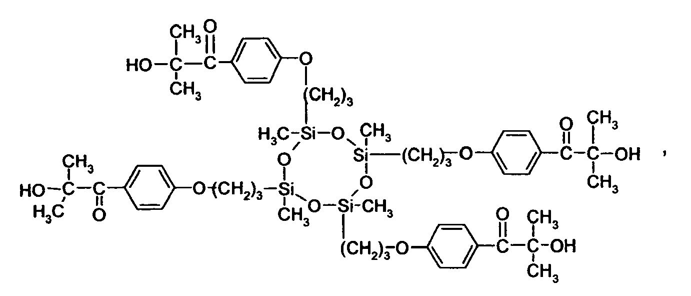 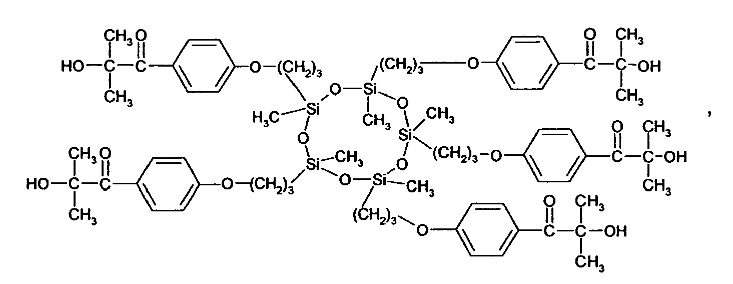 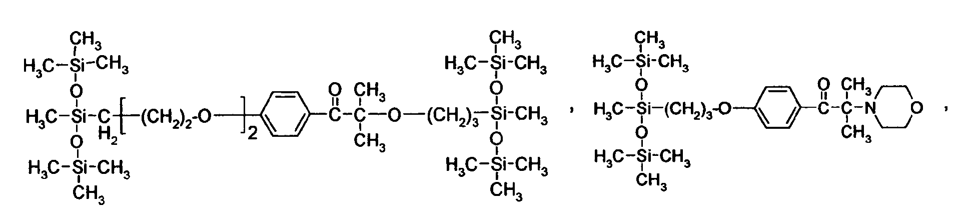 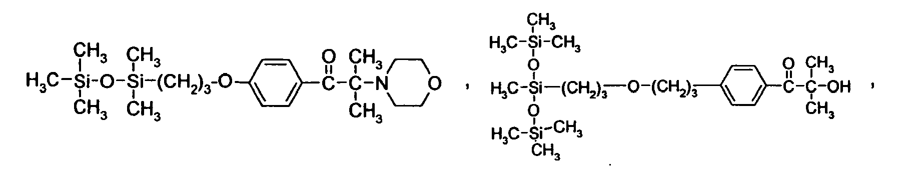 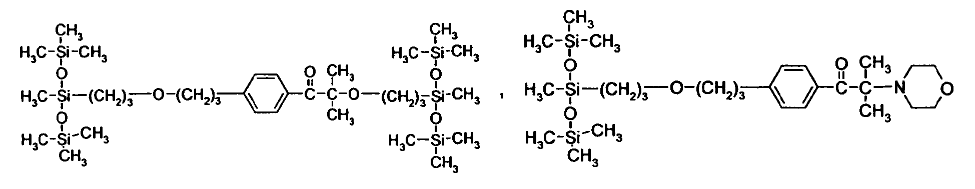 or

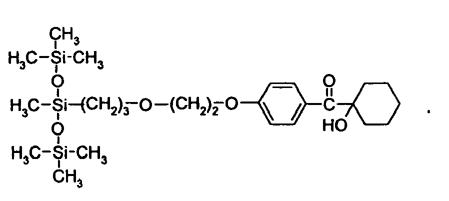

6. A photoinitiator mixture comprising 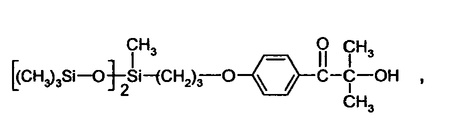 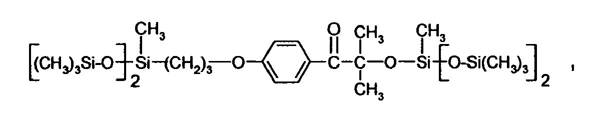 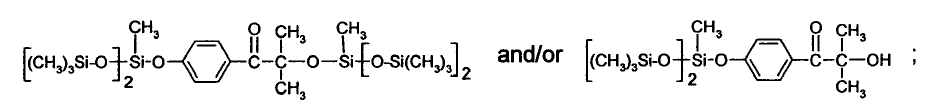 or a mixture comprising 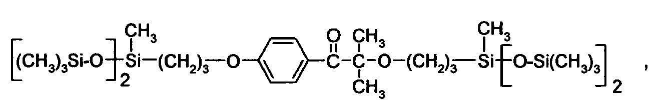 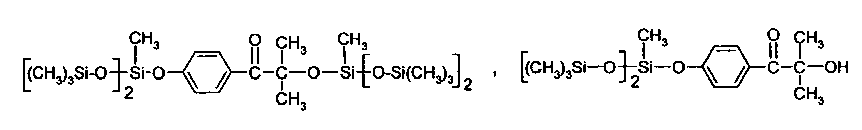 and/or 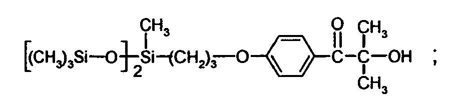 or a mixture comprising 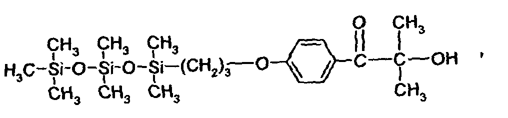 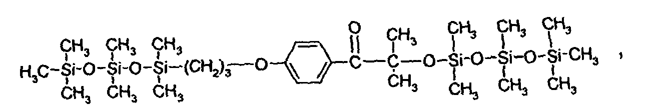 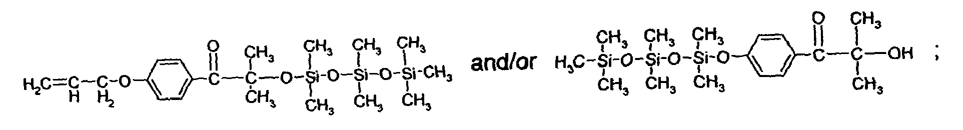 or a mixture comprising 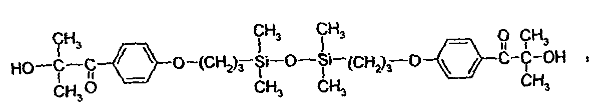 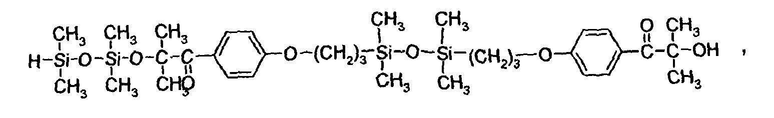 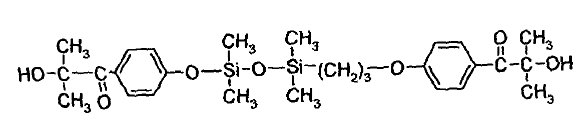 and/or 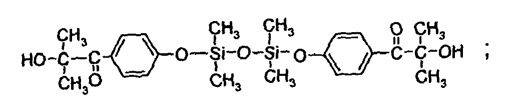 or a mixture comprising compounds of formule 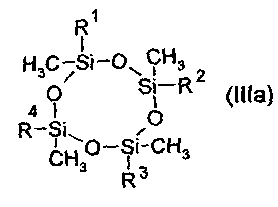 wherein R¹=R²=R³=R⁴= 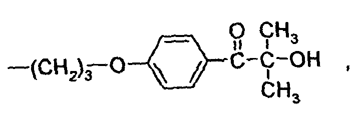 compounds of formula IIIa wherein R¹=R²=R³= 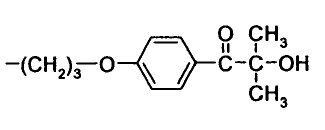 and R⁴= H, and/or compounds of formula IIIa wherein R¹=R²=R³= 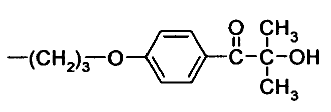 and R⁴ = -(CH₂)₂CH₃ ; or a mixture comprising compounds of formula IIIb 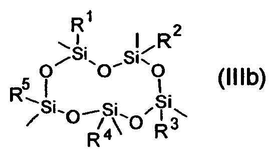 wherein R¹=R²=R³=R⁴=R⁵= 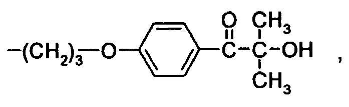 compounds of formula IIIb wherein R¹=R²=R³=R⁴= 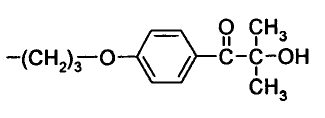 and R⁵= H and/or compounds of formula IIIb wherein R¹=R²=R³= 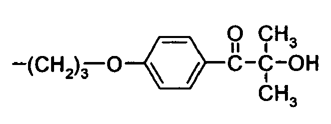 and R⁴ = R⁵= H; or a mixture comprising 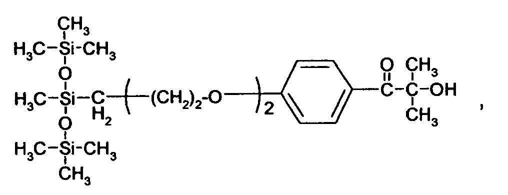 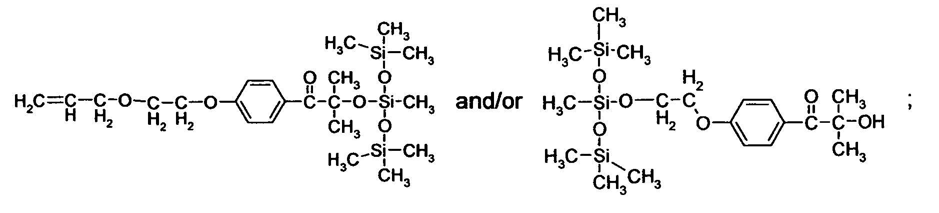 or a mixture comprising 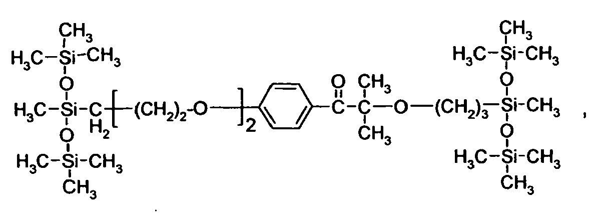 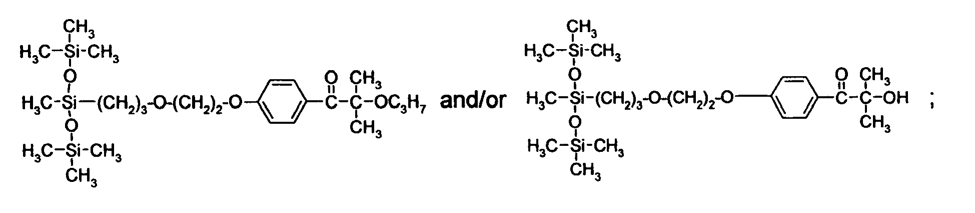 or a mixture comprising 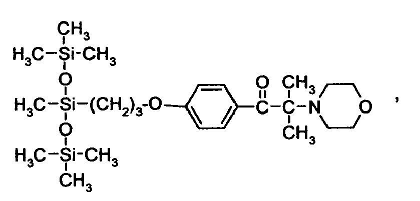 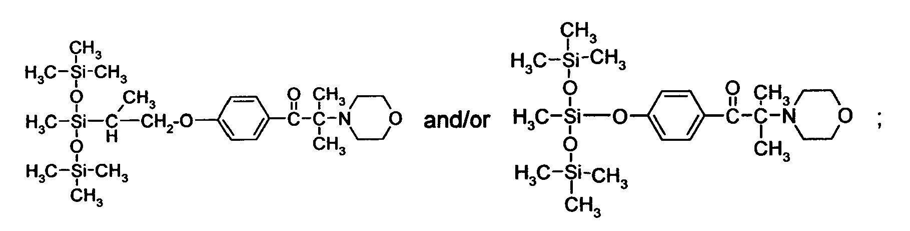 or a mixture comprising 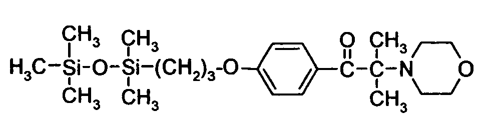 and 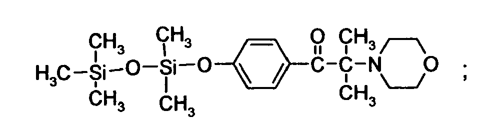 or a mixture comprising 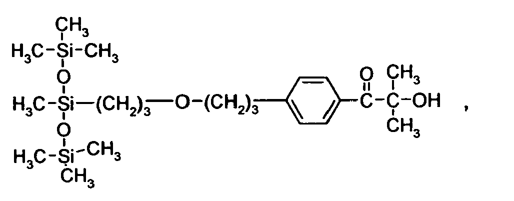 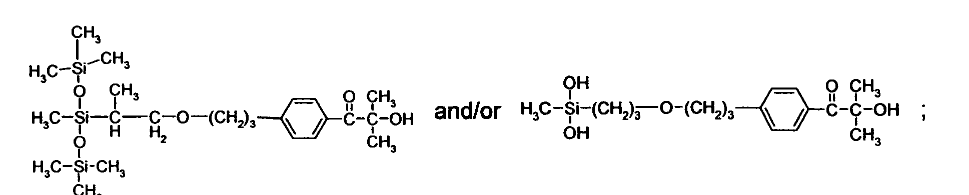 or a mixture comprising 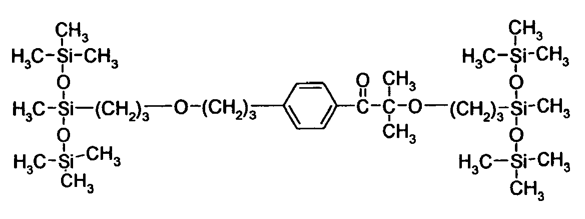 and

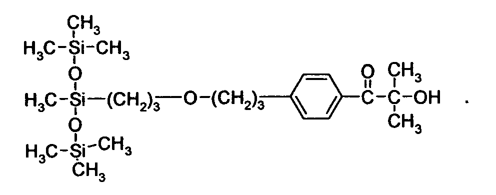

7. Use of compounds of formula I as surface-active photoinitiators for the photopolymerisation of ethylenically unsaturated compounds or mixtures comprising such compounds, wherein the compounds of formula I are used in an amount of from 0.05 to 15% by weight, preferably from 0.1 to 5% by weight, based on the weight of the mixture;
provided that the mixture does not contain any siloxane-modified resins in addition to the surface-active photoinitiator.

8. A composition comprising
(A) at least one ethylenically unsaturated free-radically photopolymerisable compound; and
(B) from 0.05 to 15% by weight, preferably from 0.1 to 5% by weight, based on the weight of the composition, of at least one surface-active photoinitiator of formula I, provided that the composition does not contain any siloxane-modified resins in addition to the photoinitiator.

9. A process according to claim 1 for the preparation of pigmented and non-pigmented surface-coatings, powder coating compositions, composites and glass fibre cable coatings.

10. A coated substrate that is coated on at least one surface with a composition according to claim 8.

## Revendications

1. Procédé de production de revêtements avec des surfaces résistant à la rayure, dans lequel on prépare
(I) une formulation photodurcissable contenant
(A) un composé polymérisable à insaturation éthylénique ; et
(B) 0,05% à 15% en poids, de préférence 0,1% à 5% en poids, par rapport au poids de la formulation, d'un photoamorceur ;
dans lequel la formulation contient, en tant que photoamorceur (B), au moins un photoamorceur tensioactif de formule I, qui s'accumule à la surface de la formulation, 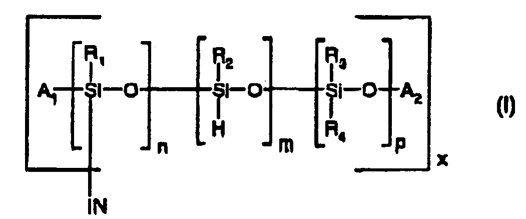 dans lequel les motifs de formules Ia, Ib et/ou Ic 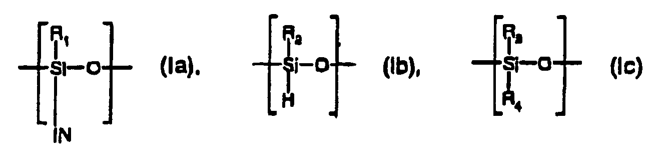 sont ordonnés de manière statistique ou séquencée, et dans lequel
n représente un nombre de 1 à 100 ;
m représente un nombre de 0 à 100 ;
p représente un nombre de 0 à 1 000 ;
x vaut 1 ou 2 ;
A₁ représente un groupe alkyle en C₁ à C₁₈ ou un groupe de formule 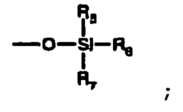
A₂ représente un groupe alkyle en C₁ à C₁₈ ou un groupe de formule 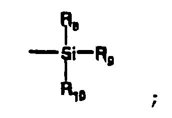 ou A₁ et A₂ représentent ensemble une liaison simple ;
R₁, R₂, R₃, R₅, R₆, R₇, R₈, R₉ et R₁₀ représentent, indépendamment les uns des autres, un groupe alkyle en C₁ à C₁₈, phényle, hydroxyalkyle en C₂ à C₆, aminoalkyle en C₂ à C₆ ou cycloalkyle en C₅ à C₈ ;
R₄ représente un groupe alkyle en C₁ à C₁₈ ;alkyle en C₁ à C₁₈ substitué par un groupe hydroxyle, un groupe alcoxyle en C₁ à C₁₂, un atome d'halogène, un groupe cycloalkyle en C₃ à C₈ et/ou N(R₁₁)(R₁₂) ; ou R₄ représente un groupe phényle ; phényle substitué par un groupe alkyle en C₁ à C₁₂, un groupe alcoxyle en C₁ à C₁₂, un atome d'halogène, un groupe hydroxyle et/ou N(R₁₁) (R₁₂) ; ou R₄ représente un groupe cycloalkyle en C₅ à C₈ ;
R₁₁ et R₁₂ représentent, indépendamment l'un de l'autre, un atome d'hydrogène, un groupe alkyle en C₁ à C₁₂ ou hydroxyalkyle en C₁ à C₁₂, ou R₁₁ et R₁₂ représentent ensemble un groupe alkylène en C₂ à C₈, qui peut être interrompu par un atome d'oxygène ;
IN si x vaut 1, représente un groupe de formule 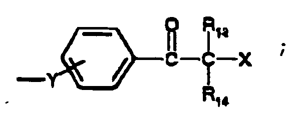 ou
IN si x vaut 2, représente un groupe de formule 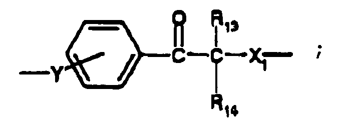
R₁₃ et R₁₄ représentent, indépendamment l'un de l'autre, un groupe alkyle en C₁ à C₁₂, alcényle en C₂ à C₈, cycloalkyle en C₅ à C₈, phénylalkyle en C₁ à C₃ ; ou R₁₃ et R₁₄ représentent ensemble un groupe alkylène en C₂ à C₈, oxalkylène en C₃ à C₉ ou azalkylène en C₃ à C₉ ;
Y représente un groupe -(CH₂)ₐ-, -(CH₂)ₐ-_{O}-, -O-(CH₂) ₐ-O- , (CH₂)_{b}-O-(CH₂)ₐ-, -(CH₂)_{b}-O-(CH₂)ₐ-O-, -(CH₂)ₐ-N(R₁₂)-, -(CH₂)_{b}-O-(CH₂)ₐ-N(R₁₂)-, -(alcénylène en C₂ à C₁₀)-O-, -(alcénylène en C₂ à C₁₀)-N(R₁₂)-, -(alcénylène en C₂ à C₁₀)-O-(CH₂)ₐ-O- ou -(alcénylène en C₂ à C₁₀)-O-(CH₂)ₐ-N(R₁₂)- ;
a et b représentent, indépendamment l'un de l'autre, un nombre de 0 à 10 ;
X représente OR₁₅ ou N(R₁₆)(R₁₇) ;
R₁₅ représente un atome d'hydrogène, un groupe alkyle en C₁ à C₄, alcényle en C₂ à C₈ ou alcanoyle en C₁ à C₄ ;
R₁₆ et R₁₇ représentent, indépendamment l'un de l'autre, un atome d'hydrogène, un groupe alkyle en C₁ à C₁₂ ou alcényle en C₂ à C₆ ; ou R₁₆ et R₁₇ représentent ensemble un groupe alkylène en C₄ à C₆ et, conjointement avec l'atome d'azote auquel ils sont liés, un cycle à 5 ou 6 éléments qui peut être interrompu par un atome d'oxygène ou un groupe N(R₁₂) ; et
X₁ représente un groupe -O-, -O-(CH₂)ₐ ou -N(R₁₂)-(CH₂)ₐ- ;
dans lequel la formulation ne contient aucune résine modifiée au siloxane en plus du photoamorceur tensioactif de formule I ;
(II) cette formulation est déposée sur un support ; et
(III) le durcissement de la formulation est réalisé
- uniquement par irradiation aux rayons électromagnétiques d'une longueur d'onde de 200 à 600 nm ou
- par irradiation aux rayons électromagnétiques d'une longueur d'onde de 200 à 600 nm et durcissement thermique préalable, simultané et/ou ultérieur.

2. Procédé selon la revendication 1, dans lequel la formulation contient, en tant que photoamorceur (B), au moins un photoamorceur tensioactif de formule I, qui s'accumule à la surface de la formulation, dans lequel
n représente un nombre de 1 à 10 ;
m représente un nombre de 0 à 25 ;
p représente un nombre de 0 à 25 ;
A₁ représente un groupe alkyle en C₁ à C₄ ou un groupe de formule 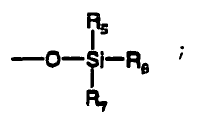
A₂ représente un groupe alkyle en C₁ à C₄ ou un groupe de formule 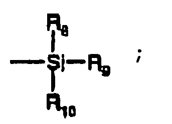 ou A₁ et A₂ représentent ensemble une liaison simple ;
R₁, R₂, R₃, R₅, R₆, R₇, R₈, R₉ et R₁₀ représentent, indépendamment les uns des autres, un groupe alkyle en C₁ à C₄ ;
R₄ représente un groupe alkyle en C₁ à C₄ ;
R₁₃ et R₁₄ représentent, indépendamment l'un de l'autre, un groupe alkyle en C₁ à C₄ ; ou R₁₃ et R₁₄ représentent ensemble un groupe alkylène en C₂ à C₈ ;
Y représente un groupe -(CH₂)ₐ-O-, -(CH₂)_{b}-O-(CH₂)ₐ- ou - -(CH₂)_{b}-O-(CH₂)ₐ-O- ;
a et b valent, indépendamment l'un de l'autre, 2 ou 3 ;
R₁₅ représente un atome hydrogène ;
R₁₆ et R₁₇ représentent ensemble un groupe alkylène en C₄ à C₆ et représentent, conjointement avec l'atome d'azote auquel ils sont liés, un cycle à 6 éléments qui est interrompu par un atome d'oxygène ; et
X₁ représente un groupe -O-(CH₂)ₐ-.

3. Procédé selon la revendication 1, dans lequel la formulation photodurcissable contient, en tant que composant supplémentaire, au moins un composé thermoréticulable (C), et le durcissement de la formulation est réalisé par irradiation aux rayons électromagnétiques d'une longueur d'onde de 200 à 600 nm et durcissement thermique préalable, simultané et/ou ultérieur.

4. Procédé selon la revendication 3, dans lequel le composé thermoréticulable (C) est un liant à base de polyacrylate avec de la mélamine ou un dérivé de mélamine, ou un système à base de polyacrylate-polyol et/ou de polyester-polyol avec un polyisocyanate ou polyisocyanurate non bloqué.

5. Photoamorceur tensioactif de formules

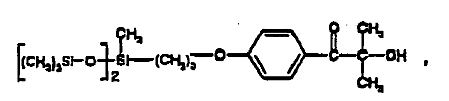

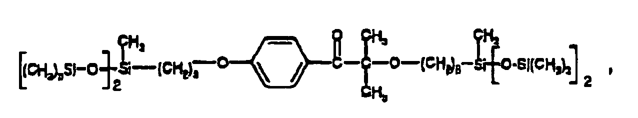

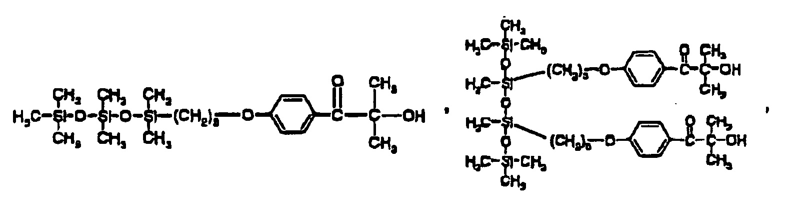

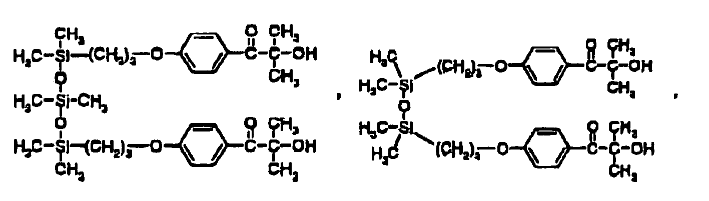

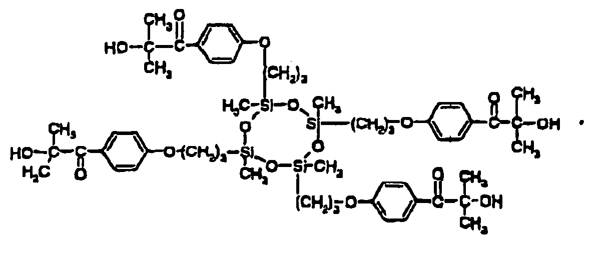

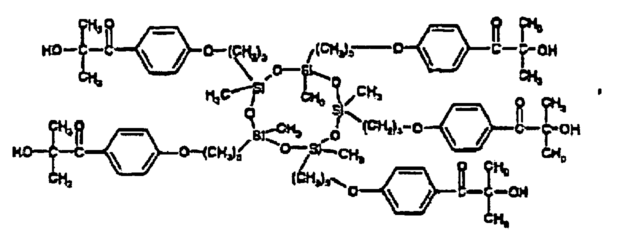

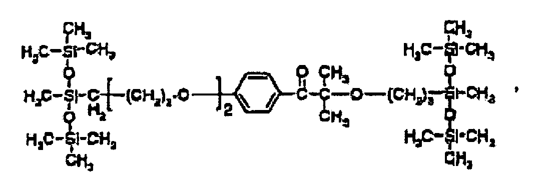

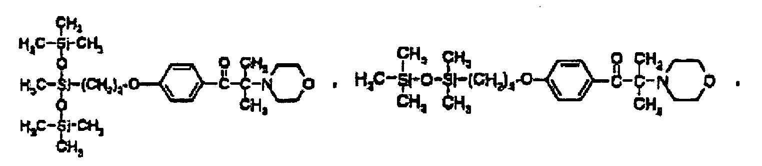

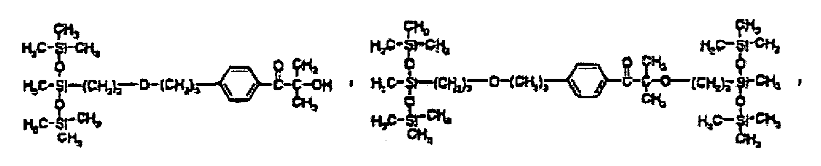

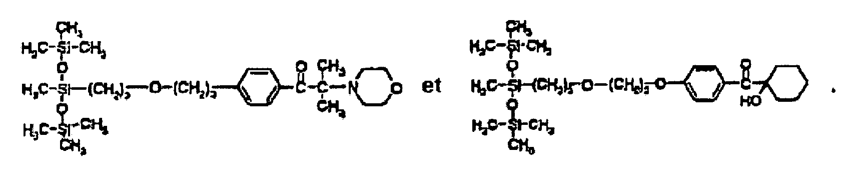

6. Mélanges de photoamorceurs contenant 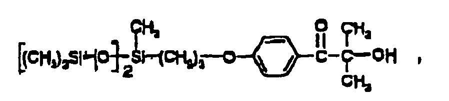 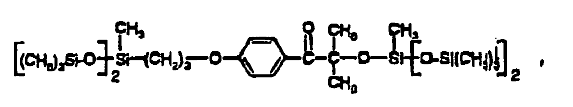 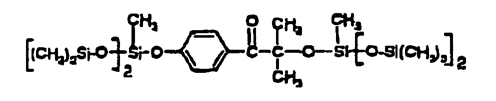 et/ou 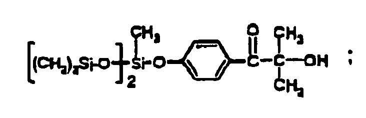 ou mélanges contenant 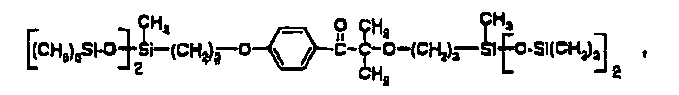 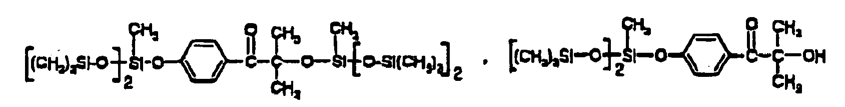 et/ou 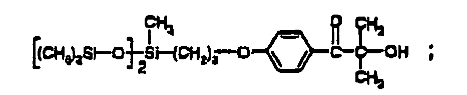 ou mélanges contenant 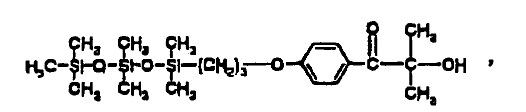 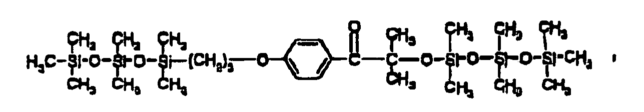 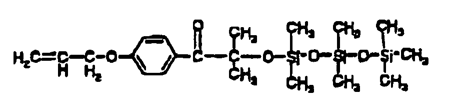 et/ou 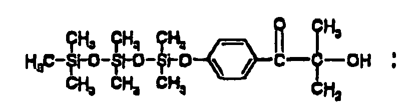 ou mélanges contenant 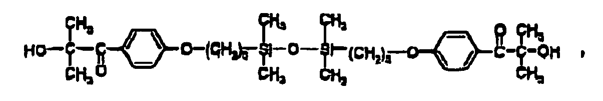 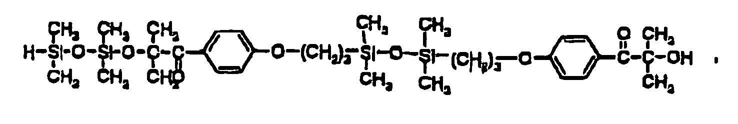 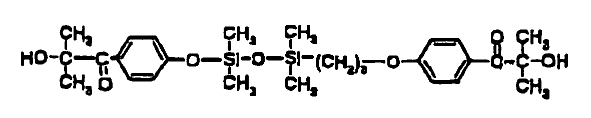 et/ou 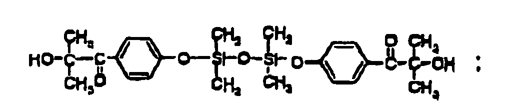 ou mélanges contenant des composés de formule : 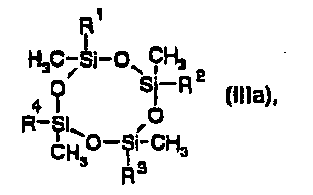 dans laquelle
R¹ = R² = R³ = R⁴ = 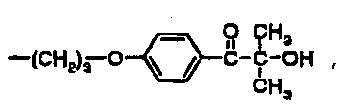 des composés de formule IIIa, dans laquelle
R¹= R² = R³ = 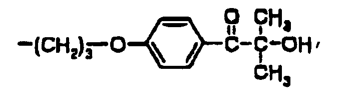 et R⁴ = H, et/ou des composés de formule IIIa, dans laquelle
R¹ = R² = R³ = 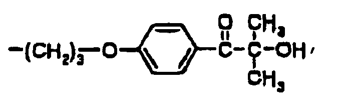 et
R⁴ = (CH₂)₂CH₃ ;
ou mélanges contenant des composés de formule IIIb 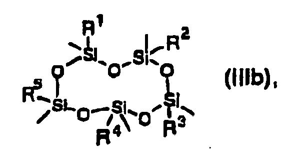 dans laquelle
R¹ = R² = R³ = R⁴ = R⁵ = 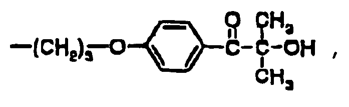 des composés de formule IIIb, dans laquelle
R¹ = R² = R³ = R⁴ = 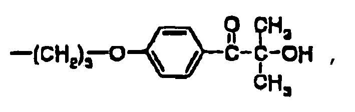 et R⁵ = H, et/ou des composés de formule IIIb, dans laquelle
R¹ = R² = R³ = 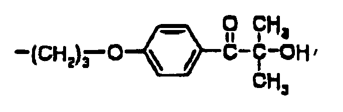 et R⁴ = R⁵ = H ;
ou mélanges contenant 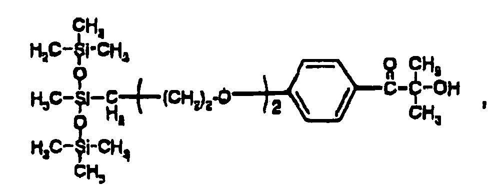 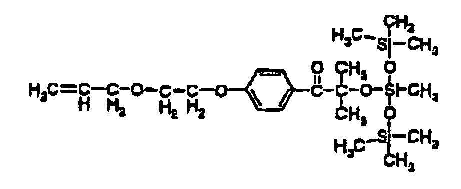 et/ou 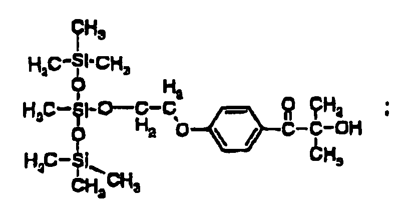 ou mélanges contenant 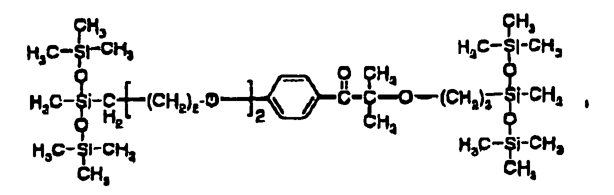 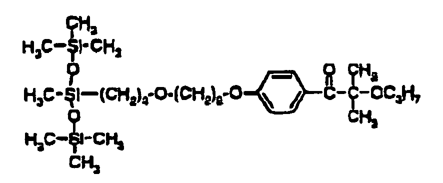 et/ou 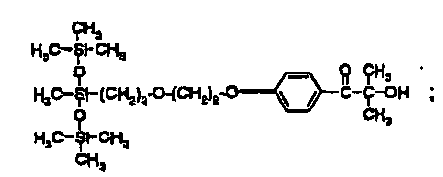 ou mélanges contenant 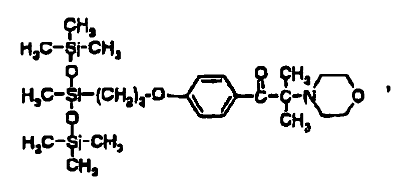 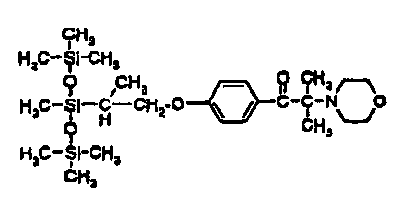 et/ou 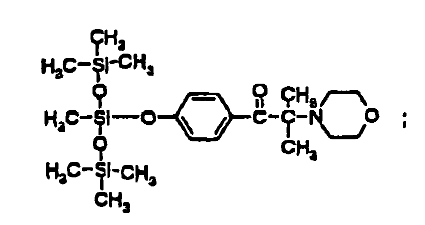 ou mélanges contenant 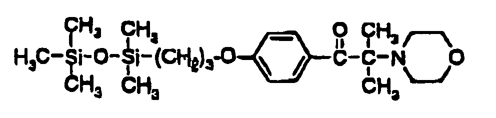 et 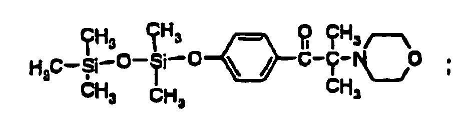 ou mélanges contenant 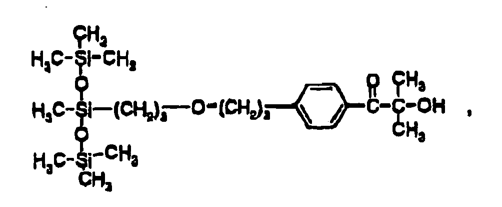 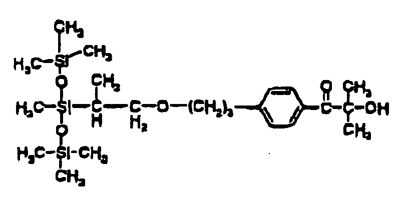 et/ou 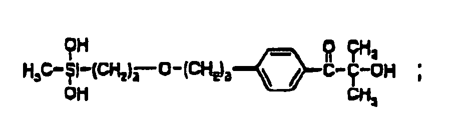 ou mélanges contenant 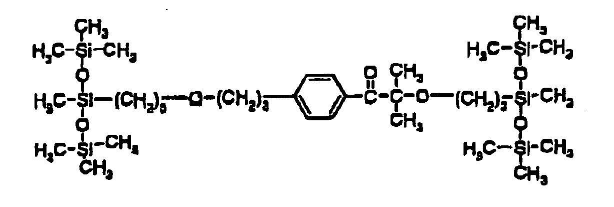 et

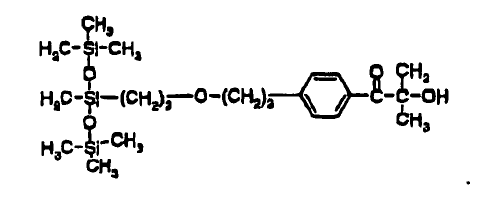

7. Utilisation de composés de formule I en tant que photoamorceurs tensioactifs pour la photopolymérïsation de composés à insaturation éthylénique ou de mélanges contenant de tels composés, dans lequel les composés de formule I sont utilisés à raison de 0,05% à 15% en poids, de préférence de 0,1% à 5% en poids, par rapport au poids du mélange ;
à condition que le mélange ne contienne aucune résine modifiée au siloxane en plus du photoamorceur tensioactif.

8. Composition contenant
(A) au moins un composé à insaturation éthylénique photopolymérisable par voie radicalaire ; et
(B) 0,05% à 15% en poids, de préférence 0,1% à 5% en poids, par rapport au poids de la composition, d'au moins un photoamorceur tensioactif de formule I, à condition que la composition ne contienne aucune résine modifiée au siloxane en plus du photoamorceur.

9. Procédé selon la revendication 1 pour la production de vernis, vernis en poudre, masses composites ou revêtements de câbles à fibres optiques pigmentés et non pigmentés.

10. Substrat revêtu, qui est revêtu, au moins sur une surface, d'une composition selon la revendication 8.
